# EUROPEAN PATENT SPECIFICATION

(11) **EP 3 219 687 B1**
(45) Date of publication and mention of the grant of the patent: **06.09.2023**
(21) Application number: 15859444.0
(22) Date of filing: 10.11.2015
(51) Int. Cl.: C03C 27/12, B32B 25/08, E06B 3/66, B32B 17/10

(54) **LAMINATE AND LAMINATED GLASS**
LAMINAT UND VERBUNDGLAS
STRATIFIÉ ET VERRE FEUILLETÉ

(30) Priority: 10.11.2014 JP 2014228354; 05.12.2014 JP 2014246710
(43) Date of publication of application: 20.09.2017
(73) Proprietor: Kuraray Europe GmbH, 65795 Hattersheim am Main (DE)
(72) Inventor: YUI, Taiga, Kurashiki-shi, Okayama 713-8550 (JP); ISOUE, Koichiro, Kurashiki-shi, Okayama 713-8550 (JP); KOBAYASHI, Takuya, Kurashiki-shi, Okayama 713-8550 (JP); KUSUDOU, Takeshi, Kurashiki-shi, Okayama 713-8550 (JP)
(74) Representative: Müller-Boré & Partner Patentanwälte PartG mbB
(86) International application number: PCT/JP2015/081667
(87) International publication number: WO 2016/076339

(56) References cited:
- WO-A1-2010/038801
- WO-A1-2012/008582
- JP-A- 2005 206 445
- JP-A- 2007 091 491
- JP-A- 2009 256 129
- JP-A- 2010 235 432
- US-A- 4 822 684
- US-A1- 2002 150 744
- US-A1- 2012 202 070

## Description

The present invention relates to a laminate. In more detail, the present invention relates to a laminate having excellent sound insulating properties and bending strength with respect to a laminated glass prepared therefrom and using a polyvinyl acetal film. Also, the present invention relates to a laminate and a laminated glass in which a lowering of sound insulating performance in a high-frequency region to be caused due to a coincidence phenomenon is suppressed and which are excellent in sound insulating properties. Furthermore, the present invention relates to a laminate and a laminated glass in which a time-dependent change of sound insulating performance after preparation of the laminated glass is small and which are excellent in stability of sound insulating performance. In addition to the above, the present invention relates to a laminate and a laminated glass which are excellent in sound insulating properties over a broad temperature range.

Polyvinyl acetals represented by polyvinyl butyral are excellent in adhesion to or compatibility with various organic or inorganic base materials and solubility in organic solvents, and they are widely utilized as various adhesives or binders for ceramic, various inks, paints, and the like as well as safety glass interlayer films.

Among those, films containing a polyvinyl acetal and a plasticizer are widely utilized as an interlayer film for laminated glass because they are excellent in adhesion to a glass and transparency and also in mechanical strength and flexibility (the interlayer film for laminated glass will be hereinafter also referred to simply as "interlayer film").

Now, it is known that though glass plates which are used for a windowpane and the like are excellent in durability and daylighting properties, a damping performance (tan δ against bending vibration) is very small. For this reason, a lowering of sound insulating properties to be caused due to a resonance state occurred by vibration of a glass and incident sonic wave, namely a coincident effect is remarkable.

In the case of constructing a glass in a place for which sound insulation is required, such as a window, etc., there have hitherto been employed a method of making the thickness of glass thick to enhance a sound insulating effect by weight, and a method of using a laminated glass prepared by laminating two or more sheets of glass plate and an interlayer film to enhance a sound insulating effect. In the latter method of using an interlayer film, the sound insulating properties of a windowpane are improved by using the interlayer film having a damping performance, and the interlayer film also has ability of converting vibration energy into heat energy, thereby absorbing the vibration energy.

As for a method of improving sound insulating properties, there is proposed an interlayer film in which a polystyrene elastomer is laminated by a plasticized polyvinyl acetal-based resin (see, for example, Patent Literature 1). However, in the present proposal, the bending strength is not sufficient, so that in order to apply it in a place where an external load influences, such as glass building materials for building and sunroofs or rear glasses for automobile, there was room for more improvements.

In addition, there are proposed an interlayer film for laminated glass and a laminated glass composed of polyvinyl butyral and having certain impact resistance and sound insulating properties (see, for example, Patent Literature 2) . However, in the present proposal, the bending strength is not sufficient, so that in order to apply it in a place where an external load influences, such as glass building materials for building and sunroofs or rear glasses for automobile, there was room for more improvements.

For this reason, as properties of interlayer films for laminated glass, besides the matters that transparency is high and that the glass is not shattered at the time of breakage, there are required excellent sound insulating properties against a sound inside and outside a building, and furthermore, a certain bending strength depending upon a construction place of windowpane.

Now, in the automobile field, for the purpose of reducing the weight of a vehicle to improve fuel efficiency, thinning of glass is being advanced in recent years. However, when the glass is thinned, a coincidence threshold frequency (the coincidence threshold frequency means a lowest frequency in a frequency region where a coincidence effect in which the sound insulating performance falls in a high-frequency region as compared with that expected by the mass law) shifts toward the high-frequency side, so that the sound insulating performance in a high-frequency region is lowered. In the conventional laminated glasses using an interlayer film having sound insulating properties, the above-described phenomenon is liable to take place, so that improvements were required. Under such circumstances, as for interlayer films for laminated glass with improved sound insulating properties in a high-frequency region, there were proposed a method of adjusting a thickness of each layer of a laminate and a hydroxyl group quantity of a polyvinyl acetal resin (see, for example, Patent Literature 3), a method of selecting a polyvinyl acetal resin and a plasticizer in each layer such that a cloud point of a plasticizer solution obtained from a polyvinyl acetal resin and a plasticizer constituting each layer of a laminate is a prescribed relation (see, for example, Patent Literature 4), a method of crosslinking a sound insulating layer (see, for example, Patent Literature 5), a method of using a plasticizer such that a difference in an SP value from a polyvinyl acetal resin is a prescribed value or more (see, for example, Patent Literature 6), and the like. However, in any of the methods, an improvement of the sound insulating properties in a high-frequency region was not sufficient.

Meanwhile, in preparing a laminated glass, a heat treatment using an autoclave or the like is conducted. However, when a general multi-layered interlayer film is heated, an interlayer migration of plasticizer occurs, so that distribution of the plasticizer changes. After preparation of the laminated glass, the distribution of the plasticizer turns to the original state with a lapse of time at ordinary temperature; however, till then, in view of the fact that the plasticizer migrates into other layer, physical properties, such as sound insulating properties, etc., become instable. For that reason, in the case of preparing a laminated glass using the conventional multi-layered interlayer film, it was needed to hold the prepared laminated glass for a certain period of time until the sound insulating performance is stabilized. This holding time is problematic from the viewpoint of productivity, and an improvement was required in laminated glasses having a sound insulating function.

On the other hand, in recent years, in the automobile field or construction field, for the purpose of reducing the weight, thinning of a laminated glass has been required. However, in contemplating to make the laminated glass thin, there was encountered such a problem that the sound insulating properties of the laminate glass are lowered. For that reason, there was required a laminated glass capable of realizing the sound insulating properties at a high level even by conducting thinning.

In addition, even in interlayer films for laminated glass having high sound insulating properties at ordinary temperature, there was involved such a problem that the sound insulating properties are largely lowered in the summer season or winter season. For that reason, a laminated glass capable of revealing the sound insulating properties at a high level over a broad temperature range was required.

Besides, there are proposed those in which a sound insulating layer is constituted of three layers of PVB film (see, for example, Patent Literature 3, etc.) and the like. However, in all of them, the sound insulating properties could not be revealed at a high level over a broad temperature range.

### CITATION LIST

### PATENT LITERATURE

Patent Literature 1: JP 2007-91491A
Patent Literature 2: WO 2005/018969A
Patent Literature 3: JP 2013-107821A
Patent Literature 4: JP 2013-032260A
Patent Literature 5: JP 2012-214305A
Patent Literature 6: WO 2012/043817A
Patent Literature 7: EP 2 330 090 A1 describes an interlayer for laminated glass and laminated glass.
Patent Literature 8: JP 2009-256129A describes a method for producing laminated glass and laminated glass.
Patent Literature 9: US 2012/202070A1 describes a polyvinyl acetal composition, laminate and use thereof.

The present invention solves the above-described problems. That is, a first object of the present invention is to provide a laminate with excellent sound insulating properties and a laminated glass using the same.

The present invention solves the above-described problems. That is, a second object of the present invention is to provide a laminate with excellent sound insulating properties and bending strength and a laminated glass using the same.

In addition, a third object of the present invention is to provide a laminate and a laminated glass in which a lowering of sound insulating performance in a high-frequency region to be caused due to a coincidence phenomenon is suppressed and which are excellent in sound insulating properties.

Furthermore, a fourth object of the present invention is to provide a laminate and a laminated glass in which a time-dependent change of sound insulating performance after preparation of the laminated glass is small and which are excellent in stability of sound insulating performance.

In addition to the above, a fifth object of the present invention is to provide a laminate and a laminated glass which are excellent in sound insulating properties over a broad temperature range.

The present invention is concerned with the subject matter as defined in the claims.

Furthermore, in the present invention, the laminate is preferably a laminate in which a shear storage modulus at a temperature of 25°C as measured by conducting a complex shear viscosity test under a condition at a frequency of 1 Hz in accordance with JIS K 7244-10 is 1.30 MPa or more.

Furthermore, in the present invention, the laminate is preferably a laminate in which a shear storage modulus of the layer A at a temperature of 25°C as measured by conducting a complex shear viscosity test at a frequency of 1 Hz in accordance with JIS K 7244-10 is 0.6 to 3.0 MPa.

Furthermore, in the present invention, the laminate is preferably a laminate in which a shear storage modulus of the laminate at a temperature of 50°C as measured by conducting a complex shear viscosity test under a condition at a frequency of 1 Hz in accordance with JIS K 7244-10 is 1.3 MPa or more.

Furthermore, in the present invention, the laminate is preferably a laminate in which when a laminated glass prepared by using the laminate as an interlayer film for glass is subjected to a damping test by a central exciting method, a maximum loss factor at a frequency of 2,000 Hz and at a temperature of 0 to 50°C is 0.2 or more.

Furthermore, in the present invention, the laminate is preferably a laminate in which when a laminated glass obtained by interposing the laminate between two sheets of glass having a width of 50 mm, a length of 300 mm, and a thickness of 3 mm is subjected to a damping test by a central exciting method to measure a loss factor in a tertiary mode, a width of the temperature range where the loss factor is 0.2 or more is 15°C or more.

Furthermore, in the present invention, the laminate is preferably a laminate in which in interposing the laminate between two sheets of float glass having a length of 300 mm, a width of 25 mm, and a thickness of 1.9 mm, a loss factor at a quaternary resonance frequency as measured at 20°C by a central exciting method is 0.2 or more, and a bending rigidity at the quaternary resonance frequency in accordance with ISO 16940 (2008) is 150 N·m or more.

Furthermore, in the present invention, the laminate is preferably a laminate in which with respect to a laminated glass prepared by interposing the laminate between glasses having a thickness 2 mm and holding for contact bonding under conditions at a temperature of 140°C and at a pressure of 1 MPa for 60 minutes, a loss factor α at 20°C and at 2,000 Hz as measured by a damping test by a central exciting method is 0.2 or more; and with respect to the laminated glass after holding at 18°C for one month, a ratio β/α of a loss factor β at 20°C and at 2,000 Hz as measured by a damping test by a central exciting method to the loss factor α is 0.70 or more.

Furthermore, in the present invention, the laminate is preferably a laminate in which the ratio β/α is 0.80 or more.

Furthermore, in the present invention, the laminate is preferably a laminate in which the ratio β/α is 1.20 or less.

Furthermore, in the present invention, the laminate is preferably a laminate in which with respect to a laminated glass containing the laminate after holding the laminated glass at 18°C for one hour, a loss factor β at 20°C and at 2,000 Hz as measured by a damping test by a central exciting method is 0.2 or more; and with respect to a laminated glass after heating the laminated glass having been held at 18°C for one month at 100°C for 24 hours, a ratio γ/β of a loss factor γ at 20°C and at 2,000 Hz as measured by a damping test by a central exciting method to the loss factor β is 0.80 or more and 1.30 or less.

Furthermore, in the present invention, the laminate is preferably a laminate in which the ratio γ/β is 1.20 or less.

Furthermore, in the present invention, the laminate is preferably a laminate in which the ratio γ/β is 0.87 or more and 1.20 or less.

Furthermore, in the present invention, the laminate is preferably a laminate in which a content of a plasticizer in the layer or layers B is 25 parts by mass or less based on 100 parts by mass of the thermoplastic resin.

Furthermore, in the present invention, the laminate is preferably a laminate in which a content of a plasticizer in the layer or layers B is less than 20 parts by mass based on 100 parts by mass of the thermoplastic resin.

Furthermore, in the present invention, the laminate is preferably a laminate in which a content of a plasticizer in the layer or layers B containing a polyvinyl acetal resin is 25 parts by mass or less based on 100 parts by mass of the polyvinyl acetal resin.

Furthermore, in the present invention, the laminate is preferably a laminate in which the plasticizer is an ester-based plasticizer or an ether-based plasticizer each having a melting point of 30°C or lower and a hydroxyl value of 15 to 450 mgKOH/g or less.

Furthermore, in the present invention, the laminate is preferably a laminate in which the plasticizer is an ester-based plasticizer or an ether-based plasticizer each being amorphous and having a hydroxyl value of 15 to 450 mgKOH/g or less.

Furthermore, in the present invention, the laminate is preferably a laminate in which a viscosity average polymerization degree of the polyvinyl acetal resin is 100 to 5,000.

Furthermore, in the present invention, the laminate is preferably a laminate in which a viscosity average polymerization degree of polyvinyl alcohol used for synthesis of the polyvinyl acetal resin is 300 to 1,000.

Furthermore, in the present invention, the laminate is preferably a laminate in which a content of a vinyl alcohol unit of the polyvinyl acetal resin is 5 to 35 mol%.

Furthermore, in the present invention, the laminate is preferably a laminate in which the polyvinyl acetal resin is polyvinyl butyral.

Furthermore, in the present invention, the laminate is preferably a laminate in which a content of the hard segment in the block copolymer is 5 to 40% by mass relative to the total amount of the block copolymer.

Furthermore, in the present invention, the laminate is preferably a laminate in which the block copolymer is a block copolymer having an aromatic vinyl polymer block and an aliphatic unsaturated hydrocarbon polymer block, or a hydrogenated product of the polymer.

Furthermore, in the present invention, the laminate is preferably a laminate in which a content of an aromatic vinyl monomer unit in the block copolymer is 5 to 40% by mass relative to the whole of the monomer units in the block copolymer.

Furthermore, in the present invention, the laminate is preferably a laminate having the layer A in which a height of the peak at which a tan δ is maximum is 0.5 or more.

Furthermore, in the present invention, the laminate is preferably a laminate in which a ratio of a sum total of the thickness of the layers A to a sum total of the thickness of the layers B ((sum total of the thickness of the layers A) / (sum total of the thickness of the layers B)) is in the range of from 1/30 to 1/1.

Furthermore, in the present invention, the laminate is preferably a laminate in which when preparing a laminated glass, a transmittance at a wavelength of 1,500 nm is 50% or less.

Furthermore, in the present invention, the laminate is preferably a laminate in which one or more heat insulating fine particles selected from the group consisting of tin-doped indium oxide, antimony-doped tin oxide, zinc antimonate, lanthanum hexaboride, a metal element composite tungsten oxide, a phthalocyanine compound, and a naphthalocyanine compound are included as a heat insulating material.

Furthermore, in the present invention, the laminate is preferably a laminate in which in a three-point bending test of a laminated glass obtained by interposing the laminate between two sheets of float glass of 26 mm in length × 76 mm in width × 2.8 mm in thickness, a breaking strength (temperature: 20°C, inter-fulcrum distance: 55 mm, test speed: 0.25 mm/min) is 0.5 kN or more.

By using the laminate according to the present invention, as a first effect, a laminated glass with excellent sound insulating characteristics and bending strength can be prepared. According to this, it becomes possible to apply the laminated glass in a place where an external load influences, and sound insulating properties are required, such as glass building materials for building and sunroofs or rear glasses for automobile. Meanwhile, in view of the fact that the laminated glass is excellent in bending strength, it also becomes possible to make a glass to be used for the laminated glass thin, and weight reduction of the laminated glass can be realized without impairing the strength of the laminated glass.

In addition, according to the present invention, as a second effect, it is possible to prepare a laminate and a laminated glass in which a lowering of sound insulating performance in a high-frequency region to be caused due to a coincidence phenomenon is suppressed and which are excellent in sound insulating properties.

Furthermore, according to the present invention, as a third effect, it is possible to provide a laminate and a laminated glass in which a time-dependent change of sound insulating performance after preparation of the laminated glass is small and which are excellent in stability of sound insulating performance.

In addition to the above, according to the present invention, as a fourth effect, it is possible to provide a laminate and a laminated glass which are excellent in sound insulating properties over a broad temperature range.

### BRIEF DESCRIPTION OF DRAWINGS

FIG. 1 is an example of a cross-sectional view of a constitution of a laminate.
FIG. 2 is an example of measurement results of shear storage modulus and tan δ of a laminate.

Embodiments of the present invention are hereunder described, but it should not be construed that the present invention is limited to the present embodiments.

The laminate of the present invention is a laminate comprising the layer A laminated between the at least two layers B.

### [Layer A]

A response of stress when distortion of a sinusoidal waveform is applied to a viscoelastic body is defined as a complex modulus. At this time, a phase shift is generated between the sinusoidal wave of distortion to be applied and the sinusoidal wave of stress obtained as the response, and this phase difference is expressed in terms of δ. In addition, the complex modulus is expressed in terms of an equality using a complex number, and a real part of the complex modulus is called a storage modulus, whereas an imaginary part thereof is called a loss modulus. In particular, in the case of measuring dynamic viscoelastic characteristics of a viscoelastic body in a shear mode, they are called a complex shear modulus, a shear storage modulus, and a shear loss modulus, respectively. A value obtained by dividing the loss modulus by the storage modulus is called a loss tangent and expressed in terms of tan δ. The value of tan δ is a loss factor, and it is meant that the higher the loss factor at a certain temperature, the higher the sound insulating properties at that temperature.

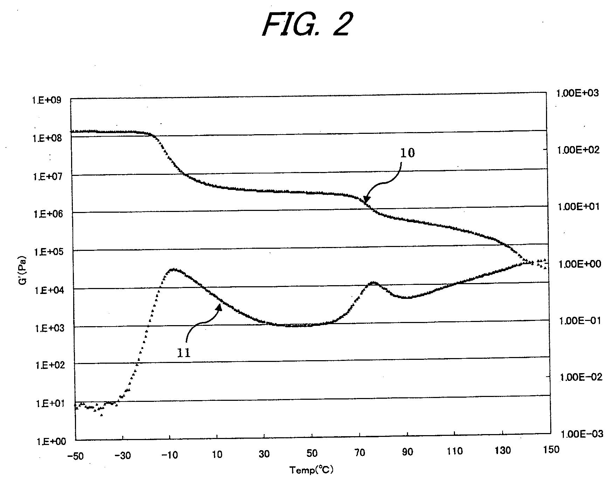

When the value of tan δ in a construct composed of two kinds of viscoelastic bodies is plotted at every measuring temperature, in general, a bimodal curve is revealed as shown in FIG. 2. A peak (maximum point) on the low-temperature side is a peak derived from a relatively soft viscoelastic body, and a peak (maximum point) on the high-temperature side is a peak derived from a relatively hard viscoelastic body. In the present embodiment, the peak on the low-temperature side is a peak derived from the layer A (in the case where plural peaks are present, the instant peak means a highest peak), and the peak on the high-temperature side is a peak derived from the layer B.

The layer A which is used for the laminate of the present invention includes a composition containing a specified resin. By constituting the layer A by the composition containing a specified resin, the sound insulating properties of the resulting laminate can be improved.

### (Peak temperature of tan δ)

The resin to be contained in the layer A which is used in the present invention has a peak at which a tan δ as measured by conducting a complex shear viscosity test under a condition at a frequency of 1 Hz in accordance with JIS K 7244-10 is maximum at -40°C or higher, more preferably at -30°C or higher, and still more preferably at -20°C or higher. In addition, the resin to be contained in the layer A has a peak at which the tan δ is maximum at 30°C or lower, more preferably at 10°C or lower, and still more preferably at 0°C or lower. When the peak at which the tan δ of the resin to be contained in the layer A is maximum is present at 30°C or lower, excellent sound insulating properties are exhibited in a temperature region where the layer A is used as a laminated glass. When the peak at which the tan δ of the resin to be contained in the layer A is maximum is present at -40°C or higher, the shear storage modulus of the layer A is a suitable value, and the sound insulating properties in a high-frequency region are excellent.

Specifically, the tan δ of the resin to be contained in the layer A is measured by the method described in the Examples as described later. As a method of adjusting the peak at which the tan δ of the resin to be contained in the layer A is maximum to -40 to 30°C, there are, for example, exemplified a method of using a thermoplastic elastomer having a content of a hard segment (for example, an aromatic vinyl polymer block) of 5% by mass or more and 40% by mass or less relative to the total amount of a block copolymer (for example, a block copolymer having an aromatic vinyl polymer block and an aliphatic unsaturated hydrocarbon polymer block) ; a method of controling a structure of a soft segment, for example, allowing a content ratio of a branched monomer in a conjugated diene block, a ratio of a 1,4-bond, a 1,2-bond, and a 3,4-bond, or a hydrogenation ratio to fall within an appropriate range; and the like.

With respect to the content ratio of the branched monomer, for example, in the case of a copolymer of butadiene and isoprene, a content ratio of an isoprene unit in the copolymer is preferably 20% by mass or more, and more preferably 50% by mass or more. With respect to the ratio of the 1,4-bond, the 1,2-bond, and the 3,4-bond, a ratio of a sum total of the 1,2-bond and the 3,4-bond is preferably 20 mol% or more, more preferably 30 mol% or more, and still more preferably 40 mol% or more, and especially preferably 50 mol% or more relative to a sum total of the 1,4-bond, the 1,2-bond, and the 3,4-bond. The hydrogenation ratio is preferably 60 mol% or more, more preferably 65 mol% or more, still more preferably 70 mol% or more, and especially preferably 75 mol% or more.

The layer A which is used in the present invention may be composed of only a specified resin or may be one including the resin and other component. The layer A has a peak at which a tan δ as measured by conducting a complex shear viscosity test under a condition at a frequency of 1 Hz in accordance with JIS K 7244-10 is maximum preferably at -40°C or higher, more preferably at -30°C or higher, and still more preferably at -20°C or higher. In addition, the layer A has a peak at which the tan δ is maximum at 30°C or lower, more preferably at 10°C or lower, and still more preferably at 0°C or lower. When the peak at which the tan δ of the layer A is maximum is present at 30°C or lower, excellent sound insulating properties are liable to be exhibited in a temperature region where the layer A is used as a laminated glass. When the peak at which the tan δ of the layer A is maximum is present at -40°C or higher, the shear storage modulus of the layer A is a suitable value, and when formed as a laminated glass, the resulting laminated glass tends to become excellent in sound insulating properties in a high-frequency region.

Specifically, the tan δ of the layer A is measured by the method described in the Examples as described later. As a method of adjusting the peak at which the tan δ of the layer A is maximum to -40 to 30°C, there are, for example, exemplified a method of using, as the resin to be contained in the layer A, a resin having a peak at which a tan δ as measured by conducting a complex shear viscosity test under a condition at a frequency of 1 Hz in accordance with JIS K 7244-10 is maximum at -40 to 30°C; and the like.

As described later, the laminate of the present invention contains a thermoplastic elastomer in the layer A. Then, it is preferred that the layer A containing a thermoplastic elastomer contains two or more thermoplastic elastomers having a different peak temperature of tan δ (a temperature of the peak at which the tan δ is maximum) from each other. The sound insulating properties become high in the vicinity of a specified temperature related to the peak temperature of tan δ, and hence, in view of the fact that the layer A containing a thermoplastic elastomer contains two or more thermoplastic elastomers having a different peak temperature of tan δ from each other, the sound insulating properties can be enhanced over a broader temperature range.

In addition, in order to reveal suitable sound insulating characteristics in the vicinity of room temperature, it is preferred to regulate the peak temperature of tan δ in the complex shear viscoelasticity test under a condition at a frequency of 1 Hz to 0°C or lower, more preferably -5°C or lower, and especially preferably -10°C or lower. In that case, by using an elastomer having a physical or chemical crosslinking site, a slippage of glasses at a high temperature at which the laminated glass is exposed can be suppressed. In addition, by using a thermoplastic elastomer as the elastomer, it is possible to conduct the film formation by a coextrusion method, and hence, such is especially preferred.

In addition, the at least two thermoplastic elastomers having a different peak temperature of tan δ from each other are preferably a thermoplastic elastomer including a copolymer of an aromatic vinyl monomer and a vinyl monomer or a conjugated diene monomer, or a hydrogenated product of the copolymer. The copolymer of an aromatic vinyl monomer and a vinyl monomer or a conjugated diene monomer, or the hydrogenated product of the copolymer has suitable viscoelasticity. For that reason, in view of the fact that such a thermoplastic elastomer is included in the laminate, suitable sound insulating properties are revealed.

Furthermore, by forming a laminate having the layer A containing a thermoplastic elastomer as an internal layer and a layer B serving as an adhesive layer as each of outermost layers, an interlayer film for laminated glass having improved sound insulating properties while improving adhesion to a glass can be provided.

In addition to the above, in the two or more thermoplastic elastomers having a different peak temperature of tan δ from each other, which are included in the layer A containing a thermoplastic elastomer, a difference in the peak temperature of tan δ is preferably 5°C or more, more preferably 10°C or more, and still more preferably 15°C or more. When the difference in the peak temperature of tan δ is less than 5°C, a width of the temperature range where the loss factor is 0.2 or more is narrow, so that the sound insulating properties over a broad temperature range tend to be hardly revealed.

Furthermore, in the laminate of the present invention, when the layer A containing a thermoplastic elastomer is composed of two or more layers, a difference between the peak temperature of tan δ of the thermoplastic elastomer to be contained in at least one layer A and the peak temperature of tan δ of the thermoplastic elastomer to be contained in the other layer A is preferably 5°C or more, more preferably 10°C or more, and still more preferably 15°C or more. When the difference in the peak temperature of tan δ between the thermoplastic elastomers to be contained in the at least two layers A is less than 5°C, a width of the temperature range where the loss factor is 0.2 or more is narrow, so that the sound insulating properties over a broad temperature range tend to be hardly revealed.

### (Peak height of tan δ)

In the layer A which is used in the present invention, a height of at least one peak of tan δ as measured by conducting a complex shear viscosity test under a condition at a frequency of 1 Hz in accordance with JIS K 7244-10 is preferably 0.5 or more, more preferably 0.75 or more, and still more preferably 0.8 or more. In addition, from the viewpoint of further improving the sound insulating properties, in the layer A, the height of the peak at which the tan δ is maximum is preferably 1.0 or more, more preferably 1.3 or more, and still more preferably 1.5 or more. In the layer A, when the height of the peak of tan δ is less than 0.5, the sound insulating properties of the resulting interlayer film for laminated glass tend to become low.

As a method of obtaining the layer A satisfying the above-described conditions, there is exemplified a method of using, for the layer A, a resin in which a height of at least one peak of tan δ as measured by conducting a complex shear viscosity test under a condition at a frequency of 1 Hz in accordance with JIS K 7244-10 is 0.5 or more.

In the resin to be contained in the layer A which is used in the present invention, the height of at least one peak of tan δ as measured by conducting a complex shear viscosity test under a condition at a frequency of 1 Hz in accordance with JIS K 7244-10 is preferably 0.5 or more, more preferably 0.75 or more, and still more preferably 0.8 or more. In addition, from the viewpoint of further improving the sound insulating properties, in the resin to be contained in the layer A, the height of the peak at which the tan δ is maximum is preferably 1.0 or more, more preferably 1.3 or more, and still more preferably 1.5 or more. In the resin to be contained in the layer A, when the height of the peak of tan δ is less than 0.5, the sound insulating properties of the resulting interlayer film for laminated glass tend to become low.

As a method of regulating the height of the peak of tan δ in the resin to be contained in the layer A to 0.5 or more, there are, for example, exemplified a method of using a thermoplastic elastomer having a content of a hard segment (for example, an aromatic vinyl polymer block) of 40% by mass or less, and more preferably 30% by mass or less relative to the total amount of block copolymers (for example, a block copolymer having an aromatic vinyl polymer block and an aliphatic unsaturated hydrocarbon polymer block) ; a method of using a thermoplastic elastomer having a soft segment in which a ratio of a branched diene (for example, isoprene) component in copolymerization of a linear diene (for example, butadiene) and a branched diene (isoprene) is 10% by mass or more, and more preferably 30% by mass or more; a method of using a thermoplastic elastomer having a soft segment in which a ratio of a content of a 1, 2-bond relative to a sum total of a content of a 1,4-bond and a content of a 1,2-bond in a diene monomer is 20 mol% or more, and more preferably 40 mol% or more; and besides, a method of adjusting the kinds of monomers constituting a hard segment or a soft segment, binding forms, glass transition temperatures of the respective segments per se, and the like; and the like.

From the viewpoint of further improving the sound insulating properties, the glass transition temperature of the resin to be contained in the layer A is preferably 10°C or lower, and more preferably -5°C or lower. A lower limit of the glass transition temperature of the resin to be contained in the layer A is not particularly limited, and the glass transition temperature of the resin to be contained in the layer A is preferably -50°C or higher, and more preferably -40°C or higher. Differential scanning calorimetry (DSC) may be adopted for the measurement method of glass transition temperature.

### (Shear storage modulus)

From the viewpoint of preparing a laminated glass in which a time-dependent change of sound insulating properties is small or preparing a laminate with excellent sound insulating properties over a broad temperature range, a shear storage modulus of the layer A which is used in the present invention (or the resin to be contained in the layer A) at a temperature of 25°C as measured by conducting a complex shear viscosity test at a frequency of 1 Hz in accordance with JIS K 7244-10 is preferably 0.1 MPa or more, more preferably 0.2 MPa or more, and still more preferably 0.3 MPa or more. In addition, from the above-described viewpoint, the shear storage modulus of the layer A is preferably 5.0 MPa or less, more preferably 4.0 MPa or less, still more preferably 3.0 MPa or less, yet still more preferably 1.0 MPa or less, especially preferably 0.8 MPa or less, and particularly preferably 0.6 MPa or less. When the shear storage modulus of the layer A is less than 0.1 MPa, there is a concern that handling properties in producing the laminate are deteriorated, or unevenness of film thickness is caused. In addition, when the shear storage modulus of the layer A is more than 5.0 MPa, a damping performance as the interlayer film for laminated glass becomes low, so that the function as a sound insulating film tends to be lowered.

The layer A in which the shear storage modulus is 0.1 MPa or more and 5.0 MPa or less can be, for example, obtained by a method of adjusting the content of the hard segment (for example, an aromatic vinyl polymer block) by selecting, as the resin to be contained in the layer A, a thermoplastic elastomer that is a resin constituted of a hard segment and a soft segment, as a block copolymer, with a content of the hard segment being 5% by mass or more and 30% by mass or less; or a method of adjusting the kinds of monomers constituting a hard segment or a soft segment, binding forms, glass transition temperatures of the respective segments per se, and the like.

Furthermore, from the viewpoint of preparing a laminated glass in which a lowering of sound insulating performance in a high-frequency region to be caused due to a coincidence phenomenon is suppressed and which is excellent in sound insulating properties, a shear storage modulus of the layer A which is used in the present invention (or the resin to be contained in the layer A) at a temperature of 25°C as measured by conducting a complex shear viscosity test at a frequency of 1 Hz in accordance with JIS K 7244-10 is preferably 0.6 MPa or more, more preferably 0.8 MPa or more, and still more preferably 1.0 MPa or more. In addition, from the above-described viewpoint, the shear storage modulus of the layer A is preferably 3.0 MPa or less, more preferably 2.0 MPa or less, and still more preferably 1.5 MPa or less. When the shear storage modulus of the layer A is less than 0.6 MPa, the rigidity of the laminate tends to be lowered. In addition, when the shear storage modulus of the layer A is more than 3.0 MPa, the moldability or handling properties tend to be lowered.

The layer A in which the shear storage modulus is 0.6 MPa or more and 3.0 MPa or less can be, for example, obtained by a method of adjusting the content of the hard segment by using a block copolymer (for example, a block copolymer having an aromatic vinyl polymer block and an aliphatic unsaturated hydrocarbon polymer block) as the resin to be contained in the resin composition constituting the layer A and using a thermoplastic elastomer having a content of the hard segment (for example, an aromatic vinyl polymer block) of 14% by mass or more and 40% by mass or less relative to the total amount; or a method of adjusting the kinds of monomers constituting a hard segment or a soft segment, binding forms, glass transition temperatures of the respective segments per se, and the like.

Among energies generated by an external force and a strain against a body, the shear storage modulus is an index of a component stored inside the body and can be determined from a relation between dynamic modulus and temperature under a constant heating rate in measurement temperature in a strain control type dynamic viscoelasticity instrument.

Though the measurement condition of the shear storage modulus can be properly set, for example, the measurement can be conducted by setting at a frequency of 1 Hz and at a temperature of -40 to 100°C. A test system in JIS K 7244-10 includes a stress control system and a strain control system.

A parallel-plate oscillatory rheometer can be used for a testing instrument in JIS K 7244-10. The parallel-plate oscillatory rheometer is constituted of two coaxial rigid parallel disks. The dynamic viscoelastic characteristics, such as a shear loss modulus, a shear storage modulus, etc., can be measured by placing a test sheet between the disks and fixing one of the disks and vibrating the other disk at a fixed frequency.

A diameter of the disk is generally 20 mm or more and 50 mm or less, and a thickness of the test sheet is defined as a distance between the disks. In order to minimize a measurement error, it is desired to use a test sheet of about 3 g or more and 5 g or less and allow the thickness of the test sheet to fall within the range of 0.5 mm or more and 3 mm or less. In addition, a ratio of the diameter of the disk to the thickness of the test sheet is desirably in the range of 10 or more and 50 or less. The test sheet is formed in a disk shape by means of injection molding, compression molding, or cutting-out from the sheet. Besides, a pellet, a liquid, or a molten polymer may be filled between the disks. In addition, a gap between the two flat plates is completely filled by the test sheet.

In the strain control system, distortion of a sinusoidal waveform at a fixed angular frequency is applied, and a sinusoidal torque and a phase difference between torque and angular displacement generated as a result are measured. A torque measurement instrument is connected to the flat plate of one side, and a torque necessary for deforming the test sheet is measured. An angular displacement measurement instrument is connected to the flat plate on the movable side, and an angular displacement and a frequency are measured. Either a torque of sinusoidal waveform or an angular displacement is given to the test sheet at a fixed frequency, and the shear loss modulus and the shear storage modulus are determined from the measured torque and displacement and the test sheet dimension.

In addition, it is necessary to heat a testing instrument to the testing temperature, thereby rendering the testing instrument in a thermal equilibrium state. It is desired that the testing temperature is measured by bringing a thermometer into contact with the disk on the immobile side or burying the thermometer in the disk on the immobile side. Heating is conducted by means of forced convection, high-frequency heating, or an appropriate method. The test sheet and the disk are thoroughly held until the testing instrument reaches the thermal equilibrium state at the testing temperature such that measured values of the shear loss modulus and the shear storage modulus do not change. An equilibrium time is desirably 15 minutes or more and 30 minutes or less.

### (Thermoplastic elastomer)

From the viewpoint of making both the moldability and the sound insulating properties compatible with each other, a thermoplastic elastomer (sometimes referred to simply as "elastomer") is used. Examples of the thermoplastic elastomer include thermoplastic elastomers, such as a polystyrene-based elastomer (soft segment: polybutadiene, polyisoprene, etc. /hard segment: polystyrene), a polyolefin-based elastomer (soft segment: ethylene propylene rubber/hard segment: polypropylene), a polyvinyl chloride-based elastomer (soft segment: polyvinyl chloride/hard segment: polyvinyl chloride), a polyurethane-based elastomer (soft segment: polyether, polyester, or polycarbonate/hard segment: polyurethane), a polyester-based elastomer (soft segment: aliphatic polyester/hard segment: aromatic polyester), a polyether ester-based elastomer (soft segment: polyether/hard segment: polyester), a polyamide-based elastomer (soft segment: polypropylene glycol, polytetramethylene ether glycol, polyester, or polyether/hard segment: polyamide <nylon resin>), a polybutadiene-based elastomer (soft segment: amorphous butyl rubber/hard segment: syndiotactic 1,2-polybutadiene resin), an acrylic elastomer (soft segment: polyacrylate ester/hard segment: polymethyl methacrylate), etc. It is to be noted that the above-described thermoplastic elastomers may be used solely or may be used in combination of two or more thereof.

A content of the hard segment in the thermoplastic elastomer is preferably 5% by mass or more, more preferably 7% by mass or more, still more preferably 8% by mass or more, yet still more preferably 10% by mass or more, even yet still more preferably 14% by mass or more, especially preferably 16% by mass or more, and most preferably 18% by mass or more relative to the total amount of the thermoplastic elastomer. A content of the hard segment is preferably 40% by mass or less, more preferably 30% by mass or less, still more preferably 20% by mass or less, and especially preferably 15% by mass or less relative to the total amount of the thermoplastic elastomer. When the content of the hard segment is less than 5% by mass, there is a tendency that the molding of the layer A is difficult, the height of the peak of tan δ is small, the bending rigidity of the laminate is small, or the sound insulating properties in a high-frequency region is lowered. When the content of the hard segment is more than 40% by mass, there is a tendency that the characteristics as the thermoplastic elastomer are hardly exhibited, the stability of sound insulating performance is lowered, or the sound insulating characteristics in the vicinity of room temperature are lowered.

A content of the soft segment in the thermoplastic elastomer is preferably 60% by mass or more, more preferably 70% by mass or more, still more preferably 80% by mass or more, and especially preferably 85% by mass or more relative to the total amount of the thermoplastic elastomer. The content of the soft segment is preferably 95% by mass or less, more preferably 92% by mass or less, still more preferably 90% by mass or less, yet still more preferably 88% by mass or less, even yet still more preferably 86% by mass or less, especially preferably 84% by mass or less, and most preferably 82% by mass or less relative to the total amount of the thermoplastic elastomer. When the content of the soft segment is less than 60% by mass, the characteristics as the thermoplastic elastomer tend to be hardly exhibited. When the content of the soft segment is more than 95% by mass, there is a tendency that the molding of the layer A is difficult, the height of the peak of tan δ is small, the bending rigidity of the laminate is small, or the sound insulating properties in a high-frequency region are lowered. Here, in the case where a plurality of the thermoplastic elastomers is mixed, the contents of the hard segment and the soft segment in the thermoplastic elastomer are each considered as an average value of the mixture.

From the viewpoint of making both the moldability and the sound insulating properties compatible with each other, it is more preferred to use a block copolymer having a hard segment and a soft segment as the thermoplastic elastomer. Furthermore, from the viewpoint of further improving the sound insulating properties, it is preferred to use a polystyrene-based elastomer.

In addition, crosslinked rubbers of natural rubber, isoprene rubber, butadiene rubber, chloroprene rubber, nitrile rubber, butyl rubber, ethylene propylene rubber, urethane rubber, silicone rubber, chlorosulfonated polyethylene rubber, acrylic rubber, fluorine rubber, and the like may be used as the thermoplastic elastomer.

The thermoplastic elastomer is preferably a copolymer of an aromatic vinyl monomer and a vinyl monomer or a conjugated diene monomer, or a hydrogenated product of the copolymer. From the viewpoint of making both the function as a rubber exhibiting sound insulating properties and the function as a plastic compatible with each other, the copolymer is preferably a block copolymer having an aromatic vinyl polymer block and an aliphatic unsaturated hydrocarbon polymer block, for example, a polystyrene-based elastomer.

In the case where a copolymer having an aromatic vinyl polymer block and a vinyl polymer block or a conjugated diene polymer block, for example, a block copolymer having an aromatic vinyl polymer block and an aliphatic unsaturated hydrocarbon polymer block is used as the thermoplastic elastomer, the binding form of these polymer blocks is not particularly limited, and it may be any of a linear binding form, a branched binding form, a radial binding form, and a combined binding form of two or more thereof. Of those, a linear binding form is preferred.

When the aromatic vinyl polymer block is expressed as "a", and the aliphatic unsaturated hydrocarbon polymer block is expressed as "b", examples of the linear binding form include a diblock copolymer expressed by a-b, a triblock copolymer expressed by a-b-a or b-a-b, a tetrablock copolymer expressed by a-b-a-b, a pentablock copolymer expressed by a-b-a-b-a or b-a-b-a-b, an (a-b)ₙX type copolymer (X represents a coupling residual group, and n represents an integer of 2 or more), and a mixture thereof . Of those, a diblock copolymer or a triblock copolymer is preferred, and the triblock copolymer is more preferably a triblock copolymer expressed by a-b-a.

A sum total of an aromatic vinyl monomer unit and an aliphatic unsaturated hydrocarbon monomer unit in the block copolymer is preferably 80% by mass or more, more preferably 95% by mass or more, and still more preferably 98% by mass or more relative to the whole of the monomer units. It is to be noted that a part or the whole of the aliphatic unsaturated hydrocarbon polymer blocks in the block copolymer may be hydrogenated.

A content of the aromatic vinyl monomer unit in the block copolymer is preferably 5% by mass or more, more preferably 7% by mass or more, still more preferably 8% by mass or more, yet still more preferably 14% by mass or more, especially preferably 16% by mass or more, and most preferably 18% by mass or more relative to the whole of the monomer units of the block copolymer. A content of the aromatic vinyl monomer unit is preferably 40% by mass or less, more preferably 30% by mass or less, still more preferably 25% by mass or less, especially preferably 20% by mass or less, and most preferably 15% by mass or less relative to the whole of the monomer units of the block copolymer.

When the content of the aromatic vinyl monomer unit in the block copolymer is less than 5% by mass, there is a tendency that the molding of the layer A is difficult, a slippage of glasses is caused due to heat, the height of the peak of tan δ is small, the bending rigidity of the laminate is small, or the sound insulating properties in a high-frequency region are lowered. When the content of the aromatic vinyl monomer unit in the block copolymer is more than 40% by mass, there is a tendency that the characteristics as the thermoplastic elastomer are hardly exhibited, or the stability of sound insulating performance is lowered.

The content of the aromatic vinyl monomer unit in the block copolymer can be determined from a charge ratio of the respective monomers in synthesizing the block copolymer, or the measurement results of ¹H-NMR or the like of the block copolymer. In the Examples of the present specification, a proportion of the monomer species was determined from the measurement results of ¹H-NMR, and the proportion of each monomer was described in terms of % by mass. Here, in the case where a plurality of the block copolymers is mixed, the content of the aromatic vinyl monomer unit in the block copolymer is considered as an average value of the mixture.

In the aromatic vinyl polymer block, a monomer other than the aromatic vinyl monomer may be copolymerized so long as its amount is small. A proportion of the aromatic vinyl monomer unit in the aromatic vinyl polymer block is preferably 80% by mass or more, more preferably 95% by mass or more, and still more preferably 98% by mass or more relative to the whole of the monomer units in the aromatic vinyl polymer block.

Examples of the aromatic vinyl monomer constituting the aromatic vinyl polymer block include styrene; alkylstyrenes, such as α-methylstyrene, 2-methylstyrene, 3-methylstyrene, 4-methylstyrene, 4-propylstyrene, 4-cyclohexylstyrene, 4-dodecylstyrene, etc.; arylstyrenes, such as 2-ethyl-4-benzylstyrene, 4-(phenylbutyl)styrene, 1-vinylnaphthalene, 2-vinylnaphthalene, etc.; halogenated styrenes; alkoxystyrenes; vinylbenzoate esters; and the like. These aromatic vinyl monomers may be used solely or may be used in combination of two or more thereof.

A content of the aliphatic unsaturated hydrocarbon monomer unit in the block copolymer is preferably 60% by mass or more, more preferably 70% by mass or more, still more preferably 75% by mass or more, yet still more preferably 80% by mass or more, and especially preferably 85% by mass or more relative to the whole of the monomer units of the block copolymer. The content of the aliphatic unsaturated hydrocarbon monomer unit in the block copolymer is preferably 95% by mass or less, more preferably 92% by mass or less, still more preferably 90% by mass or less, yet still more preferably 88% by mass or less, even yet still more preferably 86% by mass or less, especially preferably 84% by mass or less, and most preferably 82% by mass or less relative to the whole of the monomer units of the block copolymer.

When the content of the aliphatic unsaturated hydrocarbon monomer unit in the block copolymer is less than 60% by mass, there is a tendency that the characteristics as the thermoplastic elastomer are hardly exhibited, or the stability of sound insulating performance is lowered. When the content of the aliphatic unsaturated hydrocarbon monomer unit in the block copolymer is more than 95% by mass, there is a tendency that the molding of the layer A is difficult, the height of the peak of tan δ is small, the bending rigidity of the laminate is small, or the sound insulating properties in a high-frequency region are lowered.

The content of the aliphatic unsaturated hydrocarbon monomer unit in the block copolymer can be determined from a charge ratio of the respective monomers in synthesizing the block copolymer, or the measurement results of ¹H-NMR or the like of the block copolymer. In the Examples of the present specification, a proportion of the monomer species was determined from the measurement results of ¹H-NMR, and the proportion of each monomer was described in terms of % by mass. Here, in the case where a plurality of the block copolymers is mixed, the content of the aliphatic unsaturated hydrocarbon monomer unit in the block copolymer is considered as an average value of the mixture.

In the aliphatic unsaturated hydrocarbon polymer block, a monomer other than the aliphatic unsaturated hydrocarbon monomer may be copolymerized so long as its amount is small. A proportion of the aliphatic unsaturated hydrocarbon monomer unit in the aliphatic unsaturated hydrocarbon polymer block is preferably 80% by mass or more, more preferably 95% by mass or more, and still more preferably 98% by mass or more relative to the whole of the monomer units in the aliphatic unsaturated hydrocarbon polymer block.

Examples of the aliphatic unsaturated hydrocarbon monomer constituting the aliphatic unsaturated hydrocarbon polymer block include ethylene, propylene, 1-butene, 1-pentene, 1-hexene, 1-heptene, 1-octene, 1-nonene, 1-decene, 4-phenyl-1-butene, 6-phenyl-1-hexene, 3-methyl-1-butene, 4-methyl-1-butene, 3-methyl-1-pentene, 4-methyl-1-pentene, 3-methyl-1-hexene, 4-methyl-1-hexene, 5-methyl-1-hexene, 3,3-dimethyl-1-pentene, 3,4-dimethyl-1-pentene, 4,4-dimethyl-1-pentene, vinylcyclohexane, hexafluoropropene, tetrafluoroethylene, 2-fluoropropene, fluoroethylene, 1,1-difluoroethylene, 3-fluoropropene, trifluoroethylene, 3,4-dichloro-1-butene, butadiene, isoprene, dicyclopentadiene, norbornene, acetylene, and the like. These aliphatic unsaturated hydrocarbon monomers may be used solely or may be used in combination of two or more thereof.

From the viewpoints of easiness of availability and handling properties, the aliphatic unsaturated hydrocarbon monomer is preferably an aliphatic unsaturated hydrocarbon having 2 or more carbon atoms, and more preferably an aliphatic hydrocarbon having 4 or more carbon atoms, and is preferably an aliphatic unsaturated hydrocarbon having 12 or less carbon atoms, and more preferably an aliphatic hydrocarbon having 8 or less carbon atoms. Among those, butadiene, isoprene, and a combination of butadiene and isoprene are preferred.

In addition, from the viewpoints of easiness of availability and handling properties as well as easiness of synthesis, the aliphatic unsaturated hydrocarbon monomer is preferably a conjugated diene. From the viewpoint of improving the heat stability, in the case of using a conjugated diene as the constituent unit of the aliphatic unsaturated hydrocarbon polymer block, the block is preferably a hydrogenated product resulting from hydrogenating a part or the whole thereof. On that occasion, a hydrogenation ratio is preferably 80% or more, and more preferably 90% or more. The hydrogenation ratio as referred to herein is a value obtained by measuring an iodine value of the block copolymer before and after the hydrogenation reaction.

From the viewpoints of mechanical characteristics and molding processability, a weight average molecular weight of the block copolymer is preferably 30,000 or more, and more preferably 50,000 or more. From the viewpoints of mechanical characteristics and molding processability, the weight average molecular weight of the block copolymer is preferably 400,000 or less, and more preferably 300,000 or less. A ratio (Mw/Mn) of weight average molecular weight to number average molecular weight of the block copolymer is preferably 1.0 or more. The ratio (Mw/Mn) of weight average molecular weight to number average molecular weight of the block copolymer is preferably 2.0 or less, and more preferably 1.5 or less. Here, the weight average molecular weight refers to a weight average molecular weight in terms of polystyrene determined by the gel permeation chromatography (GPC) measurement, and the number average molecular weight refers to a number average molecular weight in terms ofpolystyrene determined by the GPC measurement.

Though a production method of the block copolymer is not particularly limited, the block copolymer can be, for example, produced by an anionic polymerization method, a cationic polymerization method, a radical polymerization method, or the like. For example, in the case of anionic polymerization, specific examples thereof include:
(i) a method of successively polymerizing an aromatic vinyl monomer, a conjugated diene monomer, and subsequently an aromatic vinyl monomer by using an alkyllithium compound as an initiator;
(ii) a method of successively polymerizing an aromatic vinyl monomer and a conjugated diene monomer by using an alkyllithium compound as an initiator and subsequently adding a coupling agent to undergo coupling;
(iii) amethodof successively polymerizing a conjugated diene monomer and subsequently an aromatic vinyl monomer by using a dilithium compound as an initiator; and the like.

In the case of using a conjugated diene as the aliphatic unsaturated hydrocarbon monomer, by adding an organic Lewis base on the occasion of anionic polymerization, a 1,2-bond quantity and a 3,4-bond quantity of the thermoplastic elastomer can be increased, and the 1, 2-bond quantity and the 3,4-bond quantity of the thermoplastic elastomer can be easily controlled by the addition amount of the organic Lewis base. By controlling them, the peak temperature or height of tan δ can be adjusted.

Examples of the organic Lewis base include esters, such as ethyl acetate, etc.; amines, such as triethylamine, N,N,N',N'-tetramethylethylenediamine (TMEDA), N-methylmorpholine, etc.; nitrogen-containing heterocyclic aromatic compounds, such as pyridine, etc.; amides, such as dimethylacetamide, etc.; ethers, such as dimethyl ether, diethyl ether, tetrahydrofuran (THF), dioxane, etc.; glycol ethers, such as ethylene glycol dimethyl ether, diethylene glycol dimethyl ether, etc.; sulfoxides, such as dimethyl sulfoxide, etc.; ketones, such as acetone, methyl ethyl ketone, etc.; and the like.

In the case of subjecting the unhydrogenated polystyrene-based elastomer to a hydrogenation reaction, the hydrogenation reaction can be conducted by dissolving the obtained unhydrogenated polystyrene-based elastomer in a solvent inert to a hydrogenation catalyst or using the unhydrogenated polystyrene-based elastomer without being isolated from a reaction liquid, and allowing the unhydrogenated polystyrene-based elastomer to react with hydrogen in the presence of a hydrogenation catalyst. The hydrogenation ratio is preferably 60% or more, more preferably 80% or more, and still more preferably 90% or more.

Examples of the hydrogenation catalyst include Raney nickel; heterogeneous catalysts in which a metal, such as Pt, Pd, Ru, Rh, Ni, etc., is supported on a carrier, such as carbon, alumina, diatomaceous earth, etc.; Ziegler-based catalysts composed of a combination of a transition metal compound with an alkylaluminum compound, an alkyllithium compound, etc.; metallocene-based catalysts; and the like. The hydrogenation reaction can be generally conducted under conditions at a hydrogen pressure of 0.1 MPa or more and 20 MPa or less and at a reaction temperature of 20°C or higher and 250°C or lower for a reaction time of 0.1 hours or more and 100 hours or less.

### (Other additive components)

In the layer A, an antioxidant, an ultraviolet ray absorber, a photostabilizer, an antiblocking agent, a pigment, a dye, a heat insulating material, and the like may be added as other components, if desired. Examples of the antioxidant, the ultraviolet ray absorber, and the photostabilizer include those to be contained in the layer B as described later.

The laminate can be given a heat insulating function, and a transmittance at wavelength of 1500 nm can be regulated to 50% or less when the a laminated glass is formed, by incorporating the heat insulating material, for example, an inorganic heat insulating fine particle or a heat insulating compound into the layer A The heat insulating material is described later in detail.

In the case where a component other than the thermoplastic elastomer is contained in the layer A, in the composition containing the thermoplastic elastomer constituting the layer A, the content of the thermoplastic elastomer component is preferably 60% by mass or more, more preferably 70% by mass or more, still more preferably 80% by mass or more, especially preferably 90% by mass or more, and most preferably 95% by mass or more. When the content of the thermoplastic elastomer in the layer A is less than 60% by mass, there is a tendency that the characteristics as the thermoplastic elastomer are hardly exhibited, or the optical characteristics are impaired.

In the laminate of the present invention, the thermoplastic elastomer is contained in an amount of preferably 5% by mass or more, more preferably 10% by mass or more, and still more preferably 13% by mass or more in the laminate. When the content of the thermoplastic elastomer in the laminate is less than 5% by mass, the sound insulating properties tend to be lowered.

### [Layer B]

In the layer B which is used for the laminate of the present invention, a shear storage modulus at a temperature of 25°C as measured by conducting a complex shear viscosity test at a frequency of 1 Hz in accordance with JIS K 7244-10 is preferably 1 MPa or more, and more preferably 2 MPa or more. When the shear storage modulus at a temperature of 25°C is less than 1 MPa, there is a tendency that stickiness of the layer B increases, and the process passing properties in a production process of a laminated glass are lowered. Furthermore, in the case where it is necessary to compensate for a lowering of strength of the laminated glass following thinning (weight reduction) of glass, the shear storage modulus at a temperature of 25°C is preferably 10.0 MPa or more. For example, by using the B layer whose shear storage modulus at a temperature of 25°C is 10.0 MPa or more as an outermost layer, a laminate with excellent handling properties can be obtained. The shear storage modulus at a temperature of 25°C is preferably 12.0 MPa or more, more preferably 20.0 MPa or more, still more preferably 40.0 MPa or more, especially preferably 60.0 MPa or more, and most preferably 80.0 MPa or more. When the shear storage modulus under the above-described condition is less than 10.0 MPa, there is a tendency that suitable shear storage modulus and maximum loss factor cannot be kept, and the sound insulating properties or bending rigidity of the interlayer film for laminate glass is lowered. The layer B having a shear storage modulus of 10.0 MPa or more can be, for example, obtained by regulating an amount of a plasticizer to 50 parts by mass or less based on 100 parts by mass of a thermoplastic resin, such as a polyvinyl acetal resin, etc. In addition, an upper limit of the shear storage modulus at 25°C is not particularly limited, and it is preferably 900 MPa or less from the viewpoints of moldability and handling properties of the laminate.

In the laminate of the present invention, the layer B serving as the outermost layer contains at least one thermoplastic resin selected from the group consisting of a polyvinyl acetal resin and an ionomer. When the layer B serving as the outermost layer is constituted of a composition containing the above-described thermoplastic resin, the weather resistance or strength of the interlayer film for laminated glass can be improved, or the bending strength or penetration resistance of the resulting laminated glass can be improved. For example, from the viewpoint of the matter that a safety glass with low glass scattering properties at the time of breakage can be prepared when the laminate of the present invention is put into practical use as an interlayer film for laminated glass, or the like, the layer B composed of a composition containing a polyvinyl acetal resin is preferred. In particular, it is preferred that the layer B serving as the outermost layer is constituted of polyvinyl butyral.

In addition, as for the layer B of the present invention, in interposing the laminate of the present invention between two sheets of float glass having a length of 300 mm, a width of 25 mm, and a thickness of 1.9 mm, the laminate is selected in such a manner that a loss factor at a quaternary resonance frequency as measured at 20°C by a central exciting method is 0.2 or more, and a bending rigidity at the quaternary resonance frequency as calculated in accordance with ISO 16940 (2008) is 150 N·m or more. The resin satisfying such prescriptions is not particularly limited, and examples thereof include the above-described thermoplastic resins and the like.

Furthermore, it is preferred that the resin which is used for the layer B of the present invention includes a resin having adhesion to a glass. The resin having such properties is not particularly limited, and examples thereof include the above-described thermoplastic resins and the like.

In the case of using a composition containing a thermoplastic resin, such as a polyvinyl acetal resin, etc., as the layer B, the layer B contains the thermoplastic resin in an amount of preferably 40% by mass or more, more preferably 50% by mass or more, still more preferably 60% by mass or more, especially preferably 80% by mass or more, and much more preferably 90% by mass or more. The layer B may be constituted of only the thermoplastic resin. When the content of the thermoplastic resin in the layer B is smaller than 40% by mass, the bending strength of the resulting laminated glass tends to be lowered.

### (Ionomer)

A kind of the ionomer is not particularly limited, and examples thereof include resins having a constituent unit derived from ethylene and a constituent unit derived from an α,β-unsaturated carboxylic acid, in which at least a part of the α, β-unsaturated carboxylic acid is neutralized with a metal ion. As the metal ion, there is, for example, a sodium ion. In the ethylene·α,β-unsaturated carboxylic acid copolymer serving as a base polymer, a content proportion of the constituent unit of an α,β-unsaturated carboxylic acid is preferably 2% by mass or more, and more preferably 5% by mass or more. In addition, the content proportion of the constituent unit of an α,β-unsaturated carboxylic acid is preferably 30% by mass or less, and more preferably 20% by mass or less. In the present invention, from the standpoint of easiness of availability, an ionomer of an ethylene-acrylic acid copolymer and an ionomer of an ethylene-methacrylic acid copolymer are preferred. As for examples of the ethylene-based ionomer, there can be exemplified a sodium ionomer of an ethylene-acrylic acid copolymer and a sodium ionomer of an ethylene-methacrylic acid copolymer as especially preferred examples.

Examples of the α,β-unsaturated carboxylic acid constituting the ionomer include acrylic acid, methacrylic acid, maleic acid, monomethyl maleate, monoethyl maleate, maleic anhydride, and the like. Of those, acrylic acid or methacrylic acid is especially preferred.

### (Adhesive functional group-containing polyolefin-based polymer)

The adhesive functional group-containing polyolefin-based polymer is a polyolefin-based polymer having an adhesive functional group given thereto. In the layer B of the laminate of the present invention, by further incorporating the adhesive functional group-containing polyolefin-based polymer, the adhesion of the film obtained by molding the resin composition constituting the layer B to a glass can be improved. In addition, in the case where the adhesive functional group-containing polyolefin-based polymer and the polyvinyl acetal resin are mixed and used in combination, the adhesive functional group-containing polyolefin-based polymer works as a compatibilizing agent between the polyvinyl acetal resin and the thermoplastic polyolefin-based resin, and hence, the transparency of the film obtained by molding the resin composition can be improved.

Examples of the adhesive functional group that the adhesive functional group-containing polyolefin-based polymer include a carboxyl group, a boronic acid group, a silanol group, an epoxy group, an isocyanate group, an acid anhydride group, a (meth) acryloyloxy group, a hydroxyl group, an amide group, a halogen atom, such as a chlorine atom, etc. , and the like. In the case where the adhesive functional group-containing polyolefin-based polymer and the polyvinyl acetal resin are mixed with or brought into contact with each other and used, a carboxyl group, a boronic acid group, a silanol group, an epoxy group, or an isocyanate group is preferred from the standpoint of reactivity with the hydroxyl group in the polyvinyl acetal resin. Though a production method of the adhesive functional group-containing polyolefin-based polymer is not particularly limited, the adhesive functional group-containing polyolefin-based polymer can be, for example, obtained by reaction of olefin and a monomer having an adhesive functional group by a known method through random copolymerization, block copolymerization, graft copolymerization, or graft reaction. Of those, random copolymerization, graft copolymerization, or graft reaction is preferred, and a graft reaction product obtained through graft reaction is more preferred. It is to be noted that the graft reaction product as referred to herein means a product in which the majority of graft side chains is one to which one monomer but not a polymer is added, as in maleic anhydride modification. Besides, the adhesive functional group-containing polyolefin-based polymer is also obtained by subjecting a polyolefin-based resin to a reaction, such as oxidation, chlorination, etc., by a known method. In addition, an ethylene-vinyl acetate copolymer and the like can be used as the adhesive functional group-containing polyolefin.

Propylene is preferred as the olefin which is used for the adhesive functional group-containing polyolefin-based polymer. The adhesive functional group-containing polyolefin-based polymer may also be a polymer obtained through copolymerization of propylene with an α-olefin other than propylene and a monomer having an adhesive functional group. Examples of the α-olefin include ethylene, 1-butene, 1-pentene, 1-hexene, 1-octene, 4-methyl-1-pentene, cyclohexene, and the like. The α-olefin can be copolymerized with a monomer having an adhesive functional group, and there is exemplified a method, such as random copolymerization, block copolymerization, graft copolymerization, etc. A proportion of a structural unit derived from such an α-olefin other than propylene relative to the whole of the structural units is preferably 0 mol% or more, and it is preferably 45 mol% or less, more preferably 35 mol% or less, and still more preferably 25 mol% or less.

Examples of the monomer having an adhesive functional group include vinyl acetate, vinyl chloride, ethylene oxide, propylene oxide, acrylamide, and an unsaturated carboxylic acid or its ester or anhydride. Of those, an unsaturated carboxylic acid or its ester or anhydride is preferred. Examples of the unsaturated carboxylic acid or its ester or anhydride include (meth) acrylic acid, a (meth) acrylate ester, maleic acid, maleic anhydride, fumaric acid, itaconic acid, itaconic anhydride, himic acid, himic anhydride, and the like. Of those, maleic acid and maleic anhydride are more preferred. These monomers having an adhesive functional group may be used solely or may be used in combination of two or more thereof.

From the viewpoints of adhesion of the film to a glass and transparency, as the adhesive functional group-containing polyolefin-based polymer, polypropylene or a styrene-diene-based elastomer each containing a carboxyl group as the adhesive functional group, namely an (anhydrous) carboxylic acid-modified polypropylene-based resin or an (anhydrous) carboxylic acid-modified styrene-diene-based elastomer, is preferred, and in particular, an (anhydrous) maleic acid-modified polypropylene-based resin or an (anhydrous) maleic acid-modified styrene-diene-based elastomer is more preferred.

Besides, examples of a monomer copolymerizable with the olefin include alkyl acrylates, such as methyl acrylate, ethyl acrylate, n-propyl acrylate, isopropyl acrylate, n-butyl acrylate, isobutyl acrylate, n-hexyl acrylate, isohexyl acrylate, n-octyl acrylate, isooctyl acrylate, 2-ethylhexyl acrylate, etc.; and methacrylate esters, such as methyl methacrylate, ethyl methacrylate, n-propyl methacrylate, isopropyl methacrylate, n-butyl methacrylate, isobutyl methacrylate, n-hexyl methacrylate, isohexyl methacrylate, n-octyl methacrylate, isooctyl methacrylate, 2-ethylhexyl methacrylate, etc. These (meth)acrylate esters may be used solely or may be used in combination of two or more thereof.

A proportion of the adhesive function group is preferably 1 µeq/g or more, more preferably 2 µeq/g or more, and optimally 3 µeq/g or more relative to the whole of the structural units of the adhesive functional group-containing polyolefin-based polymer. The proportion of the adhesive function group is preferably 1,500 µeq/g or less, more preferably 700 µeq/g or less, and optimally 500 µeq/g or less relative to the whole of the structural units of the adhesive functional group-containing polyolefin-based polymer. When the proportion of the adhesive functional group is smaller than 1 µeq/g, there is a tendency that a dispersed particle diameter of the polyolefin-based resin becomes high, and cloudiness becomes vigorous, whereas when it is more than 1,500 µeq/g, there is a tendency that when recycled, gelation is liable to be caused.

In the present invention, the adhesive functional group-containing polyolefin-based polymer can play a role as the above-described thermoplastic polyolefin-based resin. Accordingly, the thermoplastic resin which can be used in the present invention also includes a thermoplastic resin not containing an adhesive functional group-free thermoplastic polyolefin-based resin but containing only an adhesive functional group-containing polyolefin-based polymer as the thermoplastic polyolefin-based resin as one of preferred embodiments.

In the case where the adhesive functional group-containing polyolefin-based polymer and the polyvinyl acetal resin are brought into contact with each other and used, a content of the adhesive functional group-containing polyolefin-based polymer is preferably 0.3 parts by mass or more, more preferably 0.6 parts by mass or more, and still more preferably 1 part by mass or more based on 100 parts by mass of the thermoplastic elastomer. When the content of the adhesive functional group-containing polyolefin-based polymer is less than 0.5 parts by mass, compatibility between the polyvinyl acetal resin and the thermoplastic polyolefin-based resin tends to be not sufficient.

On the occasion of melt kneading the laminate for recycle use as the polyvinyl acetal resin layer, in the case where the thermoplastic elastomer and the polyvinyl acetal resin are mixed, a content of the thermoplastic elastomer is preferably 0.5 parts by mass or more, more preferably 1 part by mass or more, and more preferably 3 parts by mass or more based on 100 parts by mass of the polyvinyl acetal resin. In addition, the content of the thermoplastic elastomer is preferably 50 parts by mass or less, and more preferably 40 parts by mass or less based on 100 parts by mass of the polyvinyl acetal resin. When the content of the thermoplastic elastomer is less than 0.5 parts by mass, trimming recycling properties tend to become inferior, whereas when it is more than 50 parts by mass, a haze tends to be deteriorated.

A content of the adhesive functional group-containing polyolefin-based polymer is preferably 0.3 parts by mass or more, more preferably 0.6 parts by mass or more, and still more preferably 1 part by mass or more based on 100 parts by mass of the thermoplastic elastomer. When the content of the adhesive functional group-containing polyolefin-based polymer is smaller than 0.3 parts by mass, an effect for compatibilizing the polyvinyl acetal resin and the thermoplastic polyolefin-based resin with each other tends to be not sufficient.

### (Polyvinyl acetal resin)

An average degree of acetalization of the polyvinyl acetal resin is preferably 40 mol% or more, and it is preferably 90 mol% or less. When the average degree of acetalization is less than 40 mol%, the compatibility with a solvent, such as a plasticizer, etc. , is not preferred. When the average degree of acetalization is more than 90 mol%, there is a concern that the reaction for obtaining the polyvinyl acetal resin takes a long time, so that such is not preferred from the process standpoint. The average degree of acetalization is more preferably 60 mol% or more, and from the viewpoint of water resistance, it is still more preferably 65 mol% or more. In addition, the average degree of acetalization is more preferably 85 mol% or less, and still more preferably 80 mol% or less.

A content of the vinyl acetate unit of the polyvinyl acetal resin is preferably 30 mol% or less. When the content of the vinyl acetate unit is more than 30 mol%, blocking is liable to be caused at the time of producing the polyvinyl acetal resin, so that the production is hardly achieved. The content of the vinyl acetate unit is more preferably 20 mol% or less.

A content of the vinyl alcohol unit of the polyvinyl acetal resin is preferably 5 mol% or more, more preferably 10 mol% or more, still more preferably 15 mol% or more, yet still more preferably 18 mol% or more, even yet still more preferably 20 mol% or more, even still more preferably 22 mol% or more, and yet even still more preferably 25 mol% or more. The content of the vinyl alcohol unit of the polyvinyl acetal resin is preferably 50 mol% or less, more preferably 45 mol% or less, still more preferably 40 mol% or less, yet still more preferably 35 mol% or less, even yet still more preferably 30 mol% or less, yet even still more preferably 25 mol% or less, and especially preferably 20 mol% or less.

When the content of the vinyl alcohol unit is smaller than 5 mol%, there is a tendency that the adhesion to a glass is lowered, or the strength of the layer B is lowered. In addition, in the case where a compound having a hydroxyl group as described later is used as the plasticizer, there is a tendency that it is impossible to allow the hydroxyl group that the plasticizer has and the polyvinyl acetal resin to have a sufficient interaction (hydrogen bond), and as a result, the compatibility between the polyvinyl acetal resin and the plasticizer becomes unpreferable, so that the plasticizer is liable to migrate into another resin layer. When the content of the vinyl alcohol unit is more than 50 mol%, there is a tendency that the water resistance is lowered, or it becomes difficult to control the penetration resistance or impact resistance function required for an interlayer film as the safety glass. In addition, there is a tendency that compatibility with a solvent, such as a plasticizer, etc., is lowered to cause bleedout of the plasticizer, or hygroscopicity of the laminate becomes high, so that humidity resistance is lowered, or whitening is liable to be caused.

The polyvinyl acetal resin is generally constituted of a vinyl acetal unit, a vinyl alcohol unit, and a vinyl acetate unit, and these respective units can be, for example, measured by the "Testing Methods for Polyvinyl Butyral" of JIS K 6728 or a nuclear magnetic resonance method (NMR).

In the case where the polyvinyl acetal resin contains a unit other than the vinyl acetal unit, by measuring a unit quantity of vinyl alcohol and a unit quantity of vinyl acetate and subtracting these both unit quantities from a vinyl acetal unit quantity in the case of not containing a unit other than the vinyl acetal unit, the remaining vinyl acetal unit quantity can be calculated.

The polyvinyl acetal resin can be produced by a conventionally known method, and representatively, the polyvinyl acetal resin can be produced by acetalization of polyvinyl alcohol with an aldehyde. Specifically, there is exemplified a method in which polyvinyl alcohol is dissolved in warm water, the resulting aqueous solution is held at a prescribed temperature, for example, 0°C or higher, preferably 10°C or higher and 90°C or lower, and preferably 20°C or lower, the necessary acid catalyst and aldehyde are added, the acetalization reaction is allowed to proceed while stirring, and subsequently, the reaction temperature is increased to 70°C to conduct aging, thereby accomplishing the reaction, followed by neutralization, water washing, and drying to obtain a powder of the polyvinyl acetal resin; or the like.

A viscosity average polymerization degree of polyvinyl alcohol serving as a raw material of the polyvinyl acetal resin is preferably 100 or more, more preferably 300 or more, still more preferably 400 or more, yet still more preferably 600 or more, even yet still more preferably 700 or more, yet even still more preferably 750 or more, especially preferably 900 or more, and most preferably 1, 200 or more. When the viscosity average polymerization degree of polyvinyl alcohol is too low, there is a concern that the penetration resistance or creep resistance properties, particularly creep resistance properties under high-temperature and high-humidity conditions, such as those at 85°C and at 85% RH, are lowered. In addition, the viscosity average polymerization degree of polyvinyl alcohol is preferably 5,000 or less, more preferably 3,000 or less, still more preferably 2,500 or less, especially preferably 2,300 or less, and most preferably 2,000 or less. When the viscosity average polymerization degree of polyvinyl alcohol is more than 5,000, there is a concern that the molding of a resin film is difficult.

Furthermore, for the purpose of improving lamination aptitude of the resulting interlayer film for laminated glass to obtain a laminated glass with a much more excellent appearance, the viscosity average polymerization degree of polyvinyl alcohol is preferably 1,800 or less, more preferably 1,500 or less, still more preferably 1,100 or less, and especially preferably 1,000 or less. In addition, in the case where the laminate of the present invention is interposed as an interlayer film for laminated glass between thin-film glasses and used as a laminated glass, in order to enhance the bending strength of the resulting laminated glass, it is preferred to make the quantity of the plasticizer small. However, when the quantity of the plasticizer is made small, the moldability tends to be lowered, and hence, from the viewpoint of ensuring preferred moldability, it is preferred to allow the viscosity average polymerization degree of polyvinyl alcohol to fall within the foregoing range.

It is to be noted that since the viscosity average polymerization degree of the polyvinyl acetal resin coincides with the viscosity average polymerization degree of polyvinyl alcohol serving as a raw material, the above-described preferred viscosity average polymerization degree of polyvinyl alcohol coincides with the preferred viscosity average polymerization degree of the polyvinyl acetal resin.

It is preferred to set the vinyl acetate unit of the resulting polyvinyl acetal resin to 30 mol% or less, and hence, it is preferred to use polyvinyl alcohol having a saponification degree of 70 mol% or more. When the saponification degree of polyvinyl alcohol is less than 70 mol%, there is a concern that transparency or heat resistance of the polyvinyl acetal resin is lowered, and also, there is a concern that the reactivity with the aldehyde is lowered, too. The saponification degree is more preferably 95 mol% or more.

The viscosity average polymerization degree and saponification degree of polyvinyl alcohol can be, for example, measured in accordance with the "Testing Methods for Polyvinyl Alcohol" of JIS K 6726.

The aldehyde which is used for acetalization of polyvinyl alcohol is preferably an aldehyde having 1 or more and 12 or less carbon atoms. When the carbon number of the aldehyde is more than 12, the reactivity of the acetalization is lowered, and moreover, blocking of the resin is liable to be generated during the reaction, and the synthesis of the polyvinyl acetal resin is liable to be accompanied with difficulties.

The aldehyde is not particularly limited, and examples thereof include aliphatic, aromatic, or alicyclic aldehydes, such as formaldehyde, acetaldehyde, propionaldehyde, n-butyl aldehyde, isobutyl aldehyde, valeraldehyde, n-hexyl aldehyde, 2-ethylbutyl aldehyde, n-heptyl aldehyde, n-octyl aldehyde, n-nonyl aldehyde, n-decyl aldehyde, benzaldehyde, cinnamaldehyde, etc. Of those, aliphatic aldehydes having 2 or more and 6 or less carbon atoms are preferred, and above all, butyl aldehyde is especially preferred. In addition, the above-described aldehydes may be used solely or may be used in combination of two or more thereof. Furthermore, a small amount of a polyfunctional aldehyde or an aldehyde having other functional group, or the like may also be used in combination in an amount in the range of 20% by mass or less.

The polyvinyl acetal resin is most preferably polyvinyl butyral. As the polyvinyl butyral, modified polyvinyl butyral obtained by subjecting polyvinyl alcohol-based polymer obtained by saponifying a copolymer of a vinyl ester and other monomer to butyralization with butyl aldehyde can be obtained. Here, examples of the other monomer include α-olefins, such as ethylene, propylene, n-butene, isobutylene, etc.; acrylate esters, such as methyl acrylate, ethyl acrylate, n-butyl acrylate, i-butyl acrylate, t-butyl acrylate, 2-ethylhexyl acrylate, dodecyl acrylate, octadecyl acrylate, etc.; methacrylate esters, such as methyl methacrylate, ethyl methacrylate, n-butyl methacrylate, i-butyl methacrylate, t-butyl methacrylate, 2-ethylhexyl methacrylate, dodecyl methacrylate, octadecyl methacrylate, etc.; acrylamides and derivatives thereof, such as acrylamide, N-methylacrylamide, N-ethylacrylamide, N,N-dimethylacrylamide, diacetone acrylamide, acrylamidepropanesulfonic acid and a salt thereof, acrylamidepropyldimethylamine and a salt or quaternary salt thereof, N-methylolacrylamide and a derivative thereof, etc. ; methacrylamides and derivatives thereof, such as methacrylamide, N-methylmethacrylamide, N-ethylmethacrylamide, methacrylamidepropanesulfonic acid and a salt thereof, methacrylamidepropyldimethylamine and a salt or quaternary salt thereof, N-methylolmethacrylamide and a derivative thereof, etc.; vinyl ethers, such as methyl vinyl ether, ethyl vinyl ether, n-butyl vinyl ether, i-butyl vinyl ether, t-butyl vinyl ether, dodecyl vinyl ether, stearyl vinyl ether, etc.; nitriles, such as acrylonitrile, methacrylonitrile, etc.; vinyl halides, such as vinyl chloride, vinyl fluoride, etc.; vinylidene halides, such as vinylidene chloride, vinylidene fluoride, etc.; allyl compounds, such as allyl acetate, allyl chloride, etc.; maleate esters or maleic anhydride; vinyl silyl compounds, such as vinyltrimethoxysilane, etc.; isopropenyl acetate; and the like. However, the other monomer is not limited thereto. In the case of copolymerizing such other monomer, in general, such other monomer is used in a proportion of less than 10 mol% relative to the vinyl carboxylate compound. Besides, as the other monomer, styrene and styrene derivatives, monomers having a hydroxyl group, a carboxyl group, or a carboxylate group, and the like can be used.

In the layer B, as a component other than the thermoplastic resin, such as the polyvinyl acetal resin, etc., a plasticizer, an antioxidant, an ultraviolet ray absorber, a photostabilizer, an adhesion modifier, an antiblocking agent, a pigment, a dye, a heat insulating material (for example, an inorganic heat insulating fine particle or an organic heat insulating material each having infrared absorption ability) , and the like may be added, if desired.

### (Plasticizer)

Though the plasticizer which is used for the layer B of the present invention is not particularly limited, carboxylic acid ester-based plasticizers, such as monovalent carboxylic acid ester-based or polyvalent carboxylic acid ester-based plasticizers, etc.; phosphate ester-based plasticizers; organic phosphite ester-based plasticizers; and the like can be used. Besides, polymeric plasticizers, such as carboxylic acid polyester-based, carbonic acid polyester-based, or polyalkylene glycol-based plasticizers, etc.; ester compounds of a hydroxycarboxylic acid and a polyhydric alcohol, such as castor oil, etc.; and hydroxycarboxylic acid ester-based plasticizers, such as an ester compound of a hydroxycarboxylic acid and a monohydric alcohol, etc., can also be used.

The monovalent carboxylic acid ester-based plasticizer is a compound obtained through a condensation reaction between a monovalent carboxylic acid, such as butanoic acid, isobutanoic acid, hexanoic acid, 2-ethylbutanoic acid, heptanoic acid, octylic acid, 2-ethylhexanoic acid, lauric acid, etc., and a polyhydric alcohol, such as ethylene glycol, diethylene glycol, triethylene glycol, tetraethylene glycol, polyethylene glycol, polypropylene glycol, glycerin, etc., and specific examples of the compound include triethylene glycol di-2-diethylbutanoate, triethylene glycol diheptanoate, triethylene glycol di-2-ethylhexanoate, triethylene glycol dioctanoate, tetraethylene glycol di-2-ethylbutanoate, tetraethylene glycol diheptanoate, tetraethylene glycol di-2-ethylhexanoate, tetraethylene glycol dioctanoate, diethylene glycol di-2-ethylhexanoate, PEG#400 di-2-ethylhexanoate, triethylene glycol mono-2-ethylhexanoate, a fully or partially esterified compound of glycerin or diglycerin with 2-ethylhexanoic acid, and the like. "PEG#400" as referred to herein expresses a polyethylene glycol having an average molecular weight of 350 to 450.

As the polyvalent carboxylic acid ester-based plasticizer, there are exemplified compounds obtained through a condensation reaction between a polyvalent carboxylic acid, such as adipic acid, succinic acid, azelaic acid, sebacic acid, phthalic acid, isophthalic acid, terephthalic acid, trimellitic acid, etc., and an alcohol having 1 to 12 carbon atoms, such as methanol, ethanol, butanol, hexanol, 2-ethylbutanol, heptanol, octanol, 2-ethylhexanol, decanol, dodecanol, butoxyethanol, butoxyethoxyethanol, benzyl alcohol, etc. Specific examples of the compound include dihexyl adipate, di-2-ethylbutyl adipate, diheptyl adipate, dioctyl adipate, di-2-ethylhexyl adipate, di(butoxyethyl) adipate, di(butoxyethoxyethyl) adipate, mono(2-ethylhexyl) adipate, dibutyl sebacate, dihexyl sebacate, di-2-ethylbutyl sebacate, dibutyl phthalate, dihexyl phthalate, di(2-ethylbutyl) phthalate, dioctyl phthalate, di (2-ethylhexyl) phthalate, benzylbutyl phthalate, didodecyl phthalate, and the like.

Examples of the phosphoric acid-based plasticizer or phosphorous acid-based plasticizer include compounds obtained through a condensation reaction between phosphoric acid or phosphorous acid and an alcohol having 1 to 12 carbon atoms, such as methanol, ethanol, butanol, hexanol, 2-ethylbutanol, heptanol, octanol, 2-ethylhexanol, decanol, dodecanol, butoxyethanol, butoxyethoxyethanol, benzyl alcohol, etc. Specific examples of the compound include trimethyl phosphate, triethyl phosphate, tripropyl phosphate, tributyl phosphate, tri(2-ethylhexyl) phosphate, tri(butoxyethyl) phosphate, tri(2-ethylhexyl) phosphite, and the like.

As the carboxylic acid polyester-based plasticizer, there may be used carboxylic acid polyesters obtained through alternate copolymerization between a polyvalent carboxylic acid, such as oxalic acid, malonic acid, succinic acid, adipic acid, suberic acid, sebacic acid, dodecane diacid, 1,2-cyclohexanedicarboxylic acid, 1,3-cyclohexanedicarboyxlic acid, 1,4-cyclohexanedicarboxylic acid, etc., and a polyhydric alcohol, such as ethylene glycol, diethylene glycol, triethylene glycol, tetraethylene glycol, 1,2-propylene glycol, 1,3-propylene glycol, 1,2-butylene glycol, 1,3-butylene glycol, 1,4-butylene glycol, 1,2-pentanediol, 1,5-pentanediol, 2,4-pentanediol, 1,2-hexanediol, 1,6-hexanediol, 3-methyl-1,5-pentanediol, 3-methyl-2,4-pentanediol, 1,2-heptanediol, 1,7-heptanediol, 1,2-octanediol, 1,8-octanediol, 1,2-nonanediol, 1,9-nonanediol, 2-methyl-1,8-octanediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl)cyclohexane, 1,3-bis(hydroxymethyl)cyclohexane, 1,4-bis(hydroxymethyl)cyclohexane, etc.; polymers of hydroxycarboxylic acids (hydroxycarboxylic acid polyesters) of an aliphatic hydroxycarboxylic acid, such as glycolic acid, lactic acid, 2-hydroxybutyric acid, 3-hydroxybutyric acid, 4-hydroxybutyric acid, 6-hydroxyhexanoic acid, 8-hydroxyhexanoic acid, 10-hydroxydecanoic acid, and 12-hydroxydodecanoic acid, or a hydroxycarboxylic acid having an aromatic ring, such as 4-hydroxybenzoic acid, 4-(2-hydroxyethyl)benzoic acid, etc.; and carboxylic acid polyesters obtained through ring opening polymerization of a lactone compound, such as an aliphatic lactone compound, e.g. , γ-butyrolactone, γ-valerolactone, δ-valerolactone, β-methyl-δ-valerolactone, δ-hexanolactone, ε-caprolactone, lactide, etc., a lactone compound having an aromatic ring, phthalide, or the like. A terminal structure of such a carboxylic acid polyester is not particularly limited, and it may be a hydroxyl group or a carboxyl group, or it may also be an ester bond resulting from allowing a terminal hydroxyl group or a terminal carboxyl group to react with a monovalent carboxylic acid or a monohydric alcohol.

Examples of the carbonic acid polyester-based plasticizer include carbonic acid polyesters obtained through alternate copolymerization of a polyhydric alcohol, such as ethylene glycol, diethylene glycol, triethylene glycol, tetraethylene glycol, 1,2-propylene glycol, 1,3-propylene glycol, 1,2-butylene glycol, 1,3-butylene glycol, 1,4-butylene glycol, 1,2-pentanediol, 1,5-pentanediol, 2,4-pentanediol, 1,2-hexanediol, 1,6-hexanediol, 3-methyl-1,5-pentanediol, 3-methyl-2,4-pentanediol, 1,2-pentanediol, 1,7-heptanediol, 1,2-octanediol, 1,8-octanediol, 1,2-nonanediol, 1,9-nonanediol, 2-methyl-1,8-octnediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl)cyclohexane, 1,3-bis(hydroxymethyl)cyclohexane, 1,4-bis (hydroxymethyl) cyclohexane, etc. and a carbonate ester, such as dimethyl carbonate, diethyl carbonate, etc., by means of an ester interchange reaction. Though a terminal structure of such a carbonic acid polyester compound is not particularly limited, it may be a carbonate ester group, a hydroxyl group, or the like.

Examples of the polyalkylene glycol-based plasticizer include polymers obtained through ring opening polymerization of an alkylene oxide, such as ethylene oxide, propylene oxide, butylene oxide, oxetane, etc., with a monohydric alcohol, a polyhydric alcohol, a monovalent carboxylic acid, or a polyvalent carboxylic acid as an initiator.

Examples of the hydroxycarboxylic acid ester-based plasticizer include monohydric alcohol esters of a hydroxycarboxylic acid, such as methyl ricinoleate, ethyl ricinoleate, butyl ricinoleate, methyl 6-hydroxyhexanoate, ethyl 6-hydroxyhexanoate, and butyl 6-hydroxyhexnoate; polyhydric alcohol esters of a hydroxycarboxylic acid, such as ethylene glycol di(6-hydroxyhexanoic acid) ester, diethylene glycol di(6-hydroxyhexanoic acid) ester, triethylene glycol di(6-hydroxyhexanoic acid) ester, 3-methyl-1,5-pentanediol di(6-hydroxyhexanoic acid) ester, 3-methyl-1,5-pentanediol di(2-hydroxybuturic acid) ester, 3-methyl-1,5-pentanediol di(3-hydroxybutyric acid) ester, 3-methyl-1,5-pentanediol di(4-hydroxybutyric acid) ester, triethylene glycol di(2-hydroxybutyric acid) ester, glycerin tri(ricinoleic acid) ester, and di(1-(2-ethylhexyl)) L-tartarate; and castor oil. Besides, polyhydric alcohol ester compounds of a hydroxyl carboxylic acid in which a number of k groups derived from a hydroxycarboxylic acid are replaced with a group derived from a carboxylic acid not containing a hydroxyl group or with a hydrogen atom can also be used, and as such a hydroxyl carboxylic acid ester, those obtained by a conventionally known method can also be used.

In the present invention, these plasticizers may be used solely or may be used in combination of two or more thereof.

In the case where the plasticizer is contained in the layer B, from the viewpoints of compatibility with the resin (particularly, the polyvinyl acetal resin) to be used for the layer B together with the plasticizer, low migration properties into another layer, and enhancement of non-migration properties, it is preferred to use an ester-based plasticizer or an ether-based plasticizer, each of which has a melting point of 30°C or lower and a hydroxyl value of 15 mgKOH/g or more and 450 mgKOH/g or less, or an ester-based plasticizer or an ether-based plasticizer, each of which is amorphous and has a hydroxyl value of 15 mgKOH/g or more and 450 mgKOH/g or less. The term "amorphous" as referred to herein means that a melting point is not observed at a temperature of -20°C or higher. The hydroxyl value is preferably 15 mgKOH/g or more, more preferably 30 mgKOH/g or more, and optimally 45 mgKOH/g or more. In addition, the hydroxyl value is preferably 450 mgKOH/g or less, more preferably 360 mgKOH/g or less, and optimally 280 mgKOH/g or less. Examples of the ester-based plasticizer include polyesters satisfying the above-described prescriptions (e.g. , the above-described carboxylic acid polyester-based plasticizer and carbonic acid polyester-based plasticizers, etc.) and hydroxycarboxylic acid ester compounds (e.g., the above-described hydroxycarboxylic acid ester-based plasticizers, etc.), and examples of the ether-based plasticizer include polyether compounds satisfying the above-described prescriptions (e.g., the above-described polyalkylene glycol-based plasticizers, etc.).

A content of the plasticizer is 30 parts by mass or less, preferably 20 parts by mass or less, more preferably 10 parts by mass or less, especially preferably 6 parts by mass or less, and most preferably 0 part by mass (namely, the plasticizer is not contained) based on 100 parts by mass of the thermoplastic resin, such as the polyvinyl acetal resin, etc. When the content of the plasticizer is more than 50 parts by mass based on 100 parts by mass of the thermoplastic resin, such as the polyvinyl acetal resin, etc., there is a tendency that the handling properties of the laminate are deteriorated, or the shear storage modulus of each of the layer B and the laminate is lowered. In addition, there is a tendency that a time-dependent change of sound insulating properties after preparation of the laminated glass becomes large, so that the stability of sound insulating performance is lowered. It is to be noted that two or more plasticizers may also be used in combination.

A compound having a hydroxyl group can be used as the plasticizer. A proportion of the content of the compound having a hydroxyl group relative to the total amount of the plasticizer to be used for the layer B is preferably 10% by mass or more, more preferably 15% by mass or more, still more preferably 20% by mass or more, yet still more preferably 50% by mass or more, even yet still more preferably 70% by mass or more, especially preferably 80% by mass or more, and most preferably 90% by mass or more. The proportion of the content of the compound having a hydroxyl group relative to the total amount of the plasticizer to be used for the layer B is preferably 100% by mass or less, more preferably 90% by mass or less, and still more preferably 80% by mass or less. The compound having a hydroxyl group has high compatibility with the resin, particularly the polyvinyl acetal resin or ionomer and is low in migration properties into another resin layer, and hence, a laminate with excellent stability in sound insulating performance can be obtained.

### (Other additive components)

Examples of the antioxidant include phenol-based antioxidants, phosphorus-based antioxidants, sulfur-based antioxidants, and the like. Of those, phenol-based antioxidants are preferred, and alkyl-substituted phenol-based antioxidants are especially preferred.

Examples of the phenol-based antioxidant include acrylate-based compounds, such as 2-t-butyl-6-(3-t-butyl-2-hydroxy-5-methylbenzyl)-4-methylp henyl acrylate, 2,4-di-t-amyl-6-(1-(3,5-di-t-amyl-2-hydroxyphenyl)ethyl)ph enyl acrylate, etc.; alkyl-substituted phenol-based compounds, such as 2,6-di-t-butyl-4-methylphenol, 2,6-di-t-butyl-4-ethylphenol, octadecyl-3-(3,5-di-t-butyl-4-hydroxyphenyl)propionate, 2,2'-methylene-bis(4-methyl-6-t-butylphenol), 4,4'-butylidene-bis(4-methyl-6-t-butylphenol), 4,4'-butylidene-bis(6-t-butyl-m-cresol), 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyl oxy)-1,1-dimethylethyl)-2,4,8,10-tetraoxaspiro[5.5]undecan e, 1,1,3-tris(2-methyl-4-hydroxy-5-t-butylphenyl)butane, 1,3,5-trimethyl-2,4,6-tris(3,5-di-t-butyl-4-hydroxybenzyl) benzene, tetrakis(methylene-3-(3',5'-di-t-butyl-4'-hydroxyphenyl)pr opionate)methane, triethylene glycol bis(3-(3-t-butyl-4-hydroxy-5-methylphenyl)propionate), etc.; triazine group-containing phenol-based compounds, such as 1,3,5-tris(2,6-dimethyl-3-hydroxy-4-t-butylbenzyl)-1,3,5-t riazine-2,4,6(1H,3H,5H)-trione, 6-(4-hydroxy-3,5-di-t-butylanilino)-2,4-bis-octylthio-1,3, 5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5-triazine, 2-octylthio-4,6-bis-(3,5-di-t-butyl-4-oxyanilino)-1,3,5-tr iazine, etc.; and the like.

Examples of the phosphorus-based antioxidant include monophosphite-based compounds, such as triphenyl phosphite, diphenylisodecyl phosphite, phenyldiisodecyl phosphite, tris(nonylphenyl) phosphite, tris(dinonylphenyl) phosphite, tris(2-t-butyl-4-methylphenyl) phosphite, tris(2,4-di-t-butyl) phosphite, tris(cyclohexylphenyl) phosphite, 2,2-methylenebis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide, 10-decyloxy-9,10-dihydro-9-oxa-10-phosphaphenanthrene, etc.; diphosphite-based compounds, such as 4,4'-butylidene-bis(3-methyl-6-t-butylphenyl-di-tridecylph osphite), 4,4'-isopropylidene-bis(phenyl-di-alkyl(C12-C15) phosphite), 4,4'-isopropylidene-bis(diphenylmonoalkyl(C12-C15)phosphit e), 1,1,3-tris(2-methyl-4-di-tridecylphosphite-5-t-butylphenyl )butane, tetrakis(2,4-di-t-butylphenyl)-4,4'-biphenylene phosphite, etc.; and the like. Of those, monophosphite-based compounds are preferred.

Examples of the sulfur-based antioxidant include dilauryl 3,3'-thiodipropionate, distearyl 3,3-thiodipropionate, lauryl stearyl 3,3'-thiodipropionate, pentaerythritol-tetrakis-(β-lauryl-thiopropionate), 3,9-bis(2-dodecylthioethyl)-2,4,8,10-tetraoxaspiro[5.5]und ecane, and the like.

These antioxidants can be used solely or in combination of two or more thereof. A compounding amount of the antioxidant is preferably 0.001 parts by mass or more, and more preferably 0.01 parts by mass or more based on 100 parts by mass of the thermoplastic resin. In addition, the compounding amount of the antioxidant is preferably 5 parts by mass or less, and more preferably 1 part by mass or less based on 100 parts by mass of the thermoplastic resin. When the amount of the antioxidant is smaller than 0.001 parts by mass, there is a concern that the sufficient effects are hardly exhibited, whereas even when it is more than 5 parts by mass, remarkable effects are not expected.

In addition, examples of the ultraviolet ray absorber include benzotriazole-based ultraviolet ray absorbers, such as 2-(5-methyl-2-hydroxyphenyl)benzotriazole, 2-[2-hydroxy-3,5-bis(α,α'-dimethylbenzyl)phenyl]-2H-benzot riazole, 2-(3,5-di-t-butyl-2-hydroxyphenyl)benzotriazole, 2-(3-t-butyl-5-methyl-2-hydroxyphenyl)-5-chlorobenzotriazo le, 2-(3,5-di-t-butyl-5-methyl-2-hydroxyphenyl)-5-chlorobenzot riazole, 2-(3,5-di-t-amyl-2-hydroxyphenyl)benzotriazole, 2-(2'-hydroxy-5'-t-octylphenyl)triazole, etc.; hindered amine-based ultraviolet ray absorbers, such as 2,2,6,6-tetramethyl-4-piperidyl benzoate, bis(2,2,6,6-tetramethyl-4-piperidyl)sebacate, bis(1,2,2,6,6-pentamethyl-4-piperidyl)-2-(3,5-di-t-butyl-4 -hydroxybenzyl)-2-n-butylmalonate, 4-(3-(3,5-di-t-butyl-4-hydroxyphenyl)propionyloxy)-1-(2-(3 -(3,5-di-t-butyl-4-hydroxyphenyl)propionyloxy)ethyl)-2,2,6, 6-tetramethylpiperidine, etc.; benzoate-based ultraviolet ray absorbers, such as 2,4-di-t-butylphenyl-3,5-di-t-butyl-4-hydroxybenzoate, hexadecyl-3,5-di-t-butyl-4-hydroxybenzoate, etc.; and the like. An addition amount of such an ultraviolet ray absorber is preferably 10 ppm or more, and more preferably 100 ppm or more on the basis of a mass relative to the thermoplastic resin. In addition, the addition amount of the ultraviolet ray absorber is preferably 50,000 ppm or less, and more preferably 10,000 ppm or less on the basis of a mass relative to the thermoplastic resin. When the addition amount of the ultraviolet ray absorber is smaller than 10 ppm, there is a concern that the sufficient effects are hardly exhibited, whereas even when the addition amount of the ultraviolet ray absorber is more than 50,000 ppm, remarkable effects are not expected. These ultraviolet ray absorbers can also be used in combination of two or more thereof.

Examples of the photostabilizer include hindered amine-based materials, such as "ADEKA STAB LA-57 (a trade name)", manufactured by Adeka Corporation and "TINUVIN 622 (a trade name)", manufactured by Ciba Specialty Chemicals Inc.

In addition, it is also possible to control the adhesion of the resulting laminate to a glass or the like, if desired. As a method of controlling the adhesion, in general, there are exemplified a method of adding an additive to be used as an adhesion modifier of a laminated glass, a method of adding an additive of every sort for modifying the adhesion, and the like. By such a method, an interlayer film for laminated glass containing an adhesion modifier and/or an adhesive of every sort for modifying the adhesion is obtained.

As the adhesion modifier, for example, those disclosed in WO 03/033583A can be used; alkali metal salts and alkaline earth metal salts are preferably used; and examples thereof include salts of potassium, sodium, magnesium, and the like. Examples of the salt include salts of organic acids, such as octanoic acid, hexanoic acid, butyric acid, acetic acid, formic acid, etc.; inorganic acids, such as hydrochloric acid, nitric acid, etc.; and the like.

Though an optimal addition amount of the adhesion modifier varies with the additive to be used, it is preferably adjusted in such a manner that an adhesive force of the resulting laminate to a glass is generally adjusted to 3 or more and 10 or less in a pummel test (described in WO 03/033583A or the like). In particular, in the case where high penetration resistance is required, the addition amount of the adhesion modifier is more preferably adjusted in such a manner that the adhesive force is 3 or more and 6 or less, whereas in the case where high glass scattering preventing properties are required, the addition amount of the adhesion modifier is more preferably adjusted in such a manner that the adhesive force is 7 or more and 10 or less. In the case where high glass scattering preventing properties are required, it is also a useful method that the adhesive modifier is not added.

### [Laminate (interlayer film for laminated glass)]

The laminate of the present invention is composed of a laminate in which the layer A having the above-described properties is laminated between the at least two layers B having the above-described properties. By taking such a constitution, a laminate with excellent sound insulating properties and bending strength is obtained. The laminate of the present invention can be suitably used as an interlayer film for laminated glass.

A production method of the laminate of the present invention is not particularly limited, the laminate may be produced by a method in which after uniformly kneading the resin composition constituting the layer B, the layer B is prepared by a known film formation method, such as an extrusion method, a calender method, a pressing method, a casting method, an inflation method, etc., the layer A is prepared with the resin by the same method, and these layers may be laminated by means of press molding or the like, or the layer B, the layer A, and other necessary layer may be molded by a co-extrusion method.

Among the known film formation methods, in particular, a method of producing a laminate using an extrusion machine is suitably adopted. A resin temperature at the time of extrusion is preferably 150°C or higher, and more preferably 170°C or higher. In addition, the resin temperature at the time of extrusion is preferably 250°C or lower, and more preferably 230°C or lower. When the resin temperature is too high, there is a concern that the used resin causes decomposition, thereby deteriorating the resin. Conversely, when the temperature is too low, discharge from the extrusion machine is not stabilized, resulting in causing a mechanical trouble. In order to efficiently remove a volatile material, it is preferred to remove the volatile material by measure of pressure reduction from a vent port of the extrusion machine.

In the laminate of the present invention, a shear storage modulus at a temperature of 25°C as measured by conducting a complex shear viscosity test under a condition at a frequency of 1 Hz in accordance with JIS K 7244-10 is preferably 1.30 MPa or more, more preferably 2.00 MPa or more, and still more preferably 3.00 MPa or more. In the case where the shear storage modulus under the above-described conditions is 1.30 MPa or more, on the occasion of using the laminate for a laminated glass, the bending strength is improved. On the other hand, from the viewpoints of making the appearance of the interlayer film for laminated glass more favorable and making the production of a laminated glass easy, in the laminate, the shear storage modulus under the above-described conditions is preferably 10.0 MPa or less, more preferably 8.00 MPa or less, and still more preferably 6.00 MPa or less. The laminate in which the shear storage modulus as measured under the above-described conditions is 1.30 MPa or more can be, for example, obtained by laminating a layer A including a composition containing an elastomer having a peak at which a tan δ is maximum, in the range of from -40 to 30°C and a plurality of layers B having a shear storage modulus at a temperature of 25°C of 10.0 MPa or more in such a manner that the layer A is interposed between the at least two layers B.

In the laminate (interlayer film for laminated glass) of the present invention, a shear storage modulus at a temperature of 50°C as measured by conducting a complex shear viscosity test under a condition at a frequency of 1 Hz in accordance with JIS K 7244-10 is preferably 1.30 MPa or more, more preferably 1.50 MPa or more, and still more preferably 2.00 MPa or more. In the case where the above-described shear storage modulus is 1.30 MPa or more, in particular, even when the temperature of the laminate increases to 50°C or higher, the bending strength is improved on the occasion of using the laminate for a laminated glass. On the other hand, from the viewpoints of making the appearance more favorable and making the production of a laminated glass easy, in the laminate, the shear storage modulus under the above-described condition is preferably 6.00 MPa or less, more preferably 4.00 MPa or less, and still more preferably 3.00 MPa or less. The laminate having a shear storage modulus at a temperature of 50°C as measured under the above-described condition of 1.30 MPa or more can be obtained by laminating a layer A including a composition containing an elastomer having a peak at which a tan δ is maximum, in the range of from -40 to 30°C and a plurality of layers B having a shear storage modulus at a temperature of 25°C of 10.0 MPa or more in such a manner that the layer A is interposed between the at least two layers B.

A film thickness of the layer A is 20 µm or more, preferably 25 µm or more, more preferably 30 µm or more, especially preferably 50 µm or more, and most preferably 100 µm or more. In addition, the film thickness of the layer A is preferably 500 µm or less, more preferably 400 µm or less, and still more preferably 300 µm or less. When the film thickness of the layer A is less than 20 µm, the sound insulating properties tend to be lowered, whereas when the film thickness of the layer A is more than 400 µm, there is a tendency that when a laminated glass is prepared, mechanical characteristics, such as penetration resistance, etc., are deteriorated, so that a safety performance as a laminated glass is impaired. In the case where a plurality of the layers A is included in the laminate of the present invention, it is preferred that a total thickness of the entirety of the layer A satisfies the foregoing range.

A film thickness of the layer B is preferably 100 µm or more, more preferably 150 µm or more, and still more preferably 200 µm or more. The film thickness of the layer B is preferably 650 µm or less, more preferably 500 µm or less, still more preferably 350 µm or less, and yet still more preferably 300 µm or less. When the film thickness of the layer B is less than 100 µm, there is a tendency that the bending rigidity of the laminate is small, so that the sound insulating properties in a high-frequency region are lowered, whereas when the film thickness of the layer B is more than 650 µm, there is a tendency that the sound insulating properties are lowered regardless of the frequency region, or a time-dependent change of sound insulating performance is liable to be caused, so that the stability of sound insulating performance is lowered.

A total thickness of the entirety of the layer B is preferably 300 µm or more, more preferably 400 µm or more, still more preferably 500 µm or more, and especially preferably 600 µm or more. The total thickness of the entirety of the layer B is preferably 750 µm or less, more preferably 720 µm or less, and still more preferably 700 µm or less. When the total thickness of the entirety of the layer B is 300 µmm or more, the bending strength of the laminate tends to become large, whereas when the total thickness of the entirety of the layer B is 750 µm or less, the moldability is improved, so that the resulting laminate is liable to be wound up by a roll.

A ratio of the total thickness of the layer A to the total thickness of the layer B ((total thickness of the layer A) / (total thickness of the layer B)) is 1/1 or less, preferably 1/2 or less, and more preferably 1/3 or less. The ratio of the total thickness of the layer A to the total thickness of the layer B is preferably 1/30 or more, more preferably 1/15 or more, still more preferably 1/6.5 or more, and especially preferably 1/5 or more. When the above-described ratio is smaller than 1/30, the sound insulating effect of the laminate tends to become small. On the other hand, when the above-described ratio is more than 1/1, there is a tendency that the bending rigidity of the laminate becomes small, the sound insulating properties in a high-frequency region are lowered, a time-dependent change of sound insulating performance is liable to be caused, so that the stability of sound insulating performance is lowered, or the shear storage modulus of the laminate is lowered, so that the bending strength of the laminate is lowered.

For example, in the case where the thermoplastic elastomer to be contained in the layer A is only one kind (or, even in the case where two or more kinds of thermoplastic elastomers are contained in the layer A, when thermoplastic elastomers in which a difference in the peak temperature of tan δ is less than 5°C are used), when the peak temperature of tan δ of the thermoplastic elastomer layer is -20°C or lower, a film thickness of the thermoplastic elastomer layer is 20 µm or more, and preferably 30 µm or more, and it is preferably 120 µm or less, and more preferably 100 µm or less. When the peak temperature of tan δ of the layer A containing the thermoplastic elastomer is higher than -20°C and -15°C or lower, the film thickness of the layer A containing the thermoplastic elastomer is preferably 50 µm or more, and more preferably 70 µm or more, and it is preferably 200 µm or less, and more preferably 160 µm or less. When the peak temperature of tan δ of the layer A containing the thermoplastic elastomer is higher than -15°C, the film thickness of the layer A containing the thermoplastic elastomer is preferably 80 µm or more, and more preferably 100 µm or more, and it is preferably 300 µm or less, and more preferably 260 µm or less. When the film thickness of the layer A containing the thermoplastic elastomer falls outside the preferred range, there is a tendency that the sound insulating properties at room temperature are lowered, or the bending strength of the resulting laminated glass is lowered.

A film thickness of the layer B is preferably 50 µm or more, and more preferably 100 µm or more. The film thickness of the layer B is preferably 1,000 µm or less, and more preferably 500 µm or less. When the film thickness of the layer B is less than 50 µm, there is a tendency that the bending strength of the laminate becomes small, or the sound insulating properties in a high-frequency region are lowered.

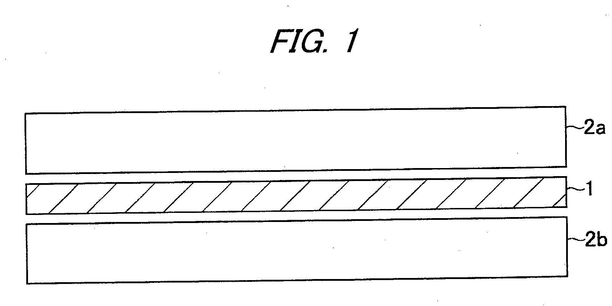

As shown in FIG. 1, the laminate in the present embodiment has a lamination constitution in which a layer A 1 is interposed between a layer B 2a and a layer B 2b. Though the lamination constitution in the laminate is determined depending upon the purpose, it may be, in addition to the lamination constitution of (layer B)/(layer A)/(layer B), a lamination constitution of (layer B)/(layer A)/(layer B)/(layer A), or (layer B) / (layer A) / (layer B) / (layer A) / (layer B) . When the laminate is a two-layer constitution as in (layer A) / (layer B), the sound insulating properties or bending strength of the interlayer film for laminated glass tends to be lowered.

One or more layers may also be included as a layer (referred to as "layer C") other than the layers A and B. For example, lamination constitutions, such as (layer B)/(layer A) / (layer C) / (layer B), (layer B) / (layer A) / (layer B) / (layer C), (layer B) / (layer C) / (layer A) / (layer C) / (layer B), (layer B) / (layer C) / (layer A) / (layer B) / (layer C), (layer B) / (layer A) / (layer C) / (layer B) / (layer C), (layer C) / (layer B) / (layer A) / (layer B) / (layer C), (layer C) / (layer B) / (layer A) / (layer C) / (layer B) / (layer C), (layer C) / (layer B)/(layer C) / (layer A)/(layer C)/(layer B)/(layer C), etc., may be adopted. In addition, in the above-described lamination constitution, the components in the layer C may be identical with or different from each other. This is also applicable to the components in the layer A or the layer B.

It is to be noted that a layer composed of a known resin is usable as the layer C. For example, polyethylene, polypropylene, polyvinyl chloride, polystyrene, polyvinyl acetate, polyurethane, polytetrafluoroethylene, an acrylic resin, a polyamide, a polyacetal, a polycarbonate, a polyester inclusive of polyethylene terephthalate and polybutylene terephthalate, a cyclic polyolefin, polyphenylene sulfide, polytetrafluoroethylene, a polysulfone, a polyether sulfone, a polyarylate, a liquid crystal polymer, a polyimide, and the like can be used. In addition, in the layer C, a plasticizer, an antioxidant, an ultraviolet ray absorber, a photostabilizer, an antiblocking agent, a pigment, a dye, a heat insulating material (for example, an inorganic heat insulating fine particle or an organic heat insulating material each having infrared absorption ability), and the like may also be added, if desired.

The laminate can be given a heat insulating function, and a transmittance at wavelength of 1500 nm can be regulated to 50% or less when the a laminated glass is formed, by incorporating the heat insulating material, for example, an inorganic heat insulating fine particle or a heat insulating compound into the laminate of the present invention. The heat insulating fine particle may be contained in any of the layer A and the layer B, and the layer C to be included, if desired. The heat insulating fine particle may be contained in only any one of the layers, or may be contained in the plural layers. In the case of incorporating the insulating fine particle, from the viewpoint of suppressing the optical unevenness, it is preferred that the insulating fine particle is contained in the at least one layer A. Examples of the heat insulating fine particle include a metal-doped indium oxide, such as tin-doped indium oxide (ITO), etc., a metal-doped tin oxide, such as antimony-doped tin oxide (ATO), etc., a metal-doped zinc oxide, such as aluminum-doped zinc oxide (AZO), etc., a metal element composite tungsten oxide represented by a general formula: MₘWOₙ (M represents a metal element; m is 0.01 or more and 1.0 or less; and n is 2.2 or more and 3.0 or less), zinc antimonate (ZnSb₂O₅), lanthanum hexaboride, and the like. Of those, ITO, ATO, and a metal element composite tungsten oxide are preferred, and a metal element composite tungsten oxide is more preferred. Examples of the metal element represented by M in the metal element composite tungsten oxide include Cs, Tl, Rb, Na, K, and the like, and in particular, Cs is preferred. From the viewpoint of heat insulating properties, m is preferably 0.2 or more, and more preferably 0.3 or more, and it is preferably 0.5 or less, and more preferably 0.4 or less.

A content of the heat insulating fine particle is preferably 0.01% by mass or more, more preferably 0.05% by mass or more, still more preferably 0.1% by mass or more, and especially preferably 0.2% by mass or more relative to the whole of the resins used for the layers constituting the laminate. In addition, the content of the heat insulating fine particle is preferably 5% by mass or less, and more preferably 3% by mass or less. When the content of the heat insulating fine particle is more than 5% by mass, there is a concern that the transmittance of visible rays is influenced. From the viewpoint of transparency of the laminate, an average particle diameter of the heat insulating fine particle is preferably 100 nm or less, and more preferably 50 nm or less. It is to be noted that the average particle diameter of the heat insulating particle as referred to herein means one measured by a laser diffraction instrument.

Examples of the heat insulating compound include phthalocyanine compounds, naphthalocyanine compounds, and the like. From the viewpoint of further improving the heat insulating properties, it is preferred that the heat insulating compound contains a metal. Examples of the metal include Na, K, Li, Cu, Zn, Fe, Co, Ni, Ru, Rh, Pd, Pt, Mn, Sn, V, Ca, Al, and the like, with Ni being especially preferred.

A content of the heat insulating compound is preferably 0.001% by mass or more, more preferably 0.005% by mass or more, and still more preferably 0.01% by mass or more relative to the whole of the resins used for the layers constituting the laminate. In addition, the content of the heat insulating compound is preferably 1% by mass or less, and more preferably 0.5% by mass or less. When the content of the heat insulating compound is more than 1% by mass, there is a concern that the transmittance of visible rays is influenced.

In addition, it is preferred that a concave and convex structure, such as a melt fracture, an embossing, etc., is formed on the surface of the laminate of the present invention by a conventionally known method. A shape of the melt fracture or embossing is not particularly limited, and those which are conventionally known can be adopted.

In addition, a total film thickness of the laminate is preferably 20 µm or more, and more preferably 100 µm or more. In addition, the total film thickness of the laminate is preferably 10,000 µm or less, and more preferably 3,000 µm or less. When the film thickness of the laminate is too thin, there is a concern that in preparing a laminated glass, lamination cannot be achieved well. The film thickness of the laminate being too thick results in an increase of the costs, and hence, such is not preferred.

### [Laminated glass]

When the constitution of the laminate of the present invention is included in the inside of a glass, it is possible to obtain a laminated glass with excellent bending strength, a laminated glass with excellent sound insulating properties, particularly sound insulating properties in a high-frequency region, a laminated glass with excellent sound insulating properties and stability of sound insulating performance, and a laminated glass with excellent sound insulating properties over a broad temperature range.

For that reason, the laminated glass of the present invention can be suitably for a windshield for automobile, a side glass for automobile, a sunroof for automobile, a rear glass for automobile, or a glass for head-up display; a building member for a window, a wall, a roof, a sunroof, a sound insulating wall, a display window, a balcony, a handrail wall, or the like; a partition glass member of a conference room, etc.; and the like. In the case where the laminated glass including the constitution of the laminate of the present invention in the inside thereof is applied to a glass for head-up display, a cross-sectional shape of the laminate to be used is preferably a shape in which an end surface side of one side is thick, whereas an end surface side of the other side is thin. In that case, the cross-sectional shape may be a shape in which the whole is a wedge shape in such a manner that it becomes gradually thin from the end surface side of one side toward the end surface side of the other side, or may be a shape in which a part of the cross section is a wedge shape such that the thickness is identical until an arbitrary position between the end surface of one side and the end surface of the other side, and it becomes gradually thin from the foregoing arbitrary position toward the end surface of the other side.

In general, two sheets of glass are used for the laminated glass of the present invention. Though a thickness of the glass constituting the laminated glass of the present invention is not particularly limited, it is preferably 100 mm or less. In addition, since the laminate of the present invention is excellent in bending strength, even when a laminated glass is prepared by using a thin sheet glass having a thickness of 2.8 mm or less, weight reduction of the laminated glass can be realized without impairing the strength of the laminated glass. From the viewpoint of weight reduction, with respect to the thickness of the glass, a thickness of at least one sheet of glass is preferably 2.8 mm or less, more preferably 2.5 mm or less, still more preferably 2.0 mm or less, and especially preferably 1.8 mm or less. In particular, by regulating a thickness of the glass of one side to 1.8 mm or more, regulating a thickness of the glass of the other side to 1.8 mm or less, and regulating a difference in thickness between the respective glasses to 0.2 mm or more, a laminated glass in which thinning and weight reduction have been realized without impairing the bending strength can be prepared. The difference in thickness between the respective glasses is preferably 0.5 mm or more.

### (Sound insulating properties)

The sound insulating properties of the laminated glass can be evaluated in terms of a loss factor obtained by a damping test by a central exciting method. The damping test is a test for evaluating what value does the loss factor take by the frequency or temperature. When the frequency is fixed, a loss factor that becomes maximum in a certain temperature range is called a maximum loss factor. In accordance with the damping measurement by a central exciting method, a value of loss factor relative to a frequency at a fixed temperature is obtained. In order to obtain a maximum loss factor, the measurement is carried out by varying the temperature to 0, 10, 20, 30, 40, and 50°C, respectively, and a linear form of the loss factor relative to the temperature at a fixed frequency can be obtained from the obtained value. The maximum loss factor is an index expressing a virtue of damping, and specifically, it is an index expressing how fast the bending vibration generated in a platy material decays. Namely, the maximum loss factor is an index of sound insulating properties, and it may be said that the higher the maximum loss factor of a laminated glass, the higher the sound insulating properties of the laminated glass are.

In the present embodiment, in the case where a laminated glass is prepared by using the laminate as an interlayer film for laminated glass, and the resulting laminated glass is subjected to a damping test by a central exciting method, the maximum loss factor at a frequency of 2,000 Hz and at a temperature of 0 to 50°C is preferably 0.20 or more, more preferably 0.25 or more, and still more preferably 0.28 or more. In the case where the maximum loss factor under the above-described conditions is less than 0.20, the sound insulating properties of the laminated glass are poor, so that the resulting laminated glass is not suited for an application aiming at the sound insulation. The laminated glass in which the maximum loss factor as measured under the above-described conditions is 0.20 or more can be obtained by laminating a layer A including a composition containing an elastomer having a peak at which a tan δ is maximum, in the range of from -40 to 30°C and a plurality of layers B having a shear storage modulus at a temperature of 25°C as measured by conducting a complex shear viscosity test of 10.0 MPa or more in such a manner that the layer A is interposed between the at least two layers B.

### (Sound insulating properties in a high-frequency region)

Here, from the viewpoint that a laminated glass capable of suppressing a lowering of the sound insulating performance in a high-frequency region to be caused due to a coincidence phenomenon, when the laminate of the present invention is interposed between two sheets of float glass having a length of 300 mm, a width of 25 mm, and a thickness of 1.9 mm to prepare a laminated glass, a loss factor at a quaternary resonance frequency as measured at 20°C by a central exciting method is preferably 0.2 or more, more preferably 0.4 or more, and still more preferably 0.6 or more. When the loss factor at a quaternary resonance frequency is less than 0.2, the sound insulating properties tend to become not sufficient. In order to regulate the loss factor at a quaternary resonance frequency to 0.2 or more, for example, it is possible to achieve such by a method of using a material in which a content of the hard segment is a prescribed proportion or more (for example, 14% by mass or more) relative to the thermoplastic elastomer constituting the layer A and regulating a ratio of the total thickness of the layer A to the total thickness of the layer B serving as a protective layer of the laminate to a prescribed portion or more (for example, 1/6.5 or more), or other method.

The loss factor at a quaternary resonance frequency can be, for example, measured by the following method. The laminate is interposed between two sheets of commercially available float glass (300 mm in length × 25 mm in width × 1.9 mm in thickness), and a laminated glass is prepared by a vacuum bagging method (condition: the temperature is increased from 30°C to 160°C for 60 minutes, followed by holding at 160°C for 30 minutes). Thereafter, the center of the laminated glass is fixed to a tip portion of an exciting force detector built in an impedance head of an exciter of a mechanical impedance instrument, a vibration is given to the center of the laminated glass at a frequency in the range of from 0 to 10,000 Hz, and an exciting force and an acceleration waveform at this point are detected, thereby conducting a damping test of the laminated glass by a central exciting method. A mechanical impedance at an exciting point (the center of the laminated glass to which a vibration is given) is determined on the basis of the obtained exciting force and a speed signal obtained by integrating an acceleration single; and in an impedance curve obtained by setting the frequency on the abscissa and the mechanical impedance on the ordinate, respectively, the loss factor of the laminated glass at a quaternary resonance frequency can be determined from a frequency expressing a peak of the quaternary mode and a half-width value.

In addition, from the viewpoint of preparing a laminated glass capable of suppressing a lowering of the sound insulating performance in a high-frequency region to be caused due to a coincidence phenomenon, when the laminate of the present invention is interposed between two sheets of float glass having a length of 300 mm, a width of 25 mm, and a thickness of 1.9 mm to prepare a laminated glass, a bending rigidity at the quaternary resonance frequency as calculated in accordance with ISO 16940 (2008) is preferably 150 N·m or more, and more preferably 200 N·m or more. When the bending rigidity at a quaternary resonance frequency is less than 150 N·m, the coincidence phenomenon is liable to be generated, so that the sound insulating properties in a high-frequency region tends to be lowered. In order to regulate the bending rigidity at a quaternary resonance frequency to 150 N·m or more, for example, it is possible to achieve such by a method of using a material in which a content of the hard segment is a prescribed proportion or more (for example, 14% by mass or more) relative to the thermoplastic elastomer constituting the layer A and regulating a ratio of the total thickness of the layer A to the total thickness of the layer B serving as a protective layer of the laminate to a prescribed portion or less (for example, 1/1 or less), or other method.

In addition, an acoustic transmission loss at 6,300 Hz as calculated in accordance with ISO 16940 (2008) by using the loss factor and bending rigidity at a quaternary resonance frequency is preferably 43 dB or more, and more preferably 45 dB or more. An acoustic transmission loss at 8,000 Hz is preferably 50 dB or more, and more preferably 53 dB or more. An acoustic transmission loss at 10,000 Hz is preferably 56 dB or more, and more preferably 60 dB or more.

### (Stability of sound insulating performance)

Here, from the viewpoint of preparing a laminated glass in which a time-dependent change of sound insulating performance after preparation of the laminated glass is small and which is excellent in stability of sound insulating performance, the laminate of the present invention is preferably a laminate having the layer A located between the at least two layers B and satisfying such that with respect to a laminated glass prepared by interposing the laminate of the present invention between glasses having a thickness 2 mm and holding for contact bonding under conditions at a temperature of 140°C and at a pressure of 1 MPa for 60 minutes, a loss factor α at 20°C and at 2,000 Hz as measured by a damping test by a central exciting method is 0.2 or more, and with respect to the laminated glass after holding at 18°C for one month, a ratio β/α of a loss factor β at 20°C and at 2,000 Hz as measured by a damping test by a central exciting method to the loss factor α is 0.70 or more; or a laminate having the layer A located between the at least two layers B and satisfying such that with respect to a laminated glass containing the laminate after holding the laminated glass at 18°C for one month, a loss factor β at 20°C and at 2,000 Hz as measured by a damping test by a central exciting method is 0.2 or more, and with respect to a laminated glass after heating the laminated glass having been held at 18°C for one month at 100°C for 24 hours, a ratio γ/β of a loss factor γ at 20°C and at 2,000 Hz as measured by a damping test by a central exciting method to the loss factor β is 0.80 or more and 1.30 or less.

As a method of obtaining a laminate capable of satisfying the prescribed requirements for the laminated glass regarding the loss factors α, β, and γ as measured by a damping test by a central exciting method as described later, for example, there are exemplified the following methods of constituting the laminate.

A first constitution is a constitution in which the layer A is a layer containing a block copolymer having at least one aromatic vinyl polymer block and at least one aliphatic unsaturated hydrocarbon polymer block, or a hydrogenated product of the copolymer; the layer B is a layer containing an ionomer resin or a polyvinyl acetal resin and not containing a plasticizer or containing a plasticizer, and in the case of containing a plasticizer, a content of the plasticizer is more than 0 and 30 parts by mass or less (preferably 25 parts by mass or less, more preferably 20 parts by mass or less, still more preferably 15 parts by mass or less, and especially preferably 10 parts by mass or less) based on 100 parts by mass of the resin; and a ratio of a total thickness of the layer A to a total thickness of the layer B ((total thickness of the layer A) / (total thickness of the layer B)) is in the range of from 1/30 to 1/3.

In addition, a second constitution is a laminate having the layer A located between the at least two layers B and having a constitution in which the layer A is a layer containing a block copolymer having at least one aromatic vinyl polymer block and at least one aliphatic unsaturated hydrocarbon polymer block, or a hydrogenated product of the copolymer; and the layer B is a layer containing an ionomer resin or a polyvinyl acetal resin and not containing a plasticizer or containing a plasticizer, and in the case of containing a plasticizer, a content of the plasticizer is more than 0 and 25 parts by mass or less (preferably 20 parts by mass or less, more preferably 15 parts by mass or less, still more preferably 10 parts by mass or less, and especially preferably 3 parts by mass or less) based on 100 parts by mass of the resin. In this case, a ratio of a total thickness of the layer A to a total thickness of the layer B is preferably in the range of from 1/30 to 1/1. In addition, as the block copolymer, it is preferred to use the block copolymer as explained in the section of the layer A.

It is to be noted that on the occasion of adopting these constitutions, it is preferred to use, as the ionomer resin or polyvinyl acetal resin, the ionomer resin or polyvinyl acetal resin as explained in the section of the layer B. These constitutions merely exemplify the constitution of the laminate of the present invention, and the laminate of the present invention is not limited to these constitutions. In addition, the plasticizer which may be contained in the layer B to be used for these constitutions is preferably an ester-based plasticizer or an ether-based plasticizer each having a melting point of 30°C or lower or being amorphous and also having a hydroxyl value of 15 to 450 mgKOH/g or less.

In the laminated glass obtained from the laminate of the present invention, which is prepared by interposing the laminate between two sheets of glass having a thickness 2 mm and contact bonding under conditions at a temperature of 140°C and at a pressure of 1 MPa for 60 minutes, the laminated glass after preparation (for example, immediately after preparation) has a loss factor α at 20°C and at 2,000 Hz as measured by a damping test by a central exciting method of 0.2 or more, preferably 0.25 or more, and more preferably 0.30 or more. When the loss factor α under the above-described conditions is 0.2 or more, the laminated glass has thoroughly high sound insulating properties. It is to be noted that the terms "immediately after preparation of the laminated glass" mean a time within 2 hours after the laminated glass is prepared and finished with cooling to room temperature.

In addition, with respect to the laminated glass after holding the prepared laminated glass at 18°C for one month, a ratio β/α of a loss factor β at 20°C and at 2,000 Hz as measured by a damping test by a central exciting method to the loss factor α is preferably 0.70 or more, more preferably 0.80 or more, and still more preferably 0.87 or more. In addition, β/α is preferably 1.20 or less, and more preferably 1.10 or less. When β/α is 0.70 or more, the stability of sound insulating performance is improved. On the other hand, when β/α is 1.20 or less, the holding time can be shortened.

In addition, with respect to a laminated glass after heating the laminated glass having been held at 18°C for one month at 100°C for 24 hours, a ratio γ/β of a loss factor γ at 20°C and at 2,000 Hz as measured by a damping test by a central exciting method to the loss factor β is preferably 0.80 or more, more preferably 0.87 or more, and still more preferably 0.90 or more. In addition, γ/β is 1.30 or less, preferably 1.20 or less, and more preferably 1.10 or less. When γ/β is 0.80 or more, or 1.30 or less, the stability of sound insulating performance can be improved, and the holding time can be shortened.

### (Sound insulating properties over a broad temperature range)

Here, from the viewpoint of obtaining a laminated glass with excellent sound insulating properties over a broad temperature range, a maximum loss factor in a tertiary mode as measured by a central exciting method is preferably 0.2 or more, more preferably 0.23 or more, and still more preferably 0.25 or more. When the loss factor in a tertiary mode is less than 0.2, the sound insulating properties tend to be not sufficient. In order to regulate the loss factor in a tertiary mode to 0.2 or more, for example, it is possible to achieve such by a method of using, as an internal layer (layer A) serving as a sound insulating layer, a layer having a peak at which a tan δ as measured by conducting a complex shear viscosity test under a condition at a frequency of 1 Hz in accordance with JIS K 7244-10 is maximum, in the range of -40°C or higher and 30°C or lower (the peak will be sometimes abbreviated as "peak temperature of tan δ") or, as the thermoplastic elastomer constituting the layer A, an elastomer in which a content of the hard segment is a prescribed portion or less (for example, 50% by mass or less), and regulating a thickness of the internal layer (layer A) serving as a sound insulating layer to 20 µm or more, or other method. In addition, a loss factor at 20°C is preferably 0.2 or more, and more preferably 0.25 or more. When the loss factor at 20°C is less than 0.2, the sound insulating properties at room temperature tend to be not sufficient. In order to regulate the loss factor at 20°C to 0.2 or more, for example, there is exemplified a method of allowing a balance between the peak temperature of tan δ of the layer A and the thickness of the layer A to fall within an appropriate range.

The loss factor in a tertiary mode can be, for example, measured by the following method. The laminate is interposed between two sheets of commercially available float glass (50 mm in width × 300 mm in length × 3 mm in thickness), and a laminated glass is prepared by a vacuum bagging method (condition: the temperature is increased from 30°C to 160°C for 60 minutes, followed by holding at 160°C for 30 minutes) . Thereafter, the center of the laminated glass is fixed to a tip portion of an exciting force detector built in an impedance head of an exciter of a mechanical impedance instrument, a vibration is given to the center of the laminated glass at a frequency in the range of from 0 to 8,000 Hz, and an exciting force and an acceleration waveform at this point are detected, thereby conducting a damping test of the laminated glass by a central exciting method. A mechanical impedance at an exciting point (the center of the laminated glass to which a vibration is given) is determined on the basis of the obtained exciting force and a speed signal obtained by integrating an acceleration single; and the loss factor of the laminated glass can be determined from a frequency expressing a peak of the tertiary mode and a half-width value.

A width of the temperature range where the loss factor is 0.2 or more can be determined from the loss factor determined by the above-described method. The width of the temperature range where the loss factor is 0.2 or more is preferably 15°C or more, more preferably 20°C or more, still more preferably 23°C or more, and especially preferably 25°C or more. When the width of the temperature range where loss factor is 0.2 or more is less than 15°C, the sound insulting properties over a broad temperature range cannot be revealed, so that the sound insulating properties of the laminated glass in a low-temperature region and/or a high-temperature region tend to be lowered.

Examples of a method of widening the width of the temperature range where the loss factor is 0.2 or more include a method of optimizing the thickness of the internal layer (layer A) according to the kind of the thermoplastic elastomer; a method of using a mixture of two or more thermoplastic elastomers having a different peak temperature of tan δ from each other as the internal layer (layer A) ; a method in which the internal layer (layer A) is composed of two or more layers, and a thermoplastic elastomer having a peak temperature of tan δ different from a peak temperature of tan δ of a thermoplastic elastomer used for the at least one layer is used for the layer different from the foregoing layer; a method in which as two or more thermoplastic elastomers having a different peak temperature of tan δ from each other, those having a large difference in the peak temperature of tan δ are used; and the like. In general, even in the case of using a mixture of two kinds of elastomers, those two elastomers are compatibilized with each other to exhibit one peak; however, in the case where two peaks are observed, any one of the peak temperatures of tan δ may be included in the range prescribed in the present invention.

### (Heat insulating properties)

In the case where the laminated glass of the present invention includes a heat insulating material, a transmittance at a wavelength of 1, 500 nm is preferably 50% or less, and more preferably 20% or less. When the transmittance at a wavelength of 1,500 nm is 50% or less, there is a tendency that a shield factor of infrared rays is high, so that heat insulating performance of the laminated glass is improved.

### (Haze)

In the laminated glass of the present invention, when the laminate having a thickness of 0.75 mm is laminated between two sheets of float glass having a thickness of 2 mm, a haze thereof is preferably less than 5, preferably less than 3, still preferably less than 2, especially preferably less than 1, and most preferably less than 0.5. When the haze is 5 or more, the transparency of the laminated glass tends to be lowered. The haze of the laminated glass can be, for example, measured in accordance with JIS K 7136.

### (Breaking strength)

In a laminated glass obtained by interposing the laminate of the present invention between two sheets of float glass of 26 mm in length × 76 mm in width × 2.8 mm in thickness, a breaking strength thereof in a three-point bending test (temperature: 20°C, inter-fulcrum distance: 55 mm, test speed: 0.25 mm/min) is preferably 0.3 kN or more, more preferably 0.5 kN or more, and still more preferably 0.6 kN or more. When the breaking strength as measured under the above-described conditions is less than 0.3 kN, the strength of the laminated glass tends to be lowered.

### (Production method of laminated glass)

It is possible to produce the laminated glass of the present invention by a conventionally known method. Examples thereof include a method of using a vacuum laminator, a method of using a vacuum bag, a method of using a vacuum ring, a method of using a nip roll, and the like. In addition, a method in which after temporary contact bonding, the resultant is put into an autoclave process can also be supplementarily conducted.

In the case of using a vacuum laminator, for example, a known instrument which is used for production of a solar cell is used, and the assembly is laminated under a reduced pressure of 1 × 10⁻⁶ MPa or more and 3 × 10⁻² MPa or less at a temperature of 100°C or higher and 200°C or lower, and especially 130°C or higher and 170°C or lower. The method of using a vacuum bag or a vacuum ring is, for example, described in the specification of European Patent No. 1235683, and for example, the assembly is laminated under a pressure of about 2 × 10⁻² MPa at 130°C or higher and 145°C or lower.

With respect to the preparation method of a laminated glass, in the case of using a nip roll, for example, there is exemplified a method in which after conducting first temporary contact bonding at a temperature of a flow starting temperature of the polyvinyl acetal resin or lower, temporary contact bonding is further conducted under a condition close to the flow starting temperature. Specifically, for example, there is exemplified a method in which the assembly is heated at 30°C or higher and 100°C or lower by an infrared heater or the like, then deaerated by a roll, and further heated at 50°C or higher and 150°C or lower, followed by conducting contact bonding by a roll to achieve bonding or temporary bonding.

In addition, a laminated glass may also be prepared by gathering and laminating glasses in which the layer B is coated on the both surfaces of the layer A such that the constitution of the laminate of the present invention is included in the inside of the laminated glass.

Though the autoclave process which is supplementarily conducted after the temporary contact bonding is variable depending upon the thickness or constitution of a module, it is, for example, carried out under a pressure of 1 MPa or more and 15 MPa or less at a temperature of 120°C or higher and 160°C or lower for 0.5 hours or more and 2 hours or less.

The glass to be used on the occasion of preparing a laminated glass is not particularly limited. Inorganic glasses, such as a float sheet glass, a polished sheet glass, a figured glass, a wired sheet glass, a heat-ray absorbing glass, etc., and besides, conventionally known organic glasses, such as polymethyl methacrylate, polycarbonate, etc., and the like can be used. These glasses may be any of colorless, colored, transparent, or non-transparent glasses. These glasses may be used solely, or may be used in combination of two or more thereof.

### EXAMPLES

The present invention is hereunder specifically described by reference to Examples and Comparative Examples, but it should not be construed that the present invention is limited to these Examples. Examples 11 and 24 are according to the present invention. Examples 1 to 10, 12 to 23 and 25 to 52 are Reference Examples.

It is to be noted that in the following Examples and Comparative Examples, as a used polyvinyl butyral resin (PVB), one obtained by acetalizing polyvinyl alcohol having a viscosity average polymerization degree the same as the targeted viscosity average polymerization degree (viscosity average polymerization degree as measured in accordance with the "Testing Methods for Polyvinyl Alcohol" of JIS K 6726) with n-butyl aldehyde in the presence of a hydrochloric acid catalyst was used.

The following physical properties evaluations (1 to 5) were conducted with respect to the layers A, layers B, laminates, or laminated glasses obtained in the following Examples 1 to 14 and 45 to 48, and Comparative Examples 2, 3 and 6.

### 1. Physical properties evaluation (shear storage modulus of laminate, shear storage modulus of layer B, and peak height and peak temperature of tan δ of elastomer in layer A)

A strain control type dynamic viscoelasticity instrument (manufactured by Rheomix, ARES) having a diameter of a disk of 8 mm was used as a parallel-plate oscillatory rheometer in accordance with JIS K 7244-10. Laminates (thickness: 0.76 mm), single-layered sheets of layer A (thickness: 0.76 mm), and single-layered sheets of layer B (thickness: 0.76 mm) obtained in the following Examples and Comparative Examples were each used as a disk-shaped test sheet. It is to be noted that each of the above-described sheets after storing at a temperature 20°C and at a humidity of 60% RH for 24 hours or more was used. A gap between two flat plates was completely filled by the test sheet. A vibration with a strain amount of 1.0% was given to the test sheet at a frequency of 1 Hz, and a measurement temperature was increased at a constant rate of 1°C/min from -40°C to 100°C. The temperatures of the test sheet and the disk were kept until measured values of shear loss modulus and shear storage modulus did not change. The results of shear storage modulus of the laminate, shear storage modulus of the layer B, and peak height and peak temperature of tan δ of elastomer in the layer A as measured are shown in Tables 1, 2, and 3.

### 2. Physical properties evaluation (lamination aptitude of laminate)

Each of the laminates obtained in the Examples and Comparative Examples was interposed by two sheets of commercially available float glass (1,100 mm in length × 1,300 mm in width × 3.2 mm in thickness), and a laminated glass was prepared by using a vacuum laminator (manufactured by Nisshinbo Mechatronics Inc., 1522N) under the following conditions. The lamination aptitude of the used laminate was judged according to the following criteria. The evaluation results of the lamination aptitude are shown in Tables 1, 2, and 3.

### <Conditions>

Hot plate temperature: 165°C
Evacuation time: 12 minutes
Pressing pressure: 50 kPa
Pressing time: 17 minutes

### <Judgement criteria>

A: Defects, such as bubbling, etc., are not observed on the appearance, and adherence is good.
B: Though defects, such as bubbling, etc., are slightly observed on the appearance, but there is no problem in adherence.
C: Though defects, such as bubbling, etc., are observed on the appearance, but there is no problem in adherence.
D: Defects, such as bubbling, etc., are observed on the appearance, and adherence is bad.
E: Defects, such as bubbling, etc., are observed over the entirety of the laminated glass on the appearance, and adherence is bad.

### 3. Physical properties evaluation (maximum loss factor of laminated glass)

Each of the laminates obtained in the Examples and Comparative Examples was interposed between two sheets of commercially available float glass (50 mm in length × 300 mm in width × 2.8 mm in thickness), and a laminated glass was prepared by a vacuum bagging method (condition: the temperature was increased from 30°C to 160°C for 60 minutes, followed by holding at 160°C for 30 minutes) . Thereafter, the center of the laminated glass was fixed to a tip portion of an exciting force detector built in an impedance head of an exciter (power amplifier/model 371-A) of a mechanical impedance instrument (manufactured by Ono Sokki Co., Ltd., mass cancel amplifier: MA-5500, channel data station: DS-2100) . A vibration was given to the center of the laminated glass at a frequency in the range of from 0 to 8,000 Hz, and an exciting force and an acceleration waveform at this point were detected, thereby conducting a damping test of the laminated glass by a central exciting method. A mechanical impedance at an exciting point (the center of the laminated glass to which a vibration was given) was determined on the basis of the obtained exciting force and a speed signal obtained by integrating an acceleration single; and in an impedance curve obtained by setting the frequency on the abscissa and the mechanical impedance on the ordinate, respectively, a loss factor of the laminated glass was determined from a frequency expressing a peak and a half-width value. In the damping measurement by the central exciting method, a value of the loss factor relative to the frequency at a fixed temperature is obtained. In order to obtain a maximum loss factor, the measurement was carried out by varying the temperature to 0, 10, 20, 30, 40, and 50°C, respectively, and a linear form of the loss factor relative to the temperature at a fixed frequency was obtained from the obtained values. The measurement results of the maximum loss factor are shown in Tables 1, 2, and 3.

### 4. Physical properties evaluation (breaking strength of laminated glass)

Each of the laminates obtained in the Examples and Comparative Examples was interposed between two sheets of commercially available float glass (26 mm in length × 76 mm in width × 2.8 mm in thickness), and a laminated glass was prepared by a vacuum bagging method (condition: the temperature was increased from 30°C to 160°C for 60 minutes, followed by holding at 160°C for 30 minutes). Thereafter, a three-point bending test of the laminated glass was carried out by using an autograph AG-5000B, and a breaking strength of the laminated glass at a temperature of 20°C and at a film inter-fulcrum distance of 55 mm was measured. It is to be noted that the measurement was conducted at a test speed of 0.25 mm/min. The measurement results of the breaking strength are shown in Tables 1, 2, and 3.

### 5. Physical properties evaluation (evaluation of heat insulating performance of laminated glass)

Each of the laminates obtained in the Examples and Comparative Examples was interposed between two sheets of commercially available float glass (26 mm in length × 76 mm in width × 2.8 mm in thickness), and a laminated glass was prepared by a vacuum bagging method (condition: the temperature was increased from 30°C to 160°C for 60 minutes, followed by holding at 160°C for 30 minutes). Thereafter, a wavelength transmittance in ultraviolet, visible, and near-infrared regions was measured by using a spectral photometer U-4100 (manufactured by Hitachi High-Tech Science Corporation) It is to be noted that the measurement was conducted at a temperature of 20°C. The measurement results of the transmittance at a wavelength of 1,500 nm are shown in Tables 1, 2, and 3.

### (Example 1)

A linear hydrogenated styrene-isoprene-styrene triblock copolymer (completely hydrogenated product) composed of 12% by mass of a styrene unit and 88% by mass of an isoprene unit and having a temperature of a peak at which a peak height of tan δ was maximum of -22.6°C (a value in the case of giving a vibration at a frequency of 1 Hz and increasing a measurement temperature at a constant rate of 1°C/min from -40°C to 100°C) was used for the layer A, and polyvinyl butyral having a viscosity average polymerization degree of about 1,000, a degree of acetalization of 70 mol%, and a content of a vinyl acetate unit of 0.9 mol% was used for the layer B. These resins were molded into the layer B having a thickness of 300 µm and the layer A having a thickness of 160 µm, respectively by an extrusion molding method. The layer A was interposed between two layers of the layer B and press molded at 150°C, thereby preparing a laminate made of a composite film of a three-layer constitution and having a thickness of 0.76 mm. The results of the above-described physical properties evaluations are shown in Table 1. In addition, a temperature transition of each of a shear storage modulus 10 and a tan δ 11 of the resulting laminate is shown in FIG. 2. It is to be noted that graduations of the left-side ordinate represent a shear storage modulus of the laminate, and graduations of the right-side ordinate represent a loss tangent (tan δ).

### (Examples 2 to 5)

Laminates were prepared by using the same method as in Example 1, except that 3GO (triethylene glycol di (2-ethylhexanoate)) was used as a plasticizer for the layer B in an amount shown in Table 1 based on 100 parts by mass of the polyvinyl butyral resin having a viscosity average polymerization degree of about 1,000, a degree of acetalization of 70 mol%, and a content of a vinyl acetate unit of 0.9 mol%, and then subjected to the physical properties evaluations. The results of the physical properties evaluations are shown in Table 1.

### (Example 6)

A laminate was prepared by using the same method as in Example 1, except that the film thickness of the layer A was changed to 50 µm, and that the film thickness of the layer B was changed to 355 µm, and then subjected to the physical properties evaluations. The results of the physical properties evaluations are shown in Table 1.

### (Example 7)

A laminate was prepared by using the same method as in Example 1, except that the film thickness of the layer A was changed to 300 µm, and that the film thickness of the layer B was changed to 230 µm, and then subjected to the physical properties evaluations. The results of the physical properties evaluations are shown in Table 1.

### (Example 8)

A laminate was prepared by using the same method as in Example 1, except that a linear hydrogenated styrene-isoprene-styrene triblock copolymer composed of 20% by mass of a styrene unit and 80% by mass of an isoprene unit and having a temperature of a peak at which a peak height of tan δ was maximum of -5 . 2°C (a value in the case of giving a vibration at a frequency of 1 Hz and increasing a measurement temperature at a constant rate of 1°C/min from -40°C to 100°C) was used as an elastomer for the layer A, and then subj ected to the physical properties evaluations. The results of the physical properties evaluations are shown in Table 1.

### (Example 9)

A laminate was prepared by using the same method as in Example 1, except that a polyvinyl butyral resin having a viscosity average polymerization degree of 600, a degree of acetalization of 70 mol%, and a content of a vinyl acetate unit of 0.9 mol% was used for the layer B in place of the polyvinyl butyral resin having a viscosity average polymerization degree of about 1,000, and then subjected to the physical properties evaluations. The results of the physical properties evaluations are shown in Table 1.

### (Example 10)

A laminate was prepared by using the same method as in Example 1, except that a polyvinyl butyral resin having a viscosity average polymerization degree of 1, 700, a degree of acetalization of 70 mol%, and a content of a vinyl acetate unit of 0.9 mol% was used for the layer B in place of the polyvinyl butyral resin having a viscosity average polymerization degree of about 1,000, and then subjected to the physical properties evaluations. The results of the physical properties evaluations are shown in Table 1.

### (Example 11)

A laminate was prepared by using the same method as in Example 1, except that an ionomer film (manufactured by E. I. du Pont de Nemours and Company, SentryGlas^{®} Interlayer, thickness: 300 µm) was used for the layer B, and then subjected to the physical properties evaluations. The results of the physical properties evaluations are shown in Table 1.

### (Example 12)

A laminate was prepared by using the same method as in Example 1, except that cesium-containing composite tungsten oxide was added to the layer A in an amount of 1.2% by weight relative to the linear hydrogenated styrene-isoprene-styrene triblock copolymer (completely hydrogenated product), and then subjected to the physical properties evaluations. The results of the physical properties evaluations are shown in Table 1. It is to be noted that YMDS-874, manufactured by Sumitomo Metal Mining Co., Ltd. was used as the cesium-containing composite tungsten oxide.

### (Example 13)

A laminated glass was prepared by using the same method as in Example 1, except that two sheets of commercially available float glass (26 mm in length × 76 mm in width × 1.6 mm in thickness) were used in place of the two sheets of commercially available float glass having a thickness of 2.8 mm, and then subjected to the physical properties evaluations. The results of the physical properties evaluations are shown in Table 3.

### (Example 14)

A laminated glass was prepared by using the same method as in Example 1, except that one sheet of commercially available float glass (26 mm in length × 76 mm in width × 2.1 mm in thickness) and one sheet of commercially available float glass (26 mm in length × 76 mm in width × 1.3 mm in thickness) were used in place of the two sheets of commercially available float glass having a thickness of 2.8 mm, and then subjected to the physical properties evaluations. The results of the physical properties evaluations are shown in Table 3.

### (Example 45)

A laminate was prepared by using the same method as in Example 1, except that 30 parts by mass of 3GO was added based on 100 parts by mass of the polyvinyl acetal resin serving as the layer B, and then subjected to the physical properties evaluations. The results of the physical properties evaluations are shown in Table 2.

### (Comparative Example 2)

A laminate was prepared by using the same method as in Example 1, except that a urethane resin (manufactured by Kuraray Co., Ltd., KURAMIRON U1780) was used for the layer A in place of the linear hydrogenated styrene·isoprene·styrene triblock copolymer, and then subjected to the physical properties evaluations. The results of the physical properties evaluations are shown in Table 2.

### (Comparative Example 3)

A laminate was prepared by using the same method as in Example 1, except that a styrene-based elastomer (manufactured by Kuraray Co., Ltd., SEPTON 8007) was used for the layer A in place of the linear hydrogenated styrene-isoprene-styrene triblock copolymer, and then subjected to the physical properties evaluations. The results of the physical properties evaluations are shown in Table 2.

### (Example 46)

A laminate was prepared by using the same method as in Example 1, except that the film thickness of the layer A was changed to 500 µm, and that the film thickness of the layer B was changed to 130 µm, and then subjected to the physical properties evaluations. The results of the physical properties evaluations are shown in Table 2.

### (Example 47)

A laminate was prepared by using the same method as in Example 1, except that a layer composed of a composition containing 3GO in an amount of 60 parts by mass based on 100 parts by mass of polyvinyl butyral having a viscosity average polymerization degree of 1,700, a degree of acetalization of 75 mol%, and a content of a vinyl acetate unit of 0.9 mol% was used as the layer A in place of the linear hydrogenated styrene-isoprene-styrene copolymer, and that 3GO in an amount of 37.9 parts by mass based on 100 parts by mass of polyvinyl butyral having a viscosity average polymerization degree of 1, 700 was used for the layer B in place of the polyvinyl butyral resin having a viscosity average polymerization degree of about 1,000, and then subjected to the physical properties evaluations. The results of the physical properties evaluations are shown in Table 2.

### (Comparative Example 6)

A laminate was prepared by using the same method as in Example 1, except that the film thickness of the layer A was changed to 600 µm, that the film thickness of the layer B was changed to 160 µm, and that the layers A and B were superimposed to form a pair of two-layer films, and then subjected to the physical properties evaluations. The results of the physical properties evaluations are shown in Table 2.

### (Example 48)

A laminated glass was prepared by using the same method as in Example 47, except that two sheets of commercially available float glass (26 mm in length × 76 mm in width × 2.1 mm in thickness) were used in place of the commercially available float glass having a thickness of 2.8 mm, and then subjected to the physical properties evaluations. The results of the physical properties evaluations are shown in Table 3.

**[Table 1]**

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Layer B | Viscosity average polymerization degree | 1000 | 1000 | 1000 | 1000 | 1000 | 1000 | 1000 | 1000 | 600 | 1700 | - | 1000 |
| | Degree of acetalization (mol%) | 70 | 70 | 70 | 70 | 70 | 70 | 70 | 70 | 70 | 70 | - | 70 |
| | Content of plasticizer (parts by mass)∗ | 0 | 2 | 5 | 10 | 20 | 0 | 0 | 0 | 0 | 0 | 0 | 0 |
| | Shear storage modulus [at 25°C] (MPa) | 97.9 | 86.8 | 84.9 | 70.1 | 57.2 | 97.9 | 97.9 | 97.9 | 77.3 | 127.4 | 43.2 | 97.9 |
| Layer A | Styrene content (% by mass) ∗∗ | 12 | 12 | 12 | 12 | 12 | 12 | 12 | 20 | 12 | 12 | 12 | 12 |
| | Peak temperature of tan δ (°C) | -22.6 | -22.6 | -22.6 | -22.6 | -22.6 | -22.6 | -22.6 | -5.2 | -22.6 | -22.6 | -22.6 | -22.6 |
| | Peak height of tan δ | 1.92 | 1.92 | 1.92 | 1.92 | 1.92 | 1.92 | 1.92 | 1.89 | 1.92 | 1.92 | 1.92 | 1.92 |
| Laminate | Shear storage modulus [at 25°C] (MPa) | 4.78 | 4.53 | 4.17 | 3.57 | 2.36 | 5.78 | 3.45 | 3.55 | 3.59 | 6.1 | 15.8 | 4.78 |
| | Shear storage modulus [at 50°Cl (MPa) | 2.84 | 2.64 | 2.4 | 1.98 | 1.15 | 3.82 | 2.01 | 2.89 | 2.46 | 3.21 | 3.9 | 2.84 |
| | Maximum loss factor [at 2,000 Hz, 1 to 50°C] | 0.32 | 0.31 | 0.31 | 0.32 | 0.33 | 0.32 | 0.39 | 0.33 | 0.33 | 0.32 | 0.25 | 0.32 |
| | (Thickness of layer A)/(total thickness of layer B) | 1/3.75 | 1/3.75 | 1/3.75 | 1/3.75 | 1/3.75 | 1/14 | 1/1.53 | 1/3.75 | 1/3.75 | 1/3.75 | 1/3.75 | 1/3.75 |
| | Breaking strength fat 25°C] (kN) | 0.65 | 0.64 | 0.56 | 0.57 | 0.34 | 0.63 | 0.36 | 0.57 | 0.49 | 0.52 | 0.75 | 0.65 |
| | Lamination aptitude | A | A | A | B | C | A | A | B | C | I C | C | A |
| | Transmittance (at 1,500 nm) | 76 | 76 | 76 | 76 | 76 | 78 | 74 | 71 | 76 | 76 | 79 | 39 |

| | | | | | | | | | | | | | |
|---|---|---|---|---|---|---|---|---|---|---|---|---|---|
| ∗: Expressing parts by mass based on 100 parts by mass of polyvinyl butyral used for the layer B ∗∗: Expressing % by mass in the elastomer | | | | | | | | | | | | | |

**[Table 2]**

| | | Example 45 | Comparative Example 2 | Comparative Example 3 | Example 46 | Example 47 | Comparative Example 6 |
|---|---|---|---|---|---|---|---|
| Layer B | Viscosity average polymerization degree | 1000 | 1000 | 1000 | 1000 | 1700 | 1000 |
| | Degree of acetalization (mol%) | 70 | 70 | 70 | 70 | 70 | 70 |
| | Content of plasticizer (parts by mass) ∗ | 30 | 0 | 0 | 0 | 38 | 0 |
| | Shear storage modulus [at 25°C] (MPa) | 0.70 | 97.9 | 97.9 | 97.9 | 2.83 | 97.9 |
| Layer A | Styrene content (% by mass) ∗∗ | 12 | - | 33 | 12 | - | 12 |
| | Peak temperature of tan δ (°C) | -22.6 | < -40 | <-40 | -22.6 | -16.1 | -22.6 |
| | Peak height of tan δ | 1.92 | Not detected | Not detected | 1.92 | 0.80 | 1.92 |
| Laminate | Shear storage modulus [at 25°C] (MPa) | 0.63 | 37.3 | 27.9 | 1.28 | 2.19 | 4.78 |
| | Shear storage modulus [at 50°C] (MPa) | 0.21 | 33.0 | 22.8 | 1.13 | 0.32 | 2.74 |
| | Maximum loss factor [at 2,000 Hz, 1 to 50°C] | 0.32 | 0.18 | 0.15 | 0.38 | 0.34 | 0.32 |
| | (Thickness of layer A)/(total thickness of layer B) | 1/3.75 | 1/3.75 | 1/3.75 | 1/0.52 | 1/3.75 | 1/3.75 |
| | Breaking strength [at 25°C] (kN) | 0.23 | 0.66 | 0.66 | 0.29 | 0.28 | 0.36 |
| | Lamination aptitude | C | B | B | E | A | E |
| | Transmittance (at 1,500 nm) | 76 | 76 | 76 | 74 | 76 | 76 |

| | | | | | | | |
|---|---|---|---|---|---|---|---|
| ∗: Expressing parts by mass based on 100 parts by mass of polyvinyl butyral used for the layer B ∗∗: Expressing % by mass in the elastomer | | | | | | | |

**[Table 3]**

| | | Example 13 | Example 14 | Example 48 |
|---|---|---|---|---|
| Layer B | Viscosity average polymerization degree | 1000 | 1000 | 1700 |
| | Decree of acetalization (mol%) | 70 | 70 | 70 |
| | Content of plasticizer (parts by mass) ∗ | 0 | 0 | 38 |
| | Shear storage modulus [at 25°C] (MPa) | 97.9 | 97.9 | 2.83 |
| Layer A | Styrene content (% by mass) ∗∗ | 12 | 12 | - |
| | Peak temperature of tan δ (°C) | -22.6 | -22.6 | -16.1 |
| | Peak height of tan δ | 1.92 | 1.92 | 0.80 |
| Laminate | Shear storage modulus [at 25°C] (MPa) | 4.78 | 4.78 | 2.19 |
| | Shear storage modulus [at 50°C] (MPa) | 2.84 | 2.84 | 0.32 |
| | Maximum loss factor [at 2,000 Hz, 1 to 50°C] | 0.32 | 0.32 | 0.34 |
| | (Thickness of layer A)/(total thickness of layer B) | 1/3.75 | 1/3.75 | 1/3.75 |
| | Breaking strength [at 25°C] (kN) | 0.22 | 0.23 | 0.19 |
| | Lamination aptitude | A | A | A |
| | Transmittance (at 1,500 nm) | 76 | 76 | 76 |
| | Glass thickness (top/bottom) (mm) | 1.6/1.6 | 2.1/1.3 | 2.1/2.1 |

| | | | | |
|---|---|---|---|---|
| ∗: Expressing parts by mass based on 100 parts by mass of polyvinyl butyral used for the layer B ∗∗: Expressing % by mass in the elastomer | | | | |

The following physical properties evaluations (6 to 11) were conducted with respect to the layers A, layers B, laminates, or laminated glasses obtained in the following Examples 15 to 25 and 49 to 51, and Comparative Example 11.

### 6. Physical properties evaluation (shear storage modulus of layer B, shear storage modulus and peak height and peak temperature of tan δ of layer A (resin composition constituting of layer A), and shear storage modulus of laminate)

A strain control type dynamic viscoelasticity instrument (manufactured by Rheomix, ARES) having a diameter of a disk of 8 mm was used as a parallel-plate oscillatory rheometer in accordance with JIS K 7244-10 was used. Laminates, single-layered sheets of layer A (thickness: 0.76 mm), and single-layered sheets of layer B (thickness: 0.76 mm) obtained in the following Examples and Comparative Examples were each used as a disk-shaped test sheet. It is to be noted that each of the above-described test sheets after storing at a temperature 20°C and at a humidity of 60% RH for 24 hours or more was used. A gap between two flat plates was completely filled by the test sheet. A vibration with a strain amount of 1.0% was given to the test sheet at a frequency of 1 Hz, and a measurement temperature was increased at a constant rate of 1°C/min from -40°C to 100°C. The temperatures of the test sheet and the disk were kept until measured values of shear loss modulus and shear storage modulus did not change. The results of shear storage modulus of each of the laminate, the layer A, and the layer B, and peak height and peak temperature of tan δ of the resin composition constituting the layer A (elastomer in the layer A) as measured are shown in Tables 4 and 5.

### 7. Physical properties evaluation (quaternary resonance frequency, loss factor and bending rigidity at quaternary resonance frequency, and acoustic transmission loss at each of 6,300 Hz, 8,000 Hz, and 10,000 Hz of laminated glass)

Each of the laminates obtained in the Examples and Comparative Examples was interposed between two sheets of commercially available float glass (300 mm in length × 25 mm in width × 1.9 mm in thickness), and a laminated glass was prepared by a vacuum bagging method (condition: the temperature was increased from 30°C to 160°C for 60 minutes, followed by holding at 160°C for 30 minutes) . Thereafter, the center of the laminated glass was fixed to a tip portion of an exciting force detector built in an impedance head of an exciter (power amplifier/model 371-A) of a mechanical impedance instrument (manufactured by Ono Sokki Co., Ltd., mass cancel amplifier: MA-5500, channel data station: DS-2100) . A vibration was given at 20°C to the center of the laminated glass at a frequency in the range of from 0 to 10,000 Hz, and an exciting force and an acceleration waveform at this point were detected, thereby conducting a damping test of the laminated glass by a central exciting method. A mechanical impedance at an exciting point (the center of the laminated glass to which a vibration was given) was determined on the basis of the obtained exciting force and a speed signal obtained by integrating an acceleration single; and in an impedance curve obtained by setting the frequency on the abscissa and the mechanical impedance on the ordinate, respectively, a loss factor of the laminated glass was determined from a frequency expressing a peak and a half-width value. Furthermore, by using a quaternary resonance frequency and a loss factor at the quaternary resonance frequency, a bending rigidity at the quaternary resonance frequency was calculated in accordance with ISO 16940 (2008) . In addition, by using the loss factor and the bending rigidity at the quaternary resonance frequency, an acoustic transmission loss at each of 6,300 Hz, 8,000 Hz, and 10,000 Hz was calculated in accordance with ISO 16940 (2008) . The measurement results of the quaternary resonance frequency and the loss factor at the quaternary resonance frequency, and the calculation results of the bending rigidity at the quaternary resonance frequency and the acoustic transmission loss at each of 6,300 Hz, 8,000 Hz, and 10,000 Hz are shown in Table 4.

### 8. Physical properties evaluation (evaluation of heat insulating performance of laminated glass)

Each of the laminates obtained in the Examples and Comparative Examples was interposed between two sheets of commercially available float glass (26 mm in length × 76 mm in width × 2.8 mm in thickness), and a laminated glass was prepared by a vacuum bagging method (condition: the temperature was increased from 30°C to 160°C for 60 minutes, followed by holding at 160°C for 30 minutes). Thereafter, a wavelength transmittance in ultraviolet, visible, and near-infrared regions was measured by using a spectral photometer U-4100 (manufactured by Hitachi High-Tech Science Corporation) . It is to be noted that the measurement was conducted at a temperature of 20°C. The measurement results of the transmittance at a wavelength of 1,500 nm are shown in Tables 4 and 5.

### 9. Physical properties evaluation (lamination aptitude of laminate)

Each of the laminates obtained in the Examples and Comparative Examples was interposed between two sheets of commercially available float glass (1,100 mm in length × 1,300 mm in width × 3.2 mm in thickness), and a laminated glass was prepared by using a vacuum laminator (manufactured by Nisshinbo Mechatronics Inc., 1522N) under the following conditions. The lamination aptitude of the used laminate was judged according to the following criteria. The evaluation results of the lamination aptitude are shown in Tables 4 and 5.

### <Conditions>

Hot plate temperature: 165°C
Evacuation time: 12 minutes
Pressing pressure: 50 kPa
Pressing time: 17 minutes

### <Judgement criteria>

A: Defects, such as bubbling, etc., are not observed on the appearance, and adherence is good.
B: Though defects, such as bubbling, etc. , are slightly observed on the appearance, but there is no problem in adherence.
C: Though defects, such as bubbling, etc., are observed on the appearance, but there is no problem in adherence.
D: Defects, such as bubbling, etc., are observed on the appearance, and adherence is bad.
E: Defects, such as bubbling, etc., are observed over the entirety of the laminated glass on the appearance, and adherence is bad.

### 10. Physical properties evaluation (maximum loss factor of laminated glass)

Each of the laminates obtained in the Examples and Comparative Examples was interposed between two sheets of commercially available float glass (50 mm in length × 300 mm in width × 2.8 mm in thickness), and a laminated glass was prepared by a vacuum bagging method (condition: the temperature was increased from 30°C to 160°C for 60 minutes, followed by holding at 160°C for 30 minutes) . Thereafter, the center of the laminated glass was fixed to a tip portion of an exciting force detector built in an impedance head of an exciter (power amplifier/model 371-A) of a mechanical impedance instrument (manufactured by Ono Sokki Co., Ltd., mass cancel amplifier: MA-5500, channel data station: DS-2100) . A vibration was given to the center of the laminated glass at a frequency in the range of from 0 to 8,000 Hz, and an exciting force and an acceleration waveform at this point were detected, thereby conducting a damping test of the laminated glass by a central exciting method. A mechanical impedance at an exciting point (the center of the laminated glass to which a vibration was given) was determined on the basis of the obtained exciting force and a speed signal obtained by integrating an acceleration single; and in an impedance curve obtained by setting the frequency on the abscissa and the mechanical impedance on the ordinate, respectively, a loss factor of the laminated glass was determined from a frequency expressing a peak and a half-width value. In the damping measurement by the central exciting method, a value of the loss factor relative to the frequency at a fixed temperature is obtained. In order to obtain a maximum loss factor, the measurement was carried out by varying the temperature to 0°C, 10°C, 20°C, 30°C, 40°C, and 50°C, respectively, and a linear form of the loss factor relative to the temperature at a fixed frequency was obtained from the obtained values. In this linear form, a maximum point was defined as a maximum loss factor. The measurement results of the maximum loss factor are shown in Tables 4 and 5.

### 11. Physical properties evaluation (breaking strength of laminated glass)

Each of the laminates obtained in the Examples and Comparative Examples was interposed between two sheets of commercially available float glass (26 mm in length × 76 mm in width × 2.8 mm in thickness), and a laminated glass was prepared by a vacuum bagging method (condition: the temperature was increased from 30°C to 160°C for 60 minutes, followed by holding at 160°C for 30 minutes) . Thereafter, a three-point bending test of the laminated glass was carried out by using an autograph AG-5000B, and a breaking strength of the laminated glass at a temperature of 20°C and a film inter-fulcrum distance of 55 mm was measured. It is to be noted that the measurement was conducted at a test speed of 0.25 mm/min. The measurement results of the breaking strength are shown in Tables 4 and 5.

### (Example 15)

A linear hydrogenated styrene-isoprene-styrene triblock copolymer (hydrogenation ratio: 88%, weight average molecular weight: 112,000) composed of 20% by mass of a styrene unit and 80% by mass of an isoprene unit and having a temperature of a peak at which a peak height of tan δ was maximum of -5.2°C (a value in the case of giving a vibration at a frequency of 1 Hz and increasing a measurement temperature at a constant rate of 1°C/min from -40°C to 100°C) was used for the layer A, and a composition composed of 100 parts by mass of a polyvinyl butyral resin having a viscosity average polymerization degree of about 1,700, a degree of acetalization of 70 mol%, and a content of a vinyl acetate unit of 0.9 mol% and 15 parts by mass of, as a plasticizer, a polyester polyol "KURARAY POLYOL P-510", manufactured by Kuraray Co., Ltd. was used for the layer B.

These resins (or resin compositions) were molded into the layer B having a thickness of 0.76 mm and the layer A having a thickness of 0.76 mm, respectively by an extrusion molding method. By using a single-layer sheet of each of the resulting layer A and layer B, the shear storage modulus of the layer B, and the shear storage modulus and the peak height and peak temperature of tan δ of the layer A were measured according to the above-described evaluation methods.

In addition, these resins (or resin compositions) were molded into the layer B having a thickness of 250 µ and the layer A having a thickness of 250 µm, respectively by an extrusion molding method. The layer A was interposed between two layers of the layer B and press molded at 150°C, thereby preparing a laminate made of a composite film of a three-layer constitution and having a thickness of 0.75 mm. The quaternary resonance frequency, the loss factor at the quaternary resonance frequency, and the bending rigidity at the quaternary resonance frequency, and the acoustic transmission loss at each of 6,300 Hz, 8,000 Hz, and 10,000 Hz of the laminated glass were calculated according to the above-described evaluation methods. In addition, the heat insulating performance of the laminated glass was evaluated by using the resulting laminate. The results of the physical properties evaluations are shown in Table 4. It is to be noted that the content of the plasticizer of each of the layers B in Tables 4 to 5 expresses an amount based on 100 parts by mass of the resin in the layer B.

### (Examples 16 and 17)

Single-sheets and laminates were prepared by using the same method as in Example 15, except that the content of the plasticizer "KURARAY POLYOL P-510" in the layer B was changed as shown in Table 4, and then subjected to the physical properties evaluations. The results of the physical properties evaluations are shown in Table 4;

### (Example 18)

A laminate was prepared by using the same method as in Example 15, except that the film thickness of the layer A was changed to 100 µm, and that the film thickness of the layer B was changed to 325 µm, and then subjected to the physical properties evaluations. The results of the physical properties evaluations are shown in Table 4.

### (Example 19)

A laminate was prepared by using the same method as in Example 15, except that the film thickness of the layer A was changed to 380 µm, and that the film thickness of the layer B was changed to 190 µm, and then subjected to the physical properties evaluations. The results of the physical properties evaluations are shown in Table 4.

### (Example 20)

A single-layer sheet and a laminate were prepared by using the same method as in Example 15, except that in the layer A, a linear hydrogenated styrene·isoprene/butadiene·styrene triblock copolymer (hydrogenation ratio: 89%, weight average molecular weight: 121,500) composed of 18% by mass of a styrene unit and 82% by mass of an isoprene unit and a butadiene unit (isoprene/butadiene (mass ratio) = 89/11) and having a temperature of a peak at which a peak height of tan δ was maximum of -10.3°C (a value in the case of giving a vibration at a frequency of 1 Hz and increasing a measurement temperature at a constant rate of 1°C/min from -40°C to 100°C) was used as an elastomer in place of the linear hydrogenated styrene-isoprene-styrene triblock copolymer as used in Example 15, and then subjected to the physical properties evaluations. The results of the physical properties evaluations are shown in Table 4.

### (Example 21)

A single-layer sheet and a laminate were prepared by using the same method as in Example 15, except that in the layer A, a linear hydrogenated styrene-isoprene-styrene triblock copolymer (hydrogenation ratio: 90%, weight average molecular weight: 131,000) composed of 16% by mass of a styrene unit and an isoprene unit and a butadiene unit (isoprene/butadiene (mass ratio) = 78/22) and having a temperature of a peak at which a peak height of tan δ was maximum of -15.2°C (a value in the case of giving a vibration at a frequency of 1 Hz and increasing a measurement temperature at a constant rate of 1°C/min from -40°C to 100°C) was used as an elastomer in place of the linear hydrogenated styrene-isoprene-styrene triblock copolymer as used in Example 15, and then subjected to the physical properties evaluations. The results of the physical properties evaluations are shown in Table 4.

### (Examples 22 and 23)

Single-layer sheets and laminates were prepared by using the same method as in Example 15, except that the content of the plasticizer "KURARAY POLYOL P-510" in the layer B was changed as shown in Table 4, that the film thickness of the layer A was changed to 100 µm, and that the film thickness of the layer B was changed to 325 µm, and then subjected to the physical properties evaluations. The results of the physical properties evaluations are shown in Table 4.

### (Example 24)

A single-layer sheet and a laminate were prepared by using the same method as in Example 15, except that an ionomer film (manufactured by E. I. du Pont de Nemours and Company, SentryGlas^{®} Interlayer) was used for the layer B, that the film thickness of the layer A was changed to 100 µm, and that the film thickness of the layer B was changed to 325 µm, and then subjected to the physical properties evaluations. The results of the physical properties evaluations are shown in Table 4.

### (Example 25)

A single-layer sheet and a laminate were prepared by using the same method as in Example 15, except that 0.75 parts by mass of cesium-containing composite tungsten oxide was added to 100 parts by mass of the linear hydrogenated styrene-isoprene-styrene triblock copolymer to mold the layer A, and then subjected to the physical properties evaluations. The results of the physical properties evaluations are shown in Table 4. It is to be noted that YMDS-874, manufactured by Sumitomo Metal Mining Co., Ltd. was used as the cesium-containing composite tungsten oxide.

**[Table 4]**

| | | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|
| | Thickness (µm) | 250 | 250 | 250 | 325 | 190 | 250 | 250 | 325 | 325 | 325 | 250 |
| | Kind of resin | PVB | PVB | PVB | PVB | PVB | PVB | PVB | PVB | PVB | lonomer | PVB |
| Layer B | Viscosity average polymerization degree | 1700 | 1700 | 1700 | 1700 | 1700 | 1700 | 1700 | 1700 | 1700 | . | 1700 |
| | Degree of acetalization (mol%) | 70 | 70 | 70 | 70 | 70 | 70 | 70 | 70 | 70 | - | 70 |
| | Content of plasticizer (parts by mass) | 15 | 5 | 25 | 15 | 15 | 15 | 15 | 25 | 40 | - | 15 |
| | Shear storage modulus fat 25°C] (MPa) | 82.0 | 120.3 | 62.1 | 82.0 | 82.0 | 82.0 | 82.0 | 62.1 | 13.6 | 43.2 | 82.0 |
| | Thickness (µm) | 250 | 250 | 250 | 100 | 380 | 250 | 250 | 100 | 100 | 100 | 250 |
| | Styrene content (% by mass) | 20 | 20 | 20 | 20 | 20 | 18 | 16 | 20 | 20 | 20 | 20 |
| Layer A | Peak temperature of tan δ (°C) | -5.2 | -5.2 | -5.2 | -5.2 | -5.2 | -10.3 | -15.2 | -5.2 | -5.2 | -5.2 | -5.5 |
| | Peak height of tan δ | 1.89 | 1.89 | 1.89 | 1.89 | 1.89 | 1.90 | 1.91 | 1.89 | 1.89 | 1.89 | 1.88 |
| | Shear storaae modulus [at 25°C] (MPa) | 1.31 | 1.31 | 1.31 | 1.31 | 1.31 | 1.13 | 0.95 | 1.31 | 1.31 | 1.31 | 1.31 |
| | Quaternary resonance frequency (Hz) | 3916 | 4020 | 3764 | 4867 | 3627 | 3697 | 3951 | 4625 | 4377 | 4497 | 3903 |
| | Loss factor at quaternary resonance frequency | 0.63 | 0.56 | 0.64 | 0.22 | 0.69 | 0.51 | 0.31 | 0.25 | 0.23 | 0.23 | 0.62 |
| | Bending rigidity at quaternary resonance frequency (N·m) | 206 | 218 | 195 | 322 | 181 | 182 | 208 | 290 | 259 | 272 | 205 |
| | Acoustic transmission loss at 6,300 Hz (dB) | 48.1 | 47.8 | 47.6 | 47.6 | 47.5 | 45.4 | 44.9 | 47.0 | 45.3 | 45.9 | 47.9 |
| Evaluation results | Acoustic transmission loss at 8,000 Hz (dB) | 54.8 | 54.7 | 54.3 | 54.5 | 54.1 | 52.4 | 52.3 | 54.1 | 52.6 | 53.1 | 54.7 |
| | Acoustic transmission loss at 10,000 Hz (dB) | 60.9 | 60.8 | 60.4 | 60.6 | 60.1 | 58.7 | 58.6 | 60.2 | 58.9 | 59.3 | 60.8 |
| | (Thickness of layer A)/(total thickness of layer B) | 1/2 | 1/2 | 1/2 | 1/6.5 | 1/1 | 1/2 | 1/6.5 | 1/6.5 | 1/6.5 | 1/6.5 | 1/2 |
| | Transmittance [at 1,500 nm] (%) | 75 | 77 | 76 | 75 | 74 | 75 | 76 | 76 | 75 | 78 | 40 |
| | Shear storage modulus [at 25°C] (MPa) | 2.61 | 3.85 | 1.85 | 7.03 | 1.52 | 1.55 | 3.35 | 6.71 | 5.82 | 6.16 | 2.59 |
| | Maximum loss factor of laminated glass | 0.38 | 0.36 | 0.43 | 0.35 | 0.39 | 0.36 | 0.35 | 0.36 | 0.40 | 0.38 | 0.38 |
| | Breaking strength of laminated glass fat 25°C] (kN) | 0.44 | 0.48 | 0.31 | 0.82 | 0.27 | 0.29 | 0.40 | 0.79 | 0.61 | 0.69 | 0.42 |
| | Lamination aptitude | A | A | B | A | B | A | A | B | C | A | A |

### (Example 49)

A single-layer sheet and a laminate were prepared by using the same method as in Example 15, except that in the layer A, a linear hydrogenated styrene·isoprene/butadiene·styrene triblock copolymer (hydrogenation ratio: 92%, weight average molecular weight: 150,000) composed of 12% by mass of a styrene unit and 88% by mass of an isoprene unit and a butadiene unit (isoprene/butadiene (molar ratio) = 55/45) and having a temperature of a peak at which a peak height of tan δ was maximum of -22.6°C (a value in the case of giving a vibration at a frequency of 1 Hz and increasing a measurement temperature at a constant rate of 1°C/min from -40°C to 100°C) was used as an elastomer in place of the linear hydrogenated styrene-isoprene-styrene triblock copolymer as used in Example 15, and then subjected to the physical properties evaluations. The results of the physical properties evaluations are shown in Table 5.

### (Example 50)

A single-layer sheet and a laminate were prepared by using the same method as in Example 15, except that in the layer A, a linear hydrogenated styrene-isoprene-styrene triblock copolymer (hydrogenation ratio: 92%, weight average molecular weight: 150,000) composed of 12% by mass of a styrene unit and 88% by mass of an isoprene unit and a butadiene unit (isoprene/butadiene (molar ratio) = 55/45) and having a temperature of a peak at which a peak height of tan δ was maximum of -22.6°C (a value in the case of giving a vibration at a frequency of 1 Hz and increasing a measurement temperature at a constant rate of 1°C/min from -40°C to 100°C) was used as an elastomer in place of the linear hydrogenated styrene-isoprene-styrene triblock copolymer as used in Example 15, that the film thickness of the layer A was changed to 100 µm, and that the film thickness of the layer B was changed to 325 µm, and then subjected to the physical properties evaluations. The results of the physical properties evaluations are shown in Table 5.

### (Example 51)

A single-layer sheet and a laminate were prepared by using the same method as in Example 15, except that a layer composed of a composition containing a polyvinyl butyral resin having a viscosity average polymerization degree of 1,700, a degree of acetalization of 70 mol%, and a content of a vinyl acetate unit of 0.9 mol% and "KURARAY POLYOL P-510" in an amount of 60 parts by mass based on 100 parts by mass of the polyvinyl butyral resin was used for the layer A in place of the linear hydrogenated styrene-isoprene block copolymer, and that a layer composed of a composition containing a polyvinyl butyral resin having a viscosity average polymerization degree of 1,700, a degree of acetalization of 70 mol%, and a content of a vinyl acetate unit of 0.9 mol% and "KURARAY POLYOL P-510" in an amount of 60 parts by mass based on 100 parts by mass of the polyvinyl butyral resin was used for the layer B, and then subjected to the physical properties evaluations. The results of the physical properties evaluations are shown in Table 5.

### (Comparative Example 11)

A single-layer sheet and a laminate were prepared by using the same method as in Example 15, except that a layer composed of a composition containing a polyvinyl butyral resin having a viscosity average polymerization degree of 1,700, a degree of acetalization of 70 mol%, and a content of a vinyl acetate unit of 0.9 mol% and "KURARAY POLYOL P-510" in an amount of 15 parts by mass based on 100 parts by mass of the polyvinyl butyral resin was used for the layer A in place of the linear hydrogenated styrene-isoprene block copolymer, and that a layer composed of a composition containing a polyvinyl butyral resin having a viscosity average polymerization degree of 1,700, a degree of acetalization of 70 mol%, and a content of a vinyl acetate unit of 0.9 mol% and "KURARAY POLYOL P-510" in an amount of 15 parts by mass based on 100 parts by mass of the polyvinyl butyral resin was used for the layer B, and then subjected to the physical properties evaluations. The results of the physical properties evaluations are shown in Table 5.

**[Table 5]**

| | | Example 49 | Example 50 | Example 51 | Comparative Example 11 |
|---|---|---|---|---|---|
| Layer B | Thickness (µm) | 250 | 325 | 250 | 250 |
| | Kind of resin | PVB | PVB | PVB | PVB |
| | Viscosity average polymerization degree | 1700 | 1700 | 1700 | 1700 |
| | Degree of acetalization (mol%) | 70 | 70 | 70 | 70 |
| | Content of plasticizer (parts by mass) | 15 | 15 | 60 | 15 |
| | Shear storage modulus [at 25°C] (MPa) | 82.0 | 82.0 | 6.2 | 82.0 |
| Layer A | Thickness (µm) | 250 | 100 | 250 | 250 |
| | Styrene content (% by mass) | 12 | 12 | - | - |
| | Peak temperature of tan δ (°C) | -22.6 | -22.6 | 0.7 | 35.2 |
| | Peak height of tan δ | 1.92 | 1.92 | 0.79 | 0.76 |
| | Shear storage modulus [at 25°C] (MPa) | 0.51 | 0.51 | 0.37 | 82.0 |
| Evaluation results | Quaternary resonance frequency (Hz) | 2544 | 3063 | 2827 | 4990 |
| | Loss factor at quaternary resonance frequency | 0.23 | 0.36 | 0.44 | 0.037 |
| | Bending rigidity at quaternary resonance frequency (N·m) | 88 | 128 | 109 | 339 |
| | Acoustic transmission loss at 6,300 Hz (dB) | 41.4 | 40.0 | 42.6 | 41.7 |
| | Acoustic transmission loss at 8,000 Hz (dB) | 39.2 | 46.5 | 48.5 | 48.4 |
| | Acoustic transmission loss at 10,000 Hz (dB) | 47.3 | 53.5 | 55.1 | 54.4 |
| | (Thickness of layer A)/(total thickness of layer B) | 112 | 1/6.5 | 1/2 | 112 |
| | Transmittance [at 1,500 nm] (%) | 74 | 75 | 76 | 77 |
| | Shear storage modulus [at 25°C] (MPa) | 0.31 | 0.77 | 0.55 | 7.71 |
| | Maximum loss factor of laminated glass | 0.37 | 0.40 | 0.35 | 0.09 |
| | Breaking strength of laminated glass [at 25°C] (kN) | 0.15 | 0.17 | 0.15 | 1.04 |
| | Lamination aptitude | B | A | D | B |

The following physical properties evaluations (12 to 15) were conducted with respect to the layers A, layers B, laminates, or laminated glasses obtained in the following Examples 26 to 37 and Reference Examples 1 and 2.

### 12. Physical properties evaluation (shear storage modulus of laminate, shear storage modulus of layer B (adhesive layer), and shear storage modulus and peak height and peak temperature of tan δ of layer A (sound insulating layer))

A strain control type dynamic viscoelasticity instrument (manufactured by Rheomix, ARES) having a diameter of a disk of 8 mm was used as a parallel-plate oscillatory rheometer in accordance with JIS K 7244-10. Laminates (thickness: 0.76 mm), single-layered sheets of layer A (thickness: 0.76 mm), and single-layered sheets of layer B (thickness: 0.76 mm) obtained in the following Examples and Comparative Examples were each used as a disk-shaped test sheet. It is to be noted that each of the above-described test sheets after storing at a temperature 20°C and at a humidity of 60% RH for 24 hours or more was used. A gap between two flat plates was completely filled by the test sheet. A vibration with a strain amount of 1. 0% was given to the test sheet at a frequency of 1 Hz, and a measurement temperature was increased at a constant rate of 1°C/min from -40°C to 100°C. The temperatures of the test sheet and the disk were kept until measured values of shear loss modulus and shear storage modulus did not change. The results of shear storage modulus of each of the laminate and the layer B at 25°C, and peak height and peak temperature of tan δ of the layer A (elastomer in the layer A) as measured are shown in Tables 6 and 8.

### 13. Physical properties evaluation (loss factor and maximum loss factor of laminated glass)

Each of the laminates obtained in the Examples and Comparative Examples was interposed between two sheets of commercially available float glass (26 mm in length × 76 mm in width × 2.8 mm in thickness), and a laminated glass was prepared by a vacuum bagging method (condition: the temperature was increased from 20°C to 140°C for 30 minutes, followed by holding at 140°C and at a pressure of 1 MPa for 60 minutes). Thereafter, the center of the laminated glass was fixed to a tip portion of an exciting force detector built in an impedance head of an exciter (power amplifier/model 371-A) of a mechanical impedance instrument (manufactured by Ono Sokki Co., Ltd., mass cancel amplifier: MA-5500, channel data station: DS-2100) . A vibration was given at 20°C to the center of the laminated glass at a frequency in the range of from 0 to 10,000 Hz, and an exciting force and an acceleration waveform at this point were detected, thereby conducting a damping test of the laminated glass by a central exciting method. A mechanical impedance at an exciting point (the center of the laminated glass to which a vibration was given) was determined on the basis of the obtained exciting force and a speed signal obtained by integrating an acceleration single; and in an impedance curve obtained by setting the frequency on the abscissa and the mechanical impedance on the ordinate, respectively, a loss factor at each resonance point frequency was determined from a frequency expressing a peak and a half-width value, and a loss factor α of the laminated glass at 20°C and 2,000 Hz through proportional calculation from the resonance point frequency at about 2,000 Hz and a value of the loss factor at that resonance point frequency. Furthermore, the laminated glass after the above-described measurement was held at 18°C for one month. With respect to the laminated glass after lapsing one month, a loss factor β was determined under the same conditions as described for α. In addition, with respect to the laminated glass after lapsing one month, a highest value among the loss factors at a temperature 20°C and at primary to quantic modes was determined as the maximum loss factor. With respect to a laminated glass obtained after holding a laminated glass at 18°C for one month and further heat treating at 100°C for 24 hours, a loss factor y was determined under the same conditions as described for a. The loss factor immediately after preparation of the laminated glass, the loss factor after preparation of the laminated glass and further lapsing one month, the loss factor after the heat treatment, and the maximum loss factor at 20°C are shown in Tables 6 and 8.

### 14. Physical properties evaluation (haze of laminated glass)

A haze of a laminated glass after preparation of the laminated glass and further lapsing one month was measured by using a haze meter (manufactured by Suga Test Instruments Co. , Ltd.). The results are shown in Tables 6 and 8.

### 15. Physical properties evaluation (lamination aptitude of laminate)

Each of the laminates obtained in the Examples and Comparative Examples was interposed between two sheets of commercially available float glass (1,100 mm in length × 1,300 mm in width × 3.2 mm in thickness), and a laminated glass was prepared by using a vacuum laminator (manufactured by Nisshinbo Mechatronics Inc., 1522N) under the following conditions. The lamination aptitude of the used laminate was judged according to the following criteria. The evaluation results of the lamination aptitude are shown in Tables 6 and 8.

### <Conditions>

Hot plate temperature: 165°C
Evacuation time: 12 minutes
Pressing pressure: 50 kPa
Pressing time: 17 minutes

### <Judgement criteria>

A: Defects, such as bubbling, etc., are not observed on the appearance, and adherence is good.
B: Though defects, such as bubbling, etc., are slightly observed on the appearance, but there is no problem in adherence.
C: Though defects, such as bubbling, etc., are observed on the appearance, but there is no problem in adherence.
D: Defects, such as bubbling, etc., are observed on the appearance, and adherence is bad.
E: Defects, such as bubbling, etc., are observed over the entirety of the laminated glass on the appearance, and adherence is bad.

### (Example 26)

A linear hydrogenated styrene-isoprene/butadiene-styrene triblock copolymer (weight average molecular weight: 100,000) composed of 12% by mass of a styrene unit and 88% by mass of an isoprene unit and a butadiene unit (isoprene/butadiene (molar ratio) = 89/11) and having a temperature of a peak at which a peak height of tan δ was maximum of -22.6°C (a value in the case of giving a vibration at a frequency of 1 Hz and increasing a measurement temperature at a constant rate of 1°C/min from -40°C to 100°C) was used for the layer A. A polyvinyl butyral resin having a viscosity average polymerization degree of about 1,700, a degree of acetalization of 70 mol%, and a content of a vinyl acetate unit of 0.9 mol% was used for the layer B.

These resins were molded into the layer B having a thickness of 330 µm and the layer A having a thickness of 100 µm, respectively by an extrusion molding method. By using a single-layer sheet of each of the resulting layer A and layer B, the shear storage modulus of the layer B, and the peak height and peak temperature of tan δ of the layer A were measured according to the above-described evaluation methods.

Subsequently, the layer A was interposed between two layers of the layer B and press molded at 150°C, thereby preparing a laminate made of a composite film of a three-layer constitution and having a thickness of 0.76 mm. By using the resulting laminate, the shear storage modulus of the laminate, the loss factor after preparation of the laminated glass, the loss factor after lapsing one month after preparation of the laminated glass, the maximum loss factor of the laminated glass, the lamination aptitude, and the haze of the laminated glass were measured according to the above-described evaluation methods. The results of the physical properties evaluations are shown in Table 6.

### (Examples 27 to 30)

The layer A, the layer B, and the laminate were prepared by using the same method as in Example 26, except that the layer B was molded with a polyvinyl butyral resin composition in which KURARAY POLYOL P-510 (manufactured by Kuraray Co., Ltd., polyester polyol having a freezing point of -20°C or lower, a hydroxyl value of 213 mgKOH/g, and a number average molecular weight per two hydroxyl groups of 500, polyester diol composed of 3-methyl-1,5-pentanediol and adipic acid) was added as a plasticizer in an amount as shown in Table 6 based on 100 parts by mass of a polyvinyl butyral resin having a viscosity average polymerization degree of about 1,700, a degree of acetalization of 70 mol%, and a content of a vinyl acetate unit of 0.9 mol%, and then subjected to the physical properties evaluations. The results of the physical properties evaluations are shown in Table 6.

In addition, in a laminated glass prepared by using the laminate of Example 27, with respect to the loss factor immediately after preparation of the laminated glass and the loss factor after lapsing one month after preparation of the laminated glass, a loss factor at each of frequencies obtained from the results of the above-described damping test carried out at 20°C and at a frequency in the range of from 0 to 10,000 Hz is shown in Table 7. Similarly, in a laminated glass prepared by using the laminate of Example 27, with respect to the loss factor immediately after preparation of the laminated glass and the loss factor after lapsing one month after preparation of the laminated glass, a loss factor at each of frequencies obtained from the results of the above-described damping test carried out at 30°C and at a frequency in the range of from 0 to 10,000 Hz is shown in Table 7. A graph showing a relation between the frequency and the loss factor in the case of conducting the measurement at 20°C as shown in Table 7 is shown in FIG. 2. In FIG. 2, the graph of a solid line expresses the loss factor at each frequency immediately after preparation of the laminated glass, and the graph of a dotted line expresses the loss factor at each frequency after lapsing one month after preparation of the laminated glass.

### (Example 31)

The layer A, the layer B, and the laminate were prepared by using the same method as in Example 27, except that a polyvinyl butyral resin having a viscosity average polymerization degree of about 1,000 was used in place of the polyvinyl butyral resin having a viscosity average polymerization degree of about 1,700, and then subjected to the physical properties evaluations. The results of the physical properties evaluations are shown in Table 6.

### (Example 32)

The layer A, the layer B, and the laminate were prepared by using the same method as in Example 26, except that the layer B was molded in a thickness of 253 µm, and that the layer A was molded in a thickness of 253 µm, and then subjected to the physical properties evaluations. The results of the physical properties evaluations are shown in Table 6.

**[Table 6]**

| | | Example 26 | Example 27 | Example 28 | Example 29 | Example 30 | Example 31 | Example 32 |
|---|---|---|---|---|---|---|---|---|
| Layer B | Viscosity average polymerization degree | 1700 | 1700 | 1700 | 1700 | 1700 | 1000 | 1700 |
| | Degree of acetalization (mol%) | 70 | 70 | 70 | 70 | 70 | 70 | 70 |
| | Plasticizer | - | A | A | A | A | A | - |
| | Content of plasticizer (parts by mass) | 0 | 5 | 15 | 25 | 40 | 5 | 0 |
| | Shear storage modulus fat 25°C] (MPa) | 127.4 | 100.6 | 71.3 | 50.2 | 34.7 | 84.9 | 127.4 |
| Layer A | Styrene content (% by mass) | 12 | 12 | 12 | 12 | 12 | 12 | 12 |
| | Peak temperature of tan δ (°C) | -22.6 | -22.6 | -22.6 | -22.6 | -22.6 | -22.6 | -22.6 |
| | Peak height of tan δ | 1.92 | 1.92 | 1.92 | 1.92 | 1.92 | 1.92 | 1.92 |
| Laminate | Thickness [(layer B)/(layer A)/(layer B)] (µm) | 330/100/330 | 330/100/330 | 330/100/330 | 330/100/330 | 330/100/330 | 330/100/330 | 253/253/253 |
| | Loss factor α immediately after preparation of laminated glass [at 2,000 Hz and 20°C] | 0.33 | 0.34 | 0.30 | 0.30 | 0.33 | 0.27 | 0.28 |
| | Loss factor β after lapsing one month after preparation of laminated glass [at 2,000 Hz and 20°C1 | 0.33 | 0.32 | 0.28 | 0.32 | 0.35 | 0.25 | 0.28 |
| | (Loss factor β)/(loss factor α) | 1 | 0.94 | 0.93 | 1.06 | 1.07 | 0.93 | 1 |
| | Loss factor γ after heat treatment [at 2,000 Hz and 20°C] | 0.31 | 0.3 | 0.27 | 0.29 | 0.31 | 0.24 | 0.25 |
| | (Loss factor γ)/(loss factor β) | 0.93 | 0.93 | 0.96 | 0.90 | 0.88 | 0.96 | 0.89 |
| | Shear storage modulus [at 25°C] (MPa) | 6.1 | 5.5 | 4.8 | 3.6 | 3 | 3.55 | 5 |
| | Maximum loss factor [at 20°C] | 0.35 | 0.34 | 0.31 | 0.32 | 0.38 | 0.33 | 0.29 |
| | Haze | 0.5 | 0.4 | 0.3 | 0.3 | 0.2 | 0.5 | 0.5 |
| | Lamination aptitude | C | B | B | A | A | A | c |

| | | | | | | | | |
|---|---|---|---|---|---|---|---|---|
| ∗: The content of plasticizer in the table expresses a content based on 100 parts by mass of the polyvinyl butyral resin. ∗: Plasticizer A: KURARAY POLYOL P-510 (manufactured by Kuraray Co., Ltd.) | | | | | | | | |

**[Table 7]**

| | Measurement temperature: 20°C | | Measurement temperature: 30°C | |
|---|---|---|---|---|
| | Hz | Loss factor | Hz | Loss factor |
| Example 27 [Immediately after preparation of laminated glass] | 146.641 | 0.12343021 | 140.938 | 0.10514655 |
| | 690.781 | 0.22666067 | 660.547 | 0.16500056 |
| | 1660.469 | 0.32214686 | 1592.656 | 0.24094285 |
| | 2950.781 | 0.37720704 | 2833.594 | 0.25291634 |
| | 4592.969 | 0.36264682 | 4464.063 | 0.2206839 |
| | 6536.719 | 0.34909666 | 6265.625 | 0.2012313 |
| | 8953.906 | 0.3031235 | 8694.922 | 0.16430253 |
| Example 27 [After lapsing one month after preparation of laminated glass] | 146.25 | 0.13214622 | 139.531 | 0.10234539 |
| | 687.109 | 0.24197893 | 650.547 | 0.16478501 |
| | 1660.391 | 0.3064782 | 1578.984 | 0.25061136 |
| | 2977.734 | 0.33963957 | 2818.75 | 0.25594711 |
| | 4641.797 | 0.3192904 | 4448.047 | 0.21662763 |
| | 6692.578 | 0.3153483 | 6252.734 | 0.19007754 |
| | - | - | 8702.344 | 0.16414237 |

### (Examples 33 to 35)

The layer A, the layer B, and the laminate were prepared by using the same method as in Example 26, except that the layer B was molded with a polyvinyl butyral resin composition in which KURARAY POLYOL P-510 (manufactured by Kuraray Co., Ltd.) was added as a plasticizer in an amount as shown in Table 8 based on 100 parts by mass of a polyvinyl butyral resin having a viscosity average polymerization degree of about 1,700, a degree of acetalization of 70 mol%, and a content of a vinyl acetate unit of 0.9 mol%, that the layer B was molded in a thickness of 253 µm, and that the layer A was molded in a thickness of 253 µm, and then subjected to the physical properties evaluations. The results of the physical properties evaluations are shown in Table 8.

### (Example 36)

The layer A, the layer B, and the laminate were prepared by using the same method as in Example 27, except that the layer A was molded by using a linear hydrogenated styrene-isoprene-styrene triblock copolymer (weight average molecular weight: 100,000) composed of 20% by mass of a styrene unit and 80% by mass of an isoprene unit and having a temperature of a peak at which a peak height of tan δ was maximum of -5.2°C (a value in the case of giving a vibration at a frequency of 1 Hz and increasing a measurement temperature at a constant rate of 1°C/min from -40°C to 100°C), and then subjected to the physical properties evaluations. The results of the physical properties evaluations are shown in Table 8.

### (Example 37)

The layer A, the layer B, and the laminate were prepared by using the same method as in Example 30, except that the layer A was molded by using a linear hydrogenated styrene-isoprene-styrene triblock copolymer (weight average molecular weight: about 100,000) composed of 20% by mass of a styrene unit and 80% by mass of an isoprene unit and having a temperature of a peak at which a peak height of tan δ was maximum of -5.2°C (a value in the case of giving a vibration at a frequency of 1 Hz and increasing a measurement temperature at a constant rate of 1°C/min from -40°C to 100°C), and then subjected to the physical properties evaluations . The results of the physical properties evaluations are shown in Table 8.

### (Reference Example 1)

The layer A, the layer B, and the laminate were prepared by using the same method as in Example 26, except that the layer B was molded with a polyvinyl butyral resin composition in which KURARAY POLYOL P-510 (manufactured by Kuraray Co., Ltd.) was added as a plasticizer in an amount as shown in Table 8 based on 100 parts by mass of a polyvinyl butyral resin having a viscosity average polymerization degree of about 1,700, a degree of acetalization of 70 mol%, and a content of a vinyl acetate unit of 0.9 mol%, that the layer B was molded in a thickness of 253 µm, and that the layer A was molded in a thickness of 253 µm, and then subjected to the physical properties evaluations. The results of the physical properties evaluations are shown in Table 8.

### (Reference Example 2)

The layer A, the layer B, and the laminate were prepared by using the same method as in Example 27, except that 3GO (triethylene glycol di(2-ethylhexanoate)) was used as a plasticizer to be used for the layer B in an amount shown in Table 8 in place of the KURARAY POLYOL P-510, and then subjected to the physical properties evaluations. The results of the physical properties evaluations are shown in Table 8.

In addition, in a laminated glass prepared by using the laminate of Reference Example 1, with respect to the loss factor immediately after preparation of the laminated glass and the loss factor after lapsing one month after preparation of the laminated glass, a loss factor at each of frequencies obtained from the results of the above-described damping test carried out at 20°C and at a frequency in the range of from 0 to 10,000 Hz is shown in Table 9. Similarly, in a laminated glass prepared by using the laminate of Reference Example 1, with respect to the loss factor immediately after preparation of the laminated glass and the loss factor after lapsing one month after preparation of the laminated glass, a loss factor at each of frequencies obtained from the results of the above-described damping test carried out at 30°C and at a frequency in the range of from 0 to 10,000 Hz is shown in Table 9. A graph showing a relation between the frequency and the loss factor in the case of conducting the measurement at 20°C shown in Table 9 is shown in FIG. 3. In FIG. 3, the graph of a solid line expresses the loss factor at each frequency immediately after preparation of the laminated glass, and the graph of a dotted line expresses the loss factor at each frequency after lapsing one month after preparation of the laminated glass.

**[Table 8]**

| | | Example 33 | Example 34 | Example 35 | Example 36 | Example 37 | Reference Example 1 | Reference Example 2 |
|---|---|---|---|---|---|---|---|---|
| Layer B | Viscosity average polymerization degree | 1700 | 1700 | 1700 | 1700 | 1700 | 1700 | 1700 |
| | Degree of acetalization (mol%) | 70 | 70 | 70 | 70 | 70 | 70 | 70 |
| | Plasticizer | A | A | A | A | A | A | B |
| | Content of plasticizer (parts by mass) | 5 | 15 | 25 | 5 | 40 | 40 | 5 |
| | Shear storage modulus [at 25°C] (MPa) | 100.6 | 71.3 | 50.2 | 100.6 | 34.7 | 34.7 | 95.2 |
| Layer A | Styrene content (% by mass) | 12 | 12 | 12 | 20 | 20 | 12 | 12 |
| | Peak temperature of tan δ (°C) | -22.6 | -22.6 | -22.6 | -5.2 | -5.2 | -22.6 | -22.6 |
| | Peak height of tan δ | 1.92 | 1.92 | 1.92 | 1.89 | 1.89 | 1.92 | 1.92 |
| Laminate | Thickness [(layer B)/(layer A)/(layer B)] (µm) | 253/253/253 | 253/253/253 | 253/253/253 | 330/100/330 | 330/100/330 | 253/253/253 | 330/100/330 |
| | Loss factor α immediately after preparation of laminated glass [at 2,000 Hz and 20°C] | 0.28 | 0.26 | 0.23 | 0.22 | 0.24 | 0.24 | 0.28 |
| | Loss factor β after lapsing one month after preparation of laminated glass [at 2,000 Hz and 20°C] | 0.20 | 0.19 | 0.16 | 0.29 | 0.30 | 0.08 | 0.1 |
| | (Loss factor β)/(loss factor α) | 0.71 | 0.73 | 0.70 | 1.32 | 1.25 | 0.33 | 0.36 |
| | Loss factor γ after heat treatment [at 2,000 Hz and 20°C] | 0.24 | 0.23 | 0.21 | 0.25 | 0.26 | 0.17 | 0.16 |
| | (Loss factor γ)/(loss factor β) | 1.2 | 1.21 | 1.31 | 0.86 | 0.86 | 2.12 | 1.6 |
| | Shear storage modulus [at 25°C] (MPa) | 4.6 | 3.9 | 2.6 | 5.5 | 3 | 1.7 | 4.9 |
| | Maximum loss factor [at 20°C] | 0.23 | 0.23 | 0.23 | 0.32 | 0.30 | 0.21 | 0.29 |
| | Haze | 0.4 | 0.4 | 0.3 | 0.4 | 0.3 | 0.3 | 2.3 |
| | Lamination aptitude | B | B | A | B | A | A | C |

| | | | | | | | | |
|---|---|---|---|---|---|---|---|---|
| ∗: The content of plasticizer in the table expresses a content based on 100 parts by mass of the polyvinyl butyral resin. ∗: Plasticizer A: KURARAY POLYOL P-510 (manufactured by Kuraray Co., Ltd.), Plasticizer B: 3GO (triethylene glycol di(2-ethylhexanoate)) | | | | | | | | |

**[Table 9]**

| | Measurement temperature: 20°C | | Measurement temperature: 30°C | |
|---|---|---|---|---|
| | Hz | Loss factor | Hz | Loss factor |
| Reference Example 1 [Immediately after preparation of laminated glass] | 111.172 | 0.2379556 | 105.469 | 0.1577949 |
| | 531.563 | 0.2554719 | 506.797 | 0.1650353 |
| | 1329.297 | 0.2761577 | 1294.844 | 0.14923 |
| | 2510.547 | 0.207985 | 2460.156 | 0.1155404 |
| | 4056.641 | 0.1733666 | 3991.797 | 0.0935679 |
| | 5973.438 | 0.1440492 | 5891.016 | 0.0800329 |
| | 8241.016 | 0.1310047 | 8136.719 | 0.0746555 |
| Reference Example 1 [After lapsing one month after preparation of laminated glass] | 89.844 | 0.2198277 | 84.688 | 0.1277608 |
| | 462.344 | 0.1223238 | 447.422 | 0.0760299 |
| | 1214.531 | 0.0746864 | 1187.969 | 0.0534276 |
| | 2327.734 | 0.0862531 | 2266.797 | 0.0752894 |
| | 3689.453 | 0.0925822 | 3587.891 | 0.11532 |
| | 5181.641 | 0.1041758 | 4954.688 | 0.1265927 |

The following physical properties evaluations (16 to 18) were conducted with respect to the layers A, layers B, laminates, or laminated glasses obtained in the following Examples 38 to 44 and 52, and Comparative Example 14.

### 16. Physical properties evaluation (peak temperature of tan δ of elastomer of layer A and entirety of layer A)

A strain control type dynamic viscoelasticity instrument (manufactured by Rheomix, ARES) having a diameter of a disk of 8 mm was used as a parallel-plate oscillatory rheometer in accordance with JIS K 7244-10. Single-layered sheets of layer A (layer A1 or layer A2) (thickness: 0.76 mm) obtained in the following Examples and Comparative Examples were each used as a disk-shaped test sheet. It is to be noted that each of the above-described test sheets after storing at a temperature 20°C and at a humidity of 60% RH for 24 hours or more was used. A gap between two flat plates was completely filled by the test sheet. A vibration with a strain amount of 1.0% was given to the test sheet at a frequency of 1 Hz, and a measurement temperature was increased at a constant rate of 1°C/min from -40°C to 100°C. The temperatures of the test sheet and the disk were kept until measured values of shear loss modulus and shear storage modulus did not change. The peak temperature of tan δ was determined from the shear storage modulus of the layer A (layer A1 or layer A2) as measured. The results are shown in Table 10.

### 17. Physical properties evaluation (loss factor of laminated glass)

Each of the laminates obtained in the Examples and Comparative Examples was interposed between two sheets of commercially available float glass (50 mm in width × 300 mm in length × 3 mm in thickness), and a laminated glass was prepared by a vacuum bagging method (condition: the temperature was increased from 30°C to 160°C for 60 minutes, followed by holding at 160°C for 30 minutes) . Thereafter, the center of the laminated glass was fixed to a tip portion of an exciting force detector built in an impedance head of an exciter (power amplifier/model 371-A) of a mechanical impedance instrument (manufactured by Ono Sokki Co., Ltd., mass cancel amplifier: MA-5500, channel data station: DS-2100) . A vibration was given to the center of the laminated glass at a frequency in the range of from 0 to 8,000 Hz, and an exciting force and an acceleration waveform at this point were detected, thereby conducting a damping test of the laminated glass by a central exciting method. A mechanical impedance at an exciting point (the center of the laminated glass to which a vibration was given) was determined on the basis of the obtained exciting force and a speed signal obtained by integrating an acceleration single; and in an impedance curve obtained by setting the frequency on the abscissa and the mechanical impedance on the ordinate, respectively, a loss factor of the laminated glass was determined from a frequency expressing a peak of the tertiary mode and a half-width value, and a width of the temperature range where the loss factor was 0.2 or more was determined. The calculation results of the width of the temperature range where the loss factor was 0.2 or more are shown in Table 10.

### 18. Physical properties evaluation (breaking strength of laminated glass)

Each of the laminates obtained in the Examples and Comparative Examples was interposed between two sheets of commercially available float glass (26 mm in length × 76 mm in width × 2.8 mm in thickness), and a laminated glass was prepared by a vacuum bagging method (condition: the temperature was increased from 30°C to 160°C for 60 minutes, followed by holding at 160°C for 30 minutes). Thereafter, a three-point bending test (temperature: 20°C, inter-fulcrum distance: 55 mm, test speed: 0.25 mm/min) of the laminated glass was carried out by using an autograph AG-5000B, and a breaking strength of the laminated glass was measured. The measurement results of the breaking strength are shown in Table 10.

### (Comparative Example 14)

A polyvinyl butyral resin having a viscosity average polymerization degree of 600, an average degree of acetalization of 70 mol%, and a content of a vinyl acetate unit of 2 mol% and a polyvinyl butyral resin having a viscosity average polymerization degree of 1,700, an average degree of acetalization of 70 mol%, and a content of a vinyl acetate unit of 1 mol% were used in a mass ratio of 95/5 (hereinafter referred to as "PVB-1"), and a film having a thickness of 250 µm (PVB-1 film; used as the layer B) was obtained by an extrusion molding method.

Subsequently, a coating liquid containing an elastomer X (solvent: cyclohexane, solid content: 20% by mass) was coated on one surface of the PVB-1 film such that a film thickness of the layer A1 containing the elastomer X after drying was 10 µm and then dried with a warm air at 50 to 60°C for about 10 minutes. As the elastomer X, a linear hydrogenated styrene-isoprene-styrene triblock copolymer (hydrogenation ratio: 90%) containing 12% by mass of a styrene unit and 88% by mass of an isoprene unit and having a temperature of a peak at which a peak height of tan δ was maximum of -22.6°C (a value in the case of giving a vibration at a frequency of 1 Hz and increasing a measurement temperature at a constant rate of 1°C/min from -40°C to 100°C) was used. It is to be noted that an MFR of the elastomer X as measured at a temperature of 190°C and at a load of 2.16 kg was 0.5 g/10 min. In addition, the same PVB-1 film as in the base material was used as a masking film on the surface having the elastomer X coated thereon, so as to form a three-layer film after winding up. The resultant was dried for 48 hours by a vacuum dryer at 50°C, thereby obtaining a laminate composed of three layers (interlayer film for laminated glass).

A laminated glass was prepared by using the resulting laminate, and a width of the temperature range where the loss factor of the laminated glass was 0.2 or more by a damping test by a central exciting method was determined. In addition, a three-point bending test of the laminated glass was carried out, thereby measuring a breaking strength of the laminated glass. The measurement results of the width of the temperature range where the loss factor was 0.2 or more and the breaking strength are shown in Table 10.

### (Example 38)

A laminate was prepared by using the same method as in Comparative Example 14, except that a coating liquid containing the elastomer X (solvent: cyclohexane, solid content: 20% by mass) was coated on one surface of the PVB-1 film such that a film thickness of the layer A1 containing the elastomer X after drying was 50 µm, and then subjected to the physical evaluations. The measurement results of the width of the temperature range where the loss factor was 0.2 or more and the breaking strength are shown in Table 10.

### (Example 52)

A laminate was prepared by using the same method as in Comparative Example 14, except that a coating liquid containing the elastomer X (solvent: cyclohexane, solid content: 20% by mass) was coated on one surface of the PVB-1 film such that a film thickness of the layer A1 containing the elastomer X after drying was 150 µm, and then subjected to the physical evaluations. The measurement results of the width of the temperature range where the loss factor was 0.2 or more and the breaking strength are shown in Table 10.

### (Example 39)

A laminate was prepared by using the same method as in Comparative Example 14, except that a coating liquid containing the elastomer X and an elastomer Y (solvent: cyclohexane, solid content: 20% by mass, mass ratio of (elastomer X)/(elastomer Y): 1/1) was coated on one surface of the PVB-1 film such that a film thickness of the layer A1 containing the elastomer X and the elastomer Y after drying was 100 µm, and then subjected to the physical evaluations. The measurement results of the width of the temperature range where the loss factor was 0.2 or more and the breaking strength are shown in Table 10. It is to be noted that as the elastomer Y, a linear hydrogenated styrene-isoprene-styrene triblock copolymer (hydrogenation ratio: 88%) containing 20% by mass of a styrene unit and 80% by mass of an isoprene unit and having a temperature of a peak at which a peak height of tan δ was maximum of -5.2°C (a value in the case of giving a vibration at a frequency of 1 Hz and increasing a measurement temperature at a constant rate of 1°C/min from -40°C to 100°C) was used. It is to be noted that an MFR of the elastomer Y as measured at a temperature of 190°C and at a load of 2.16 kg was 0.7 g/10 min.

### (Example 40)

A laminate was prepared by using the same method as in Comparative Example 14, except that a coating liquid containing the elastomer X (solvent: cyclohexane, solid content: 20% by mass) was coated on one surface of the PVB-1 film such that a film thickness of the layer A1 containing the elastomer X after drying was 50 µm, followed by drying with a warm air at 50 to 60°C for about 10 minutes, and that a coating liquid containing the elastomer Y (solvent: cyclohexane, solid content: 20% by mass) was further coated thereon such that a film thickness of the layer A2 containing the elastomer Y after drying was 50 µm, followed by drying with a warm air at 50 to 60°C for about 10 minutes, and then subjected to the physical evaluations. The measurement results of the width of the temperature range where the loss factor was 0.2 or more and the breaking strength are shown in Table 10.

### (Example 41)

A laminate was prepared by using the same method as in Example 38, except that as the layer B, a film having a thickness of 250 µm was fabricated by an extrusion molding method by using 95 parts by mass of a polyvinyl butyral resin having a viscosity average polymerization degree of 600, an average degree of acetalization of 70 mol%, and a content of a vinyl acetate unit of 2 mol%, 5 parts by mass of a polyvinyl butyral resin having a viscosity average polymerization degree of 1, 700, an average degree of acetalization of 70 mol%, and a content of a vinyl acetate unit of 1 mol%, and 100 parts by mass of KURARAY POLYOL P-510 (manufactured by Kuraray Co., Ltd., polyester polyol; polyester diol composed of 3-methyl-1,5-pentanediol and adipic acid; number average molecular weight per two hydroxyl groups: 500), and then subjected to the physical evaluations. The measurement results of the width of the temperature range where the loss factor was 0.2 or more and the breaking strength are shown in Table 10.

### (Example 42)

A laminate was prepared by using the same method as in Example 52, except that the coating liquid containing the elastomer Y was used in place of the coating liquid containing the elastomer X, and then subjected to the physical evaluations. The measurement results of the width of the temperature range where the loss factor was 0.2 or more and the breaking strength are shown in Table 10.

### (Example 43)

A laminate was prepared by using the same method as in Example 39, except that the film thickness of the layer B after drying was regulated to 100 µm, and that the film thickness of the layer A1 after drying was regulated to 300 µm, and then subjected to the physical evaluations. The measurement results of the width of the temperature range where the loss factor was 0.2 or more and the breaking strength are shown in Table 10.

### (Example 44)

A laminate was prepared by using the same method as in Example 38, except that the coating liquid containing the elastomer Y was used in place of the coating liquid containing the elastomer X, and then subjected to the physical evaluations. The measurement results of the width of the temperature range where the loss factor was 0.2 or more and the breaking strength are shown in Table 10.

**[Table 10]**

| | | Comparative Example 14 | Example 38 | Example 52 | Example 39 | Example 40 | Example 41 | Example 42 | Example 43 | Example 44 |
|---|---|---|---|---|---|---|---|---|---|---|
| Layer B | Thermoplastic resin | PVB-1 | PVB-1 | PVB-1 | PVB-1 | PVB-1 | PVB-1 | PVB-1 | PVB-1 | PVB-1 |
| | Plasticizer | - | - | - | - | - | KURARAY POLYOL P-510 (10 phr) | - | - | - |
| | Thickness (µm) | 250 | 250 | 250 | 250 | 250 | 250 | 250 | 100 | 250 |
| Layer A1 | Thermoplastic elastomer | Elastomer X | Elastomer X | Elastomer X | Elastomer X Elastomer Y (mass ratio: 1/1) | Elastomer X | Elastomer X | Elastomer Y | Elastomer X Elastomer Y (mass ratio: 1/1) | Elastomer Y |
| | Thickness (µm) | 10 | 50 | 150 | 100 | 50 | 50 | 150 | 300 | 50 |
| Layer A2 | Thermoplastic elastomer | - | - | - | - | Elastomer Y | - | - | - | - |
| | Thickness (µm) | - | - | - | - | 50 | - | - | - | - |
| Layer constitution | | B/A1/B | B/A1/B | B/A1/B | B/A1/B | B/A1/A2/B | B/A1/B | B/A1/B | B/A1/B | B/A1/B |
| Lower limit of temperature range where the loss factor is 0.2 or more | | - | 8 | 4 | 13 | 9 | 7 | 18 | 11 | 22 |
| Upper limit of temperature range where the loss factor is 0.2 or more | | - | 34 | 18 | 37 | 41 | 35 | 42 | 41 | 41 |
| Width of temperature range where the loss factor is 0.2 or more (°C) | | 0 | 26 | 14 | 24 | 32 | 28 | 24 | 30 | 19 |
| Loss factor at 20°C | | 0.09 | 0.28 | 0.21 | 0.27 | 0.28 | 0.27 | 0.21 | 0.3 | 0.18 |
| Maximum loss factor | | 0.13 | 0.28 | 0.32 | 0.27 | 0.29 | 0.27 | 0.34 | 0.31 | 0.29 |
| Breaking strength of laminated glass [at 25°C] (kN) | | 0.90 | 0.72 | 0.52 | 0.63 | 0.62 | 0.64 | 0.54 | 0.34 | 0.74 |

| | | | | | | | | | | |
|---|---|---|---|---|---|---|---|---|---|---|
| Peak temperature of tan δ of the layer containing the elastomer X: -22.6°C, peak top height: 1.92 Peak temperature of tan δ of the layer containing the elastomer Y: -5.2°C, peak top height: 1.89 Peak temperature of tan δ of the layer containing the elastomer X and the elastomer Y in a mass ratio of 111: -12.9°C, peak top height: 1.68 | | | | | | | | | | |

### REFERENCE SIGNS LIST

1: Layer A
2a: Layer B
2b: Layer B
10: Shear storage modulus
11: Loss tangent (tan δ)

## Claims

1. A laminate comprising: a layer A including a composition containing a resin having a peak at which a tan δ as measured by conducting a complex shear viscosity test under a condition at a frequency of 1 Hz in accordance with JIS K 7244-10 is maximum, in the range of from -40 to 30°C, wherein in the case where plural peaks are present, the peak means a highest peak; and a plurality of layers B, wherein
the layer A is laminated between at least two of the layers B,
a film thickness of the layer A is 20 µm or more,
the resin is a thermoplastic elastomer, wherein the thermoplastic elastomer is a block copolymer having a hard segment and a soft segment, or a hydrogenated product of the copolymer,
the layers B are layers containing at least one thermoplastic resin selected from the group consisting of a polyvinyl acetal resin and an ionomer resin,
at least one of the layers B is a layer containing an ionomer resin,
a content of a plasticizer in the layers B is 30 parts by mass or less based on 100 parts by mass of the thermoplastic resin, and
a ratio of the sum total of the thickness of the layer A to a sum total of the thickness of the layers B is 1/1 or less.

2. The laminate according to claim 1, wherein a shear storage modulus of the layers B at a temperature of 25°C as measured by conducting a complex shear viscosity test under a condition at a frequency of 1 Hz in accordance with JIS K 7244-10 is 10 MPa or more

3. The laminate according to claim 1 or 2, wherein the layer A contains two or more thermoplastic elastomers having a different peak temperature of the tan δ from each other.

4. The laminate according to claim 3, wherein the at least two thermoplastic elastomers having a different peak temperature of the tan δ from each other contain a copolymer of an aromatic vinyl monomer and an aliphatic unsaturated monomer, or a hydrogenated product of the copolymer.

5. The laminate according to any of claims 1 to 4, wherein the layer A contains two or more thermoplastic elastomers having a different peak temperature of the tan δ by 5°C or more from each other.

6. The laminate according to any of claims 1 to 5, wherein the layer A includes two or more layers, and a peak temperature of the tan δ of thermoplastic elastomers contained respectively in the at least two layers of the layer A is different from each other by 5°C or more.

7. The laminate according to any of claims 1 to 6, wherein
a peak temperature of the tan δ of the layer A is -20°C or lower, and a film thickness of the layer A is 20 to 120 µm,
a peak temperature of the tan δ of the layer A is higher than -20°C and -15°C or lower, and a film thickness of the layer A is 50 to 200 µm, or
a peak temperature of the tan δ of the layer A is higher than -15°C, and a film thickness of the layer A is 80 to 300 µm.

8. The laminate according to any of claims 1 to 7, wherein a heat insulating material is contained in at least one layer of either the layers A or the layers B.

9. A laminated glass including a constitution of the laminate according to any of claims 1 to 8 in the inside thereof.

10. The laminated glass according to claim 9, which is a windshield for automobile, a side glass for automobile, a sunroof for automobile, a rear glass for automobile, or a glass for head-up display.

11. The laminated glass according to claim 9 or 10, wherein the glass constituting the laminated glass is a thin sheet glass having a thickness of 2.8 mm or less.

12. The laminated glass according to any of claims 9 to 11, where a thickness of the glass of one side is 1.8 mm or more, a thickness of the glass of the other side is 1.8 mm or less, and a difference in thickness between the respective glasses is 0.2 mm or more.

## Patentansprüche

1. Laminat, umfassend: eine Schicht A, beinhaltend eine Zusammensetzung, enthaltend ein Harz, das einen Peak, bei dem ein tan δ, gemessen durch Durchführung eines komplexe Scherviskosität-Tests unter einer Bedingung bei einer Frequenz von 1 Hz gemäß JIS K 7244-10 maximal ist, in dem Bereich von -40 bis 30°C aufweist, wobei in dem Fall, in dem mehrere Peaks vorhanden sind, der Peak einen höchsten Peak meint; und eine Mehrzahl von Schichten B, wobei die Schicht A zwischen mindestens zwei der Schichten B laminiert ist,
die Schichtdicke der Schicht A 20 µm oder mehr beträgt,
das Harz ein thermoplastisches Elastomer ist, wobei das thermoplastische Elastomer ein Blockcopolymer mit einem harten Segment und einem weichen Segment oder ein hydriertes Produkt des Copolymers ist,
die Schichten B Schichten, enthaltend mindestens ein thermoplastisches Harz, ausgewählt aus der Gruppe, bestehend aus einem Polyvinylacetalharz und einem lonomerharz, sind,
mindestens eine der Schichten B eine Schicht, enthaltend ein lonomerharz, ist, ein Gehalt eines Weichmachers in den Schichten B 30 Masseteile oder weniger, bezogen auf 100 Masseteile des thermoplastischen Harzes, beträgt und
ein Verhältnis der Gesamtsumme der Dicke der Schicht A zu einer Gesamtsumme der Dicke der Schichten B 1/1 oder weniger beträgt.

2. Laminat nach Anspruch 1, wobei ein Scherspeichermodul der Schichten B bei einer Temperatur von 25°C, gemessen durch Durchführung eines komplexe Scherviskosität-Tests unter einer Bedingung bei einer Frequenz von 1 Hz gemäß JIS K 7244-10, 10 MPa oder mehr beträgt.

3. Laminat nach Anspruch 1 oder 2, wobei die Schicht A zwei oder mehr thermoplastische Elastomere mit einer voneinander verschiedenen Peak-Temperatur des tan δ enthält.

4. Laminat nach Anspruch 3, wobei die mindestens zwei thermoplastischen Elastomere mit einer voneinander verschiedenen Peak-Temperatur des tan δ ein Copolymer aus einem aromatischen Vinylmonomer und einem aliphatischen ungesättigten Monomer oder ein hydriertes Produkt des Copolymers enthalten.

5. Laminat nach einem der Ansprüche 1 bis 4, wobei die Schicht A zwei oder mehr thermoplastische Elastomere mit einer um 5°C oder mehr voneinander verschiedenen Peak-Temperatur des tan δ enthält.

6. Laminat nach einem der Ansprüche 1 bis 5, wobei die Schicht A zwei oder mehr Schichten beinhaltet und eine Peak-Temperatur des tan δ von thermoplastischen Elastomeren, die jeweils in den mindestens zwei Schichten der Schicht A enthalten sind, sich um 5°C oder mehr voneinander unterscheidet.

7. Laminat nach einem der Ansprüche 1 bis 6, wobei
eine Peak-Temperatur des tan δ der Schicht A -20°C oder weniger beträgt und eine Schichtdicke der Schicht A 20 bis 120 µm beträgt,
eine Peak-Temperatur des tan δ der Schicht A mehr als -20°C und -15°C oder weniger beträgt und eine Schichtdicke der Schicht A 50 bis 200 µm beträgt, oder
eine Peak-Temperatur des tan δ der Schicht A mehr als -15°C beträgt und eine Schichtdicke der Schicht A 80 bis 300 µm beträgt.

8. Laminat nach einem der Ansprüche 1 bis 7, wobei ein wärmeisolierendes Material in mindestens einer Schicht entweder der Schichten A oder der Schichten B enthalten ist.

9. Verbundglas, beinhaltend einen Aufbau des Laminats nach einem der Ansprüche 1 bis 8 in dem Inneren davon.

10. Verbundglas nach Anspruch 9, das eine Windschutzscheibe für ein Kraftfahrzeug, eine Seitenscheibe für ein Kraftfahrzeug, ein Schiebedach für ein Kraftfahrzeug, eine Heckscheibe für ein Kraftfahrzeug oder ein Glas für ein Head-up-Display ist.

11. Verbundglas nach Anspruch 9 oder 10, wobei das Glas, welches das Verbundglas bildet, eine dünne Glasscheibe mit einer Dicke von 2,8 mm oder weniger ist.

12. Verbundglas nach einem der Ansprüche 9 bis 11, wobei eine Dicke des Glases einer Seite 1,8 mm oder mehr beträgt, eine Dicke des Glases der anderen Seite 1,8 mm oder weniger beträgt und ein Unterschied in der Dicke zwischen den jeweiligen Gläsern 0,2 mm oder mehr beträgt.

## Revendications

1. Feuilleté comprenant : une couche A comprenant une composition contenant une résine présentant une pointe à laquelle un tan δ, tel que mesuré par réalisation d'un test de viscosité au cisaillement complexe à la condition d'une fréquence de 1 Hz selon la norme JIS K 7244-10 est le maximum, dans l'intervalle compris entre -40 et 30°C, dans lequel, dans le cas où une pluralité de pointes sont présentes, la pointe signifie une pointe la plus élevée ; et une pluralité de couches B, dans lesquelles la couche A est feuilletée entre au moins deux des couches B,
l'épaisseur de film de la couche A fait 20 µm ou plus,
la résine est un élastomère thermoplastique, dans laquelle l'élastomère thermoplastique est un copolymère séquencé présentant un segment dur et un segment mou, ou un produit hydrogéné du copolymère,
les couches B sont des couches contenant au moins une résine thermoplastique sélectionnée parmi le groupe consistant en une résine de polyvinylacétal et une résine ionomère,
au moins l'une des couches B est une couche contenant une résine ionomère,
la teneur en plastifiant dans les couches B est de 30 parties en masse ou moins, sur base de 100 parties en masse de la résine thermoplastique, et
le rapport de la somme totale de l'épaisseur de la couche A à la somme totale de l'épaisseur des couches B est 1/1 ou moins.

2. Feuilleté selon la revendication 1, dans lequel le module de conservation au cisaillement des couches B à une température de 25°C, tel que mesuré en réalisant un test de viscosité au cisaillement complexe à la condition d'une fréquence de 1 Hz conformément à la norme JIS K 7244-10 est 10 MPa ou plus.

3. Feuilleté selon la revendication 1 ou 2, dans lequel la couche A contient deux élastomères thermoplastiques ou plus présentant une température de pointe différente de tan δ l'une par rapport à l'autre.

4. Feuilleté selon la revendication 3, dans lequel les au moins deux élastomères thermoplastiques ayant une température de pointe différente de tan δ l'une de l'autre contiennent le copolymère d'un monomère vinylaromatique et d'un monomère insaturé aliphatique, ou un produit hydrogéné du copolymère.

5. Feuilleté selon l'une quelconque des revendications 1 à 4, dans lequel la couche A contient deux élastomères thermoplastiques ou plus présentant une température de pointe différente de tan δ de 5°C ou plus l'une de l'autre.

6. Feuilleté selon l'une quelconque des revendications 1 à 5, dans lequel la couche A comprend deux couches, ou plus, et une température de pointe de tan δ des élastomères thermoplastiques contenus respectivement dans les au moins deux couches de la couche A est différente l'une de l'autre de 5°C ou plus.

7. Feuilleté selon l'une quelconque des revendications 1 à 6, dans lequel
une température de pointe de tan δ de la couche A est -20°C ou moins, et une épaisseur de film de la couche A va de 20 à 120 µm,
une température de pointe de tan δ de la couche A est plus élevée que -20°C et de -15°C ou moins, et une épaisseur de film de la couche A va de 50 à 200 µm, ou
une température de pointe de tan δ de la couche A est plus élevée que -15°C, et une épaisseur de film de la couche A va de 80 à 300 µm.

8. Feuilleté selon l'une quelconque des revendications 1 à 7, dans lequel une matière thermo-isolante est contenue dans au moins une couche de l'une ou l'autre des couches A ou des couches B.

9. Vitrage feuilleté comprenant la constitution du feuilleté selon l'une quelconque des revendications 1 à 8 à l'intérieur de celui-ci.

10. Vitrage feuilleté selon la revendication 9, lequel est un pare-brise pour automobile, une vitre latérale pour automobile, une vitre de toit pour automobile, une vitre arrière pour automobile ou un verre pour affichage tête haute.

11. Vitrage feuilleté selon la revendication 9 ou 10, dans lequel le verre constituant le vitrage feuilleté est une feuille de verre mince d'une épaisseur de 2,8 mm ou moins.

12. Vitrage feuilleté selon l'une quelconque des revendications 9 à 11, dans lequel l'épaisseur du verre sur un côté est de 1,8 mm ou plus, l'épaisseur du verre sur l'autre côté est de 1,8 mm ou moins, et la différence en épaisseur entre les verres respectifs est 0,2 mm ou plus.
